# EUROPEAN PATENT APPLICATION

(11) **EP 4 572 374 A1**
(43) Date of publication of application: **18.06.2025**
(21) Application number: 22954380.6
(22) Date of filing: 09.08.2022
(51) Int. Cl.: H04W 24/04

(54) **METHOD AND APPARATUS FOR MEASUREMENT RELAXATION, AND COMMUNICATION SYSTEM**

(71) Applicant: FUJITSU LIMITED, Kawasaki-shi, Kanagawa 211-8588 (JP)
(72) Inventor: JIA, Meiyi, Beijing 100022 (CN); YI, Su, Beijing 100022 (CN); ZHANG, Lei, Beijing 100022 (CN)
(74) Representative: Haseltine Lake Kempner LLP
(86) International application number: PCT/CN2022/111296
(87) International publication number: WO 2024/031404

(57) **Abstract**

Embodiments of this disclosure provide a method and apparatus for measurement relaxation and a communication system. The apparatus for measurement relaxation is applicable to a terminal equipment and includes a first applying unit, the first applying unit being configured to: for a serving cell configured with two or more beam failure detection reference signal (BFD-RS) sets, cause the terminal equipment not to perform measurement relaxation of beam failure detection (BFD); or for a serving cell that is not configured with two or more beam failure detection reference signal (BFD-RS) sets, cause the terminal equipment to perform measurement relaxation of beam failure detection (BFD).

## Description

### Technical Field

This disclosure relates to the field of communication technologies.

### Background

A terminal equipment is able to evaluate downlink radio link quality of a serving cell based on a reference signal to detect beam failures. This is applicable to a PCell (primary cell) in an SA (standalone) or NR-DC (New Radio dual connectivity) or NE-DC (New Radio evolved universal terrestrial radio access dual connectivity) operating mode, a PSCell (primary secondary cell) in the NR-DC or NE-DC operating mode, and an SCell (secondary cell) in the SA or the NR-DC or the NE-DC or the EN-DC operating mode.

SSB (synchronization signal block)-based beam failure detection is based on an SSB associated with an initial DL BWP (downlink bandwidth part), and may only be configured for initial DL BWPs and DL BWPs including SSBs associated with the initial DL BWPs. For other DL BWPs, beam failure detection is performed only based on a CSI-RS (channel status information reference signal). A terminal is not required to perform beam failure detection out of active DL BWPs.

Beam failures are detected by calculating the number of beam failure instance indications from a lower layer to an MAC (media access control) entity.

In addition, in multi-TRP (Transmit/Receive Point) operation, a serving cell may schedule a terminal equipment (e.g. a UE) from two TRPs to provide better coverage, reliability and/or data rates for a PDSCH (physical downlink shared channel), a PDCCH (physical downlink control channel), a PUSCH (physical uplink shared channel) and a PUCCH (physical uplink control channel).

For beam failure detection in multi-TRP operation, a network device (e.g. a gNB) configures the terminal equipment (e.g. a UE) with two or more sets of beam failure detection reference signals , one set for each TRP.

Before a configured timer expires, when the number of beam failure instance indications associated with a set of beam failure detection reference signals from a physical layer reaches a configured threshold, the UE declares a beam failure for a corresponding TRP.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In Rel-17 (Release 17), measurement relaxation of BFD (beam failure detection) is introduced to ensure energy-saving of terminal equipments. In addition, multi-TRP beam failure detection is also introduced.

It was found by the inventors of this disclosure that in a case where multiple TRPs are configured in a serving cell, at least the following problems exist:
1. A current relaxation status of BFD measurement is based on report from a serving cell. When relaxation of BFD measurement is performed, it is indicated as 1; otherwise, it is indicated as 0. In case of multiple TRPs, a current mechanism is unable to determine contents of the report. This may lead to different understandings between the network device and terminal equipment, thereby resulting in inappropriate operations of the network device on mobility of the terminal equipment, and leading to service interruptions.
2. The relaxation of BFD measurement is performed based on cell-level measurement evaluation, and in a case where there exist multiple TRPs, quality of one TRP is good, and quality of another TRP is poor, it may cause relaxation of the terminal in performing BFD measurement on the TRP with poor quality, thereby resulting in inappropriate operations of the network device on mobility of the terminal, and leading to service interruptions.

In order to solve at least one of the above problems, embodiments of this disclosure provide a method and apparatus for measurement relaxation and a communication system, in which inappropriate operations of a network device on mobility of a terminal equipment may be avoided, thereby avoiding service interruptions.

According to one aspect of the embodiments of this disclosure, there is provided an apparatus for measurement relaxation, applicable to a terminal equipment, the apparatus including a first applying unit, the first applying unit being configured to:
for a serving cell configured with two or more beam failure detection reference signal (BFD-RS) sets, cause the terminal equipment not to perform measurement relaxation of beam failure detection (BFD); or
for a serving cell that not configured with two or more beam failure detection reference signal (BFD-RS) sets, cause the terminal equipment to perform measurement relaxation of beam failure detection (BFD).

According to another aspect of the embodiments of this disclosure, there is provided an apparatus for measurement relaxation, applicable to a terminal equipment, the apparatus including a second applying unit, the second applying unit being configured to:
for a serving cell configured with two or more beam failure detection reference signal (BFD-RS) sets, cause the terminal equipment to perform measurement relaxation of beam failure detection (BFD).

According to a further aspect of the embodiments of this disclosure, there is provided an apparatus for measurement relaxation, applicable to a terminal equipment, the apparatus including a third applying unit, the third applying unit being configured to:
when a serving cell not configured with two or more beam failure detection reference signal (BFD-RS) sets is performing measurement relaxation of beam failure detection (BFD), the third applying unit causes the terminal equipment to set a value of a measurement relaxation status of beam failure detection (BFD) to which the serving cell corresponds to be a second value; or
when a serving cell is configured with two or more beam failure detection reference signal (BFD-RS) sets, the third applying unit causes the terminal equipment to set a value of a measurement relaxation status of beam failure detection (BFD) to which the serving cell corresponds to be a first value.

According to still another aspect of the embodiments of this disclosure, there is provided an apparatus for measurement relaxation, applicable to a network device, the apparatus including a first configuring unit, the first configuring unit being configured to:
configure two or more beam failure detection reference signal (BFD-RS) sets for a serving cell; or
configure a terminal equipment to perform measurement relaxation of beam failure detection (BFD).

An advantage of the embodiments of this disclosure exists in that inappropriate operations of the network device on mobility of the terminal equipment may be avoided, thereby avoiding service interruptions.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of embodiments of this disclosure;
FIG. 2 is a schematic diagram of a method for measurement relaxation of embodiments of a first aspect;
FIG. 3 is a schematic diagram of a method for measurement relaxation of embodiments of a second aspect;
FIG. 4 is another schematic diagram of the method for measurement relaxation of the embodiments of the second aspect;
FIG. 5 is a schematic diagram of a method for measurement relaxation of embodiments of a third aspect;
FIG. 6 is a schematic diagram of an apparatus for measurement relaxation of embodiments of a fourth aspect;
FIG. 7 is a schematic diagram of an apparatus for measurement relaxation of embodiments of a fifth aspect;
FIG. 8 is another schematic diagram of the apparatus for measurement relaxation of the embodiments of the fifth aspect;
FIG. 9 is a schematic diagram of an apparatus for measurement relaxation of embodiments of a sixth aspect; and
FIG. 10 is a schematic diagram of a composition of an electronic device of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G, and new radio (NR), etc., and/or other communication protocols that are currently known or will be developed in the future.

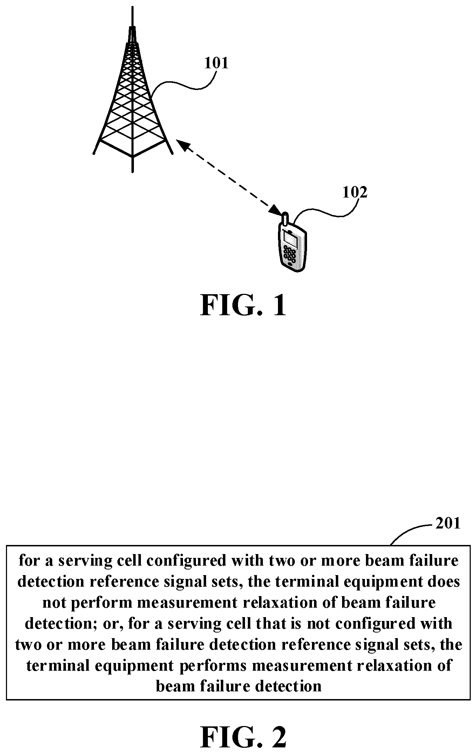

FIG. 1 is schematic diagram of a communication system of embodiments of this disclosure. As shown in FIG. 1, the communication system may include a network device 101 and a terminal equipment 102.

In the embodiments of this disclosure, the term "network device", for example, refers to a device in a communication system that accesses a user equipment to the communication network and provides services for the user equipment. The network device may include but not limited to the following devices: an integrated access and backhaul node (IAB node), a relay, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the embodiments of this disclosure, higher-layer signaling may be, for example, radio resource control (RRC) signaling; for example, it is referred to an RRC message, which includes a master information block (MIB), system information, and a dedicated RRC message; or, it is referred to as an RRC IE (RRC information element). Higher-layer signaling may also be, for example, F1-C signaling, or referred to as an F1AP protocol; however, this disclosure is not limited thereto.

UE power saving may be achieved by UE relaxing measurement for BFD.

When configured, the terminal determines whether it is in a low-mobility state and/or whether its serving cell radio link quality is better than a threshold.

Determining, by the terminal, whether it is in a low-mobility state is shown as follows:

| |
|---|
| 5.7.13.1 Relaxed measurement criterion for low mobility The relaxed measurement criterion for UE with low mobility in RRC_CONNECTED is fulfilled when: - (SS-RSRP_{Ref} - SS-RSRP) < S_{SearchDeltaP-Connected}, Where: - SS-RSRP = current L3 RSRP measurement of the SpCell based on SSB (dB). - SS-RSRP_{Ref} = reference L3 RSRP measurement of the SpCell based on SSB (dB), set as follows: - After receiving low mobility criterion configuration, or - After MAC of the CG successfully completes a Random Access procedure after applying a *reconfigurationWithSync* in *spCellConfig* of the CG while low mobility criterion is configured, or - If (SS-RSRP - SS-RSRP_{Ref}) > 0, or - If the relaxed measurement criterion has not been met for T_{SearchDeltaP-Connected}: - The UE shall set the value of SS-RSRP_{Ref} to the current SS-RSRP value of the SpCell. |

And determining, by the terminal, whether its serving cell radio link quality is better than a threshold is shown as follows:

| |
|---|
| 5.7.13.2 Relaxed measurement criterion for good serving cell quality ... The relaxed measurement criterion of good serving cell quality for BFD starts to be evaluated after receiving the good serving cell quality criterion configuration and is fulfilled when the downlink radio link quality on the configured BFD-RS resource is evaluated to be better than the threshold Qᵢₙ+XdB, wherein - Qᵢₙ is specified in clause 8.1 of TS 38.133 [14]. - X is the parameter *offset* in *goodServingCellEvaluationBFD*. |

Configuration for low mobility and good serving cell quality criterion is provided by dedicated signaling. The terminal is only allowed to perform BFD relaxation when relaxed measurement criterion for low mobility and/or for good serving cell quality is met.

RLM and BFD relaxation may be enabled/disabled separately, and the BFD may be enabled/disabled per serving cell.

If configured to do so, if the terminal changes its BFD relaxation status while meeting minimum requirements of the terminal, the terminal will trigger reporting of its BFD relaxation status via UE assistance information.

The following IE is used to configure the terminal to perform BFD relaxation status reporting:

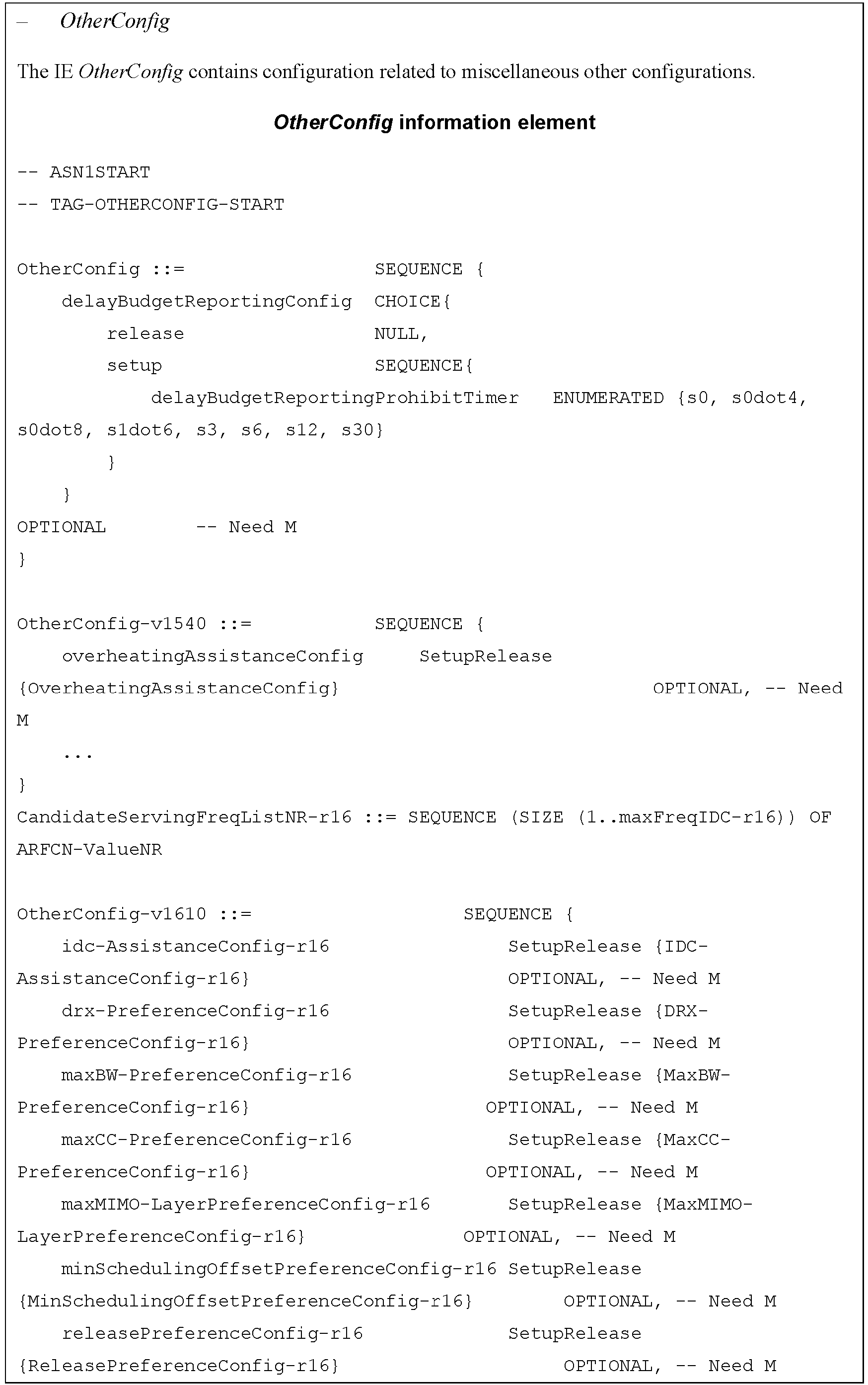

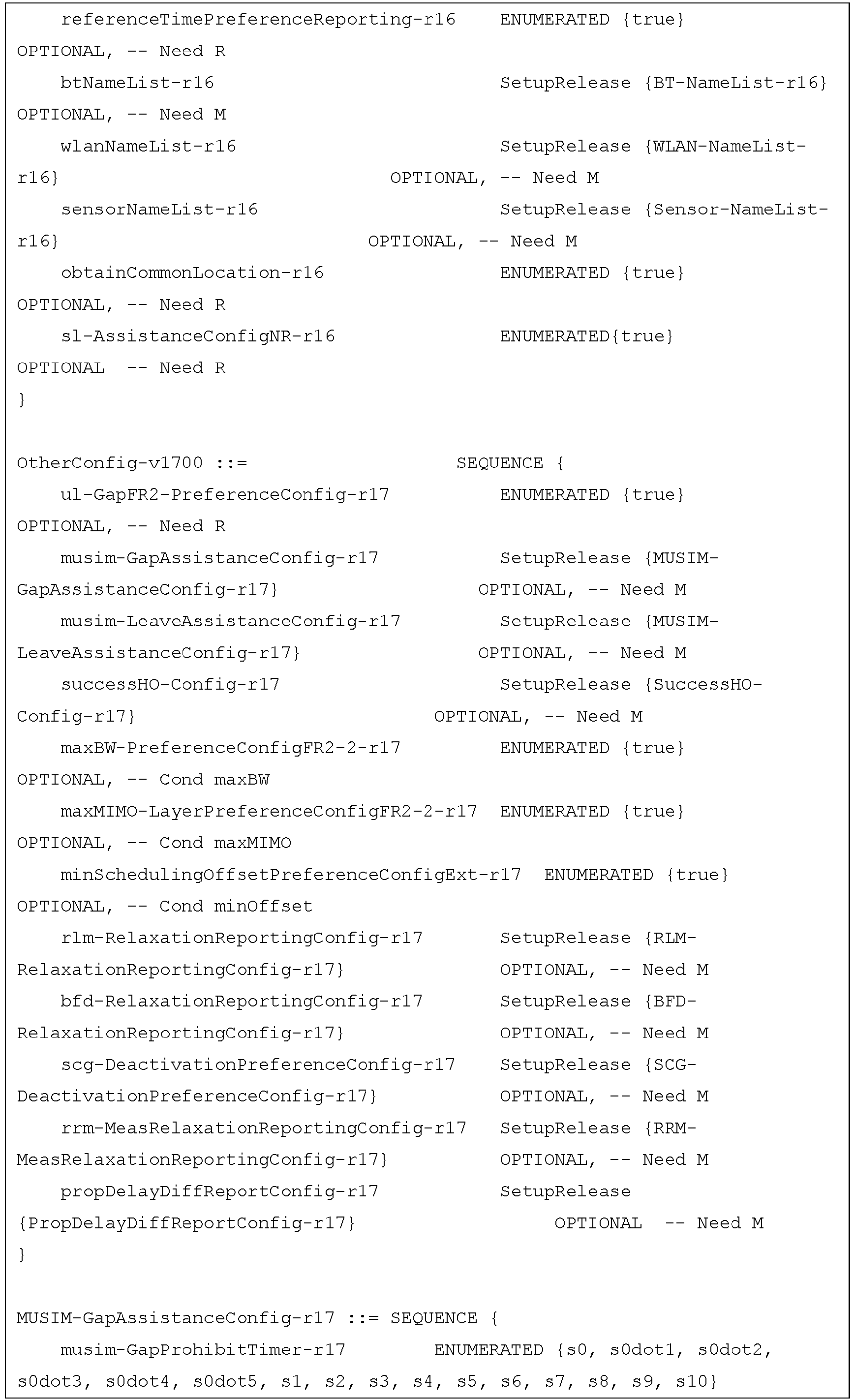

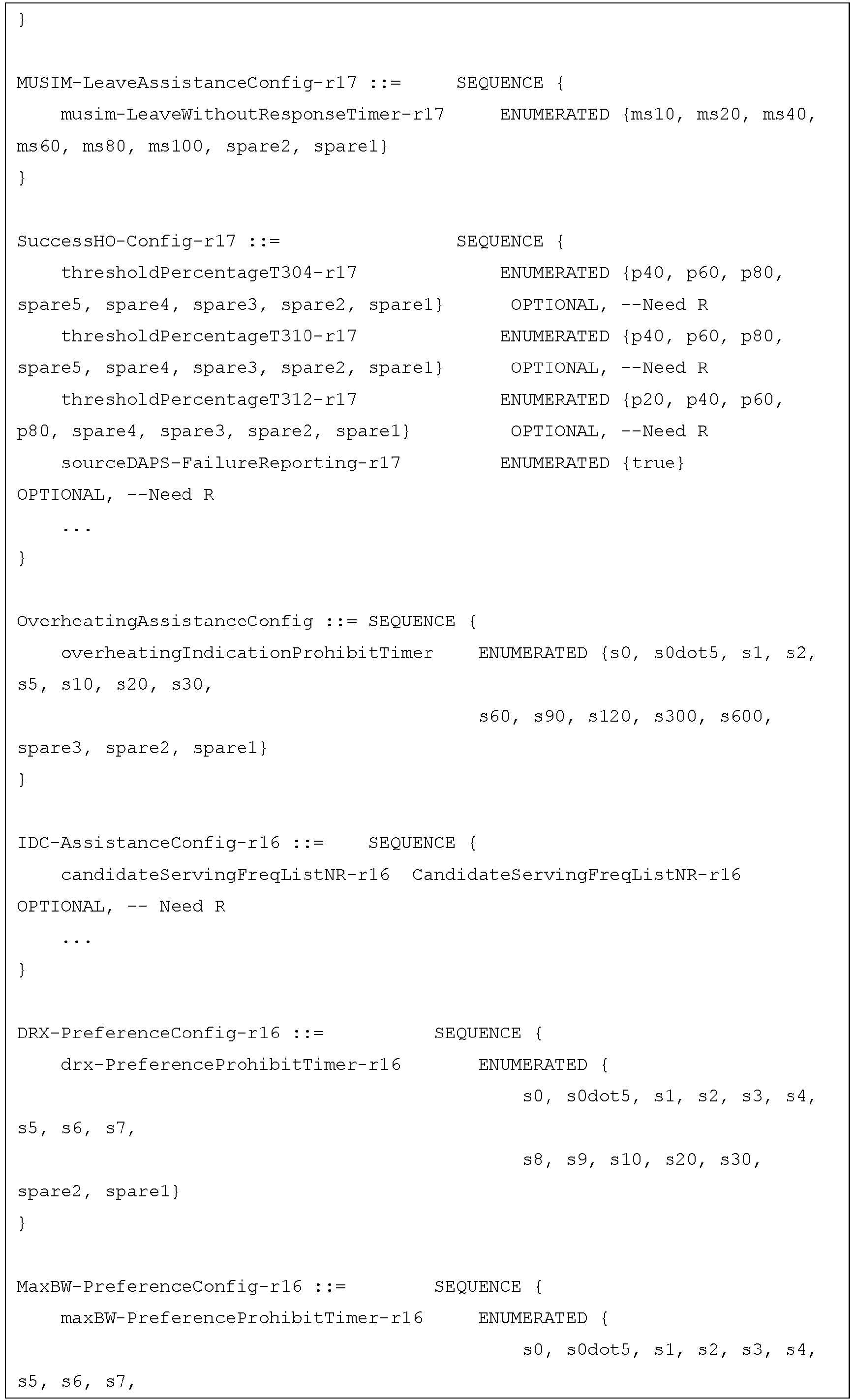

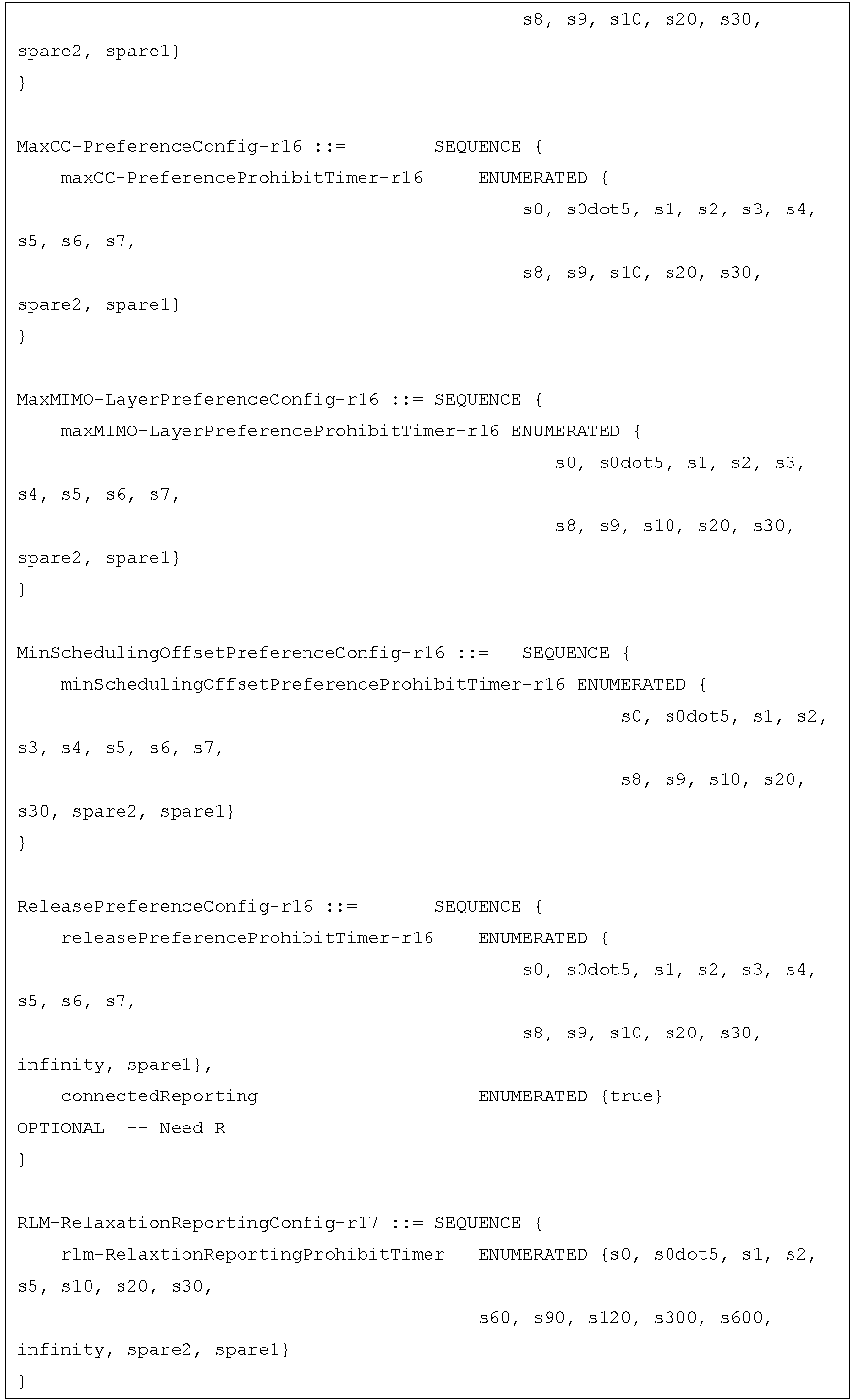

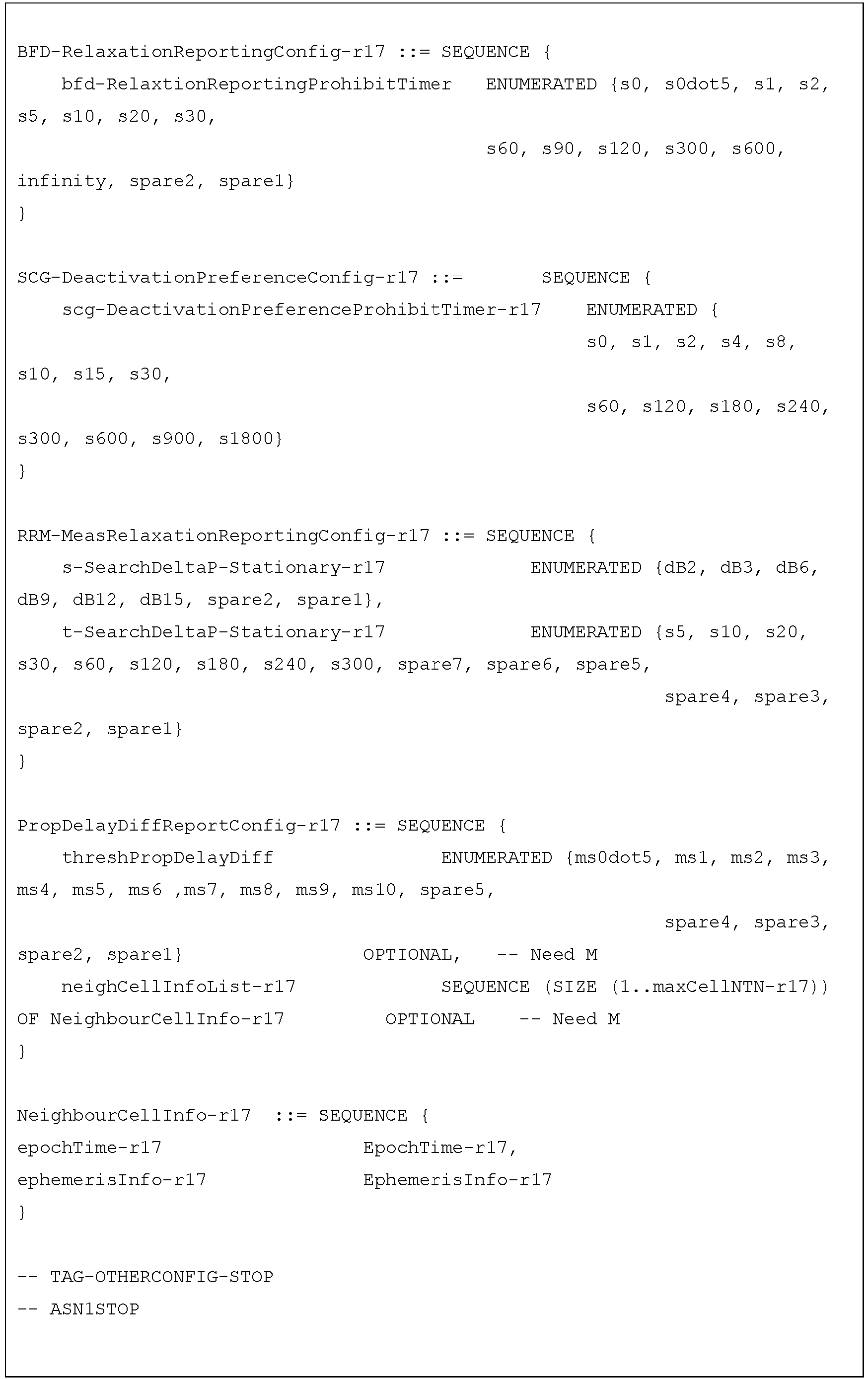

| ***OtherConfig* field descriptions** |
|---|
| ***bfd-RelaxationReportingConfig*** |
| Configuration for the UE to report the relaxation status of BFD measurements. |

According to the above configuration, the terminal determines whether to report the BFD relaxation status, and the process is as follows:

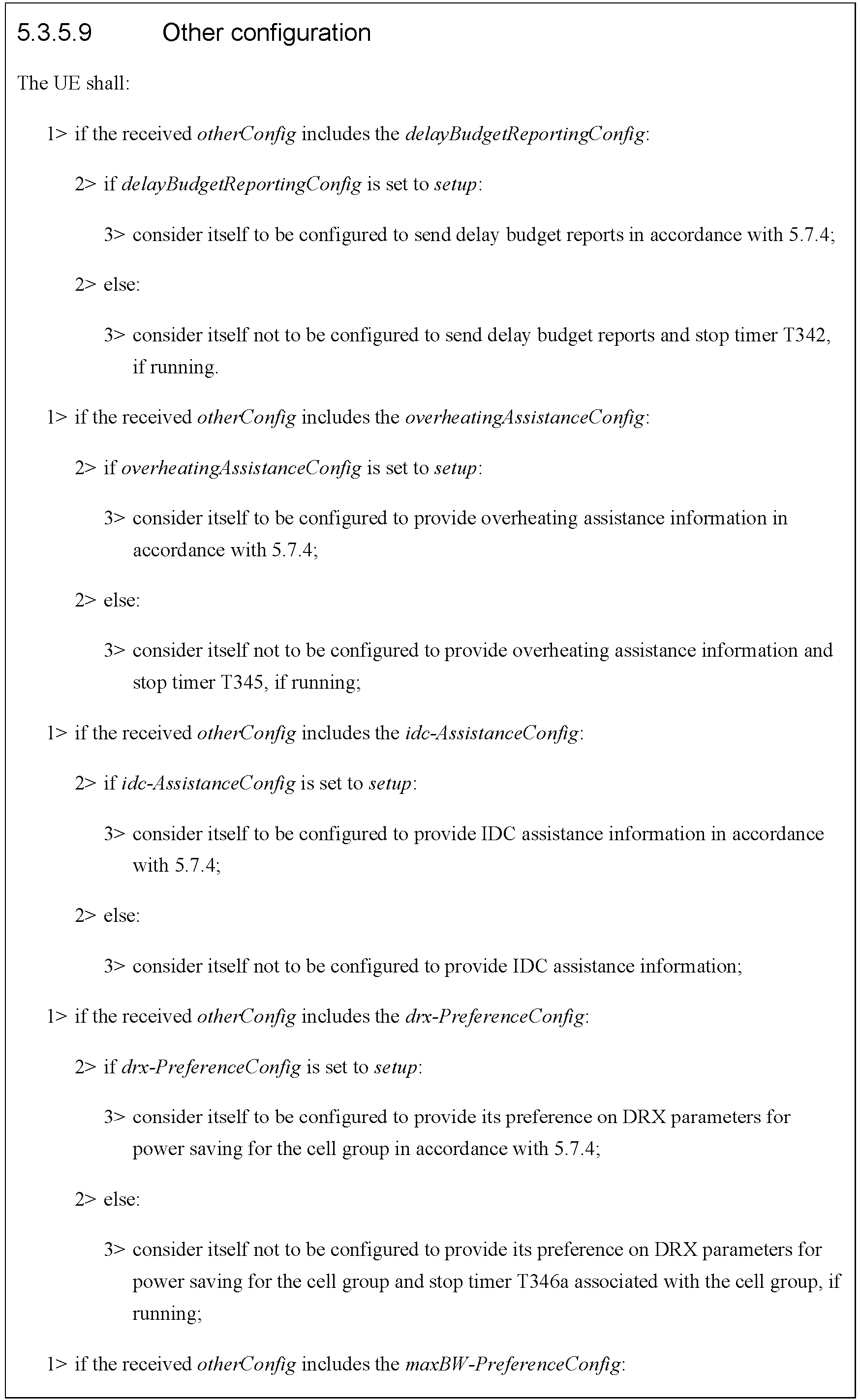

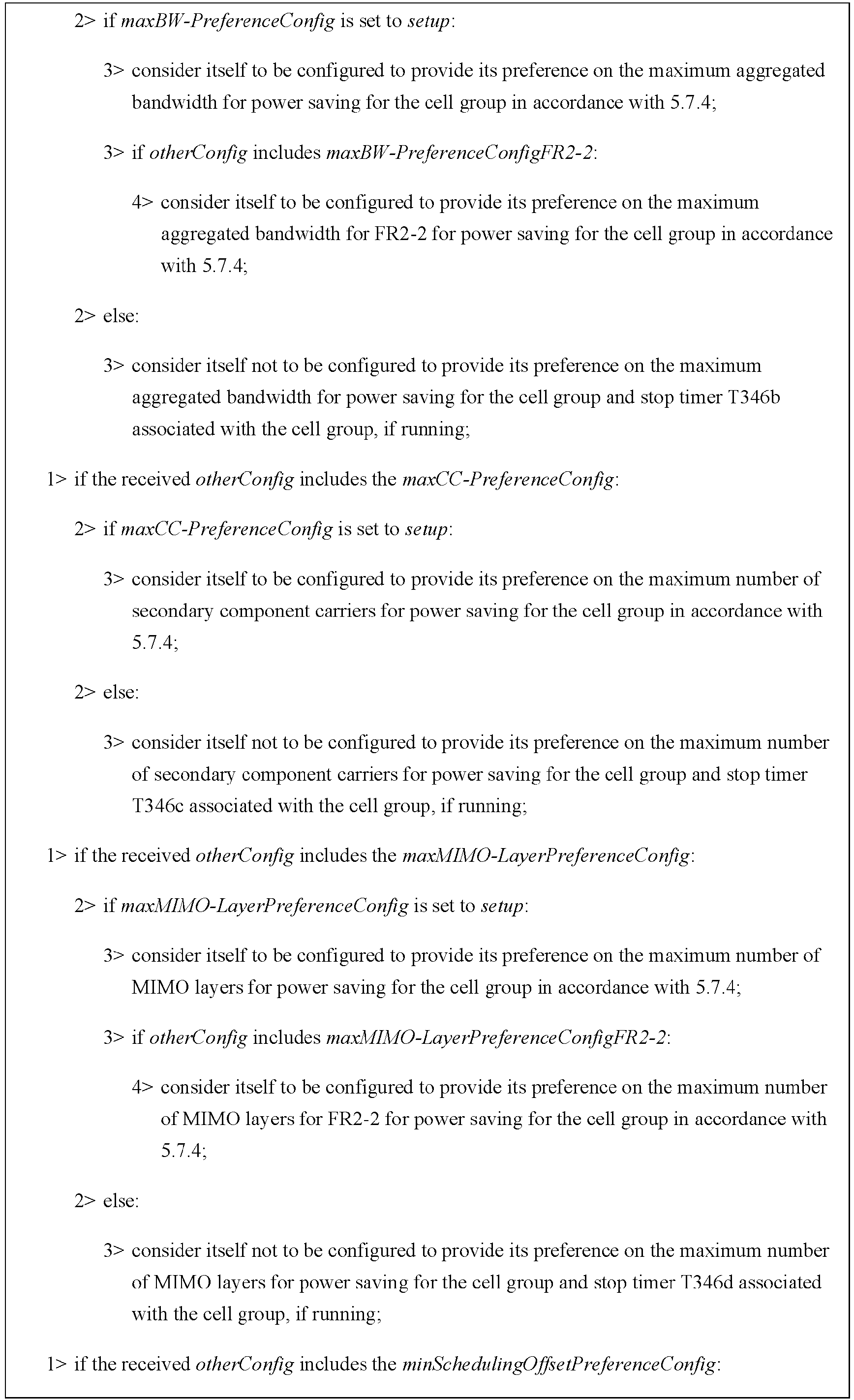

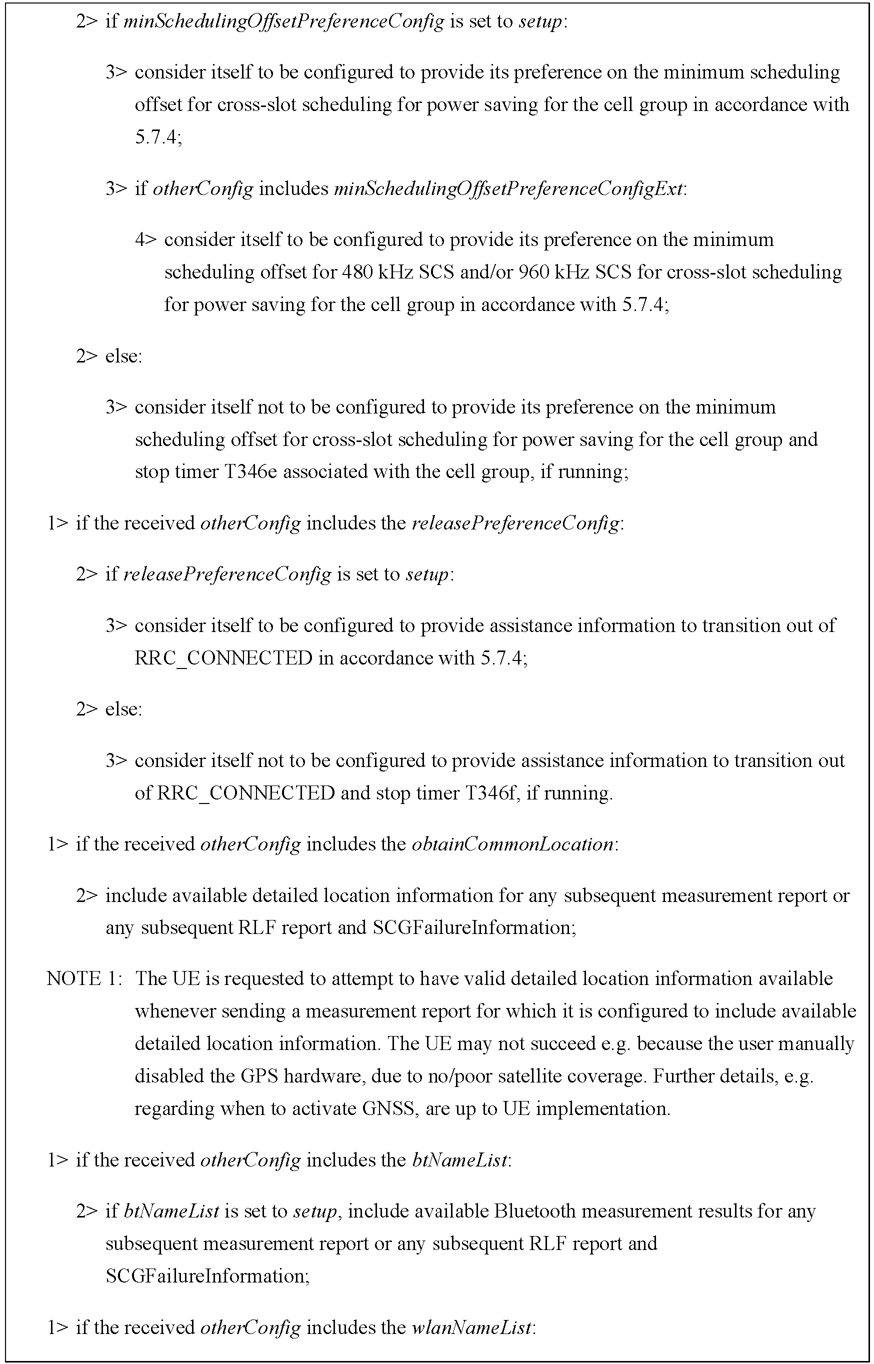

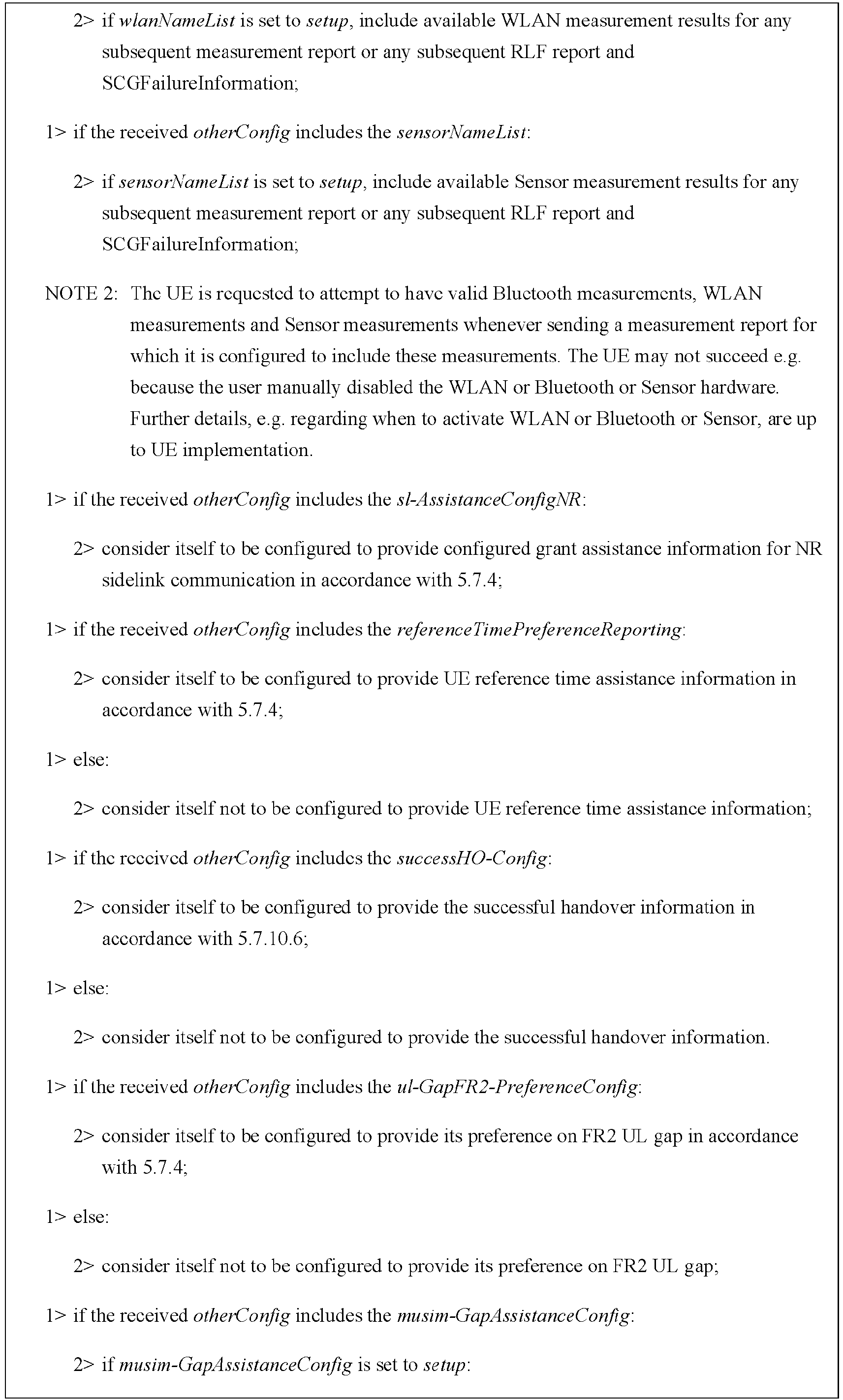

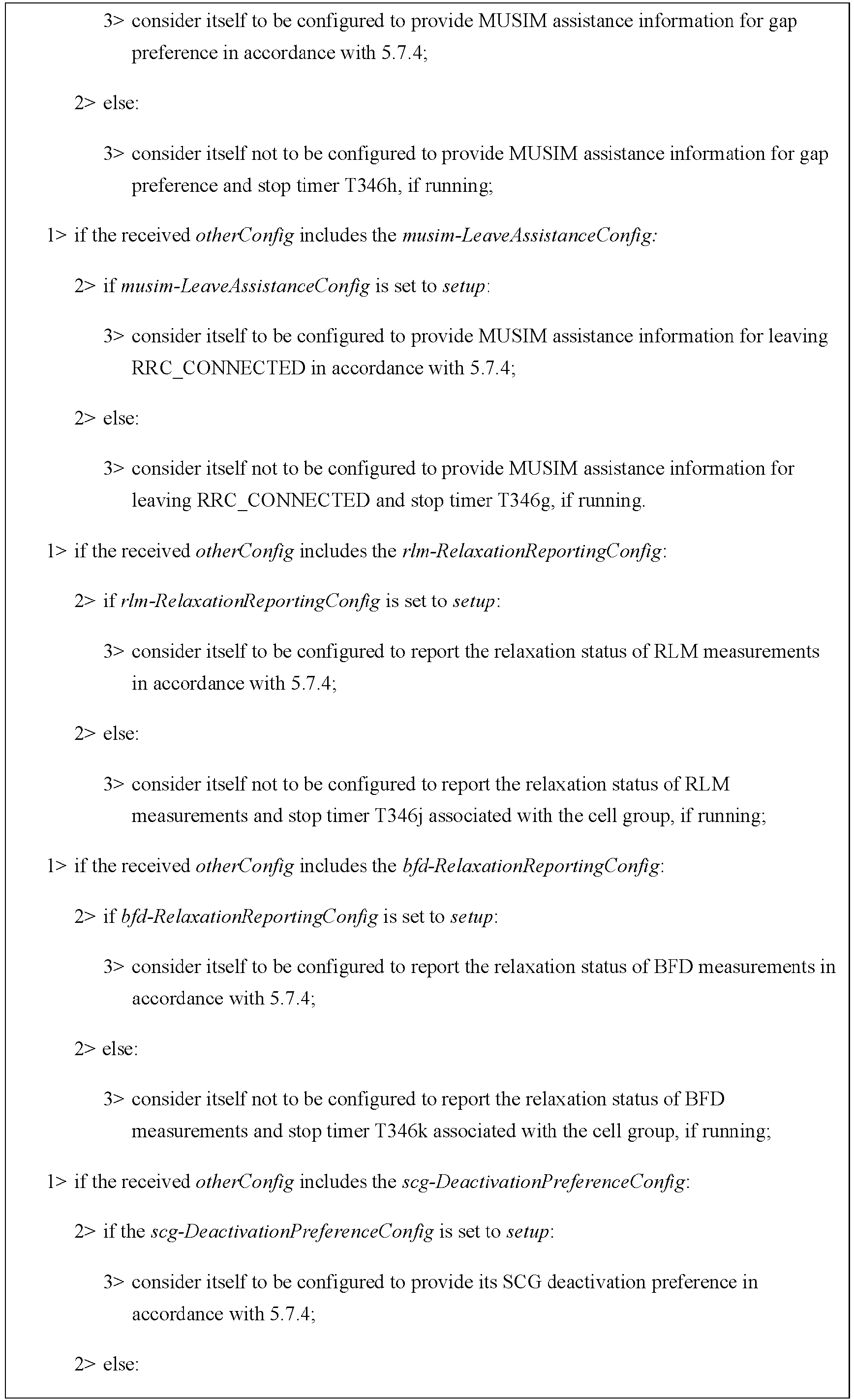

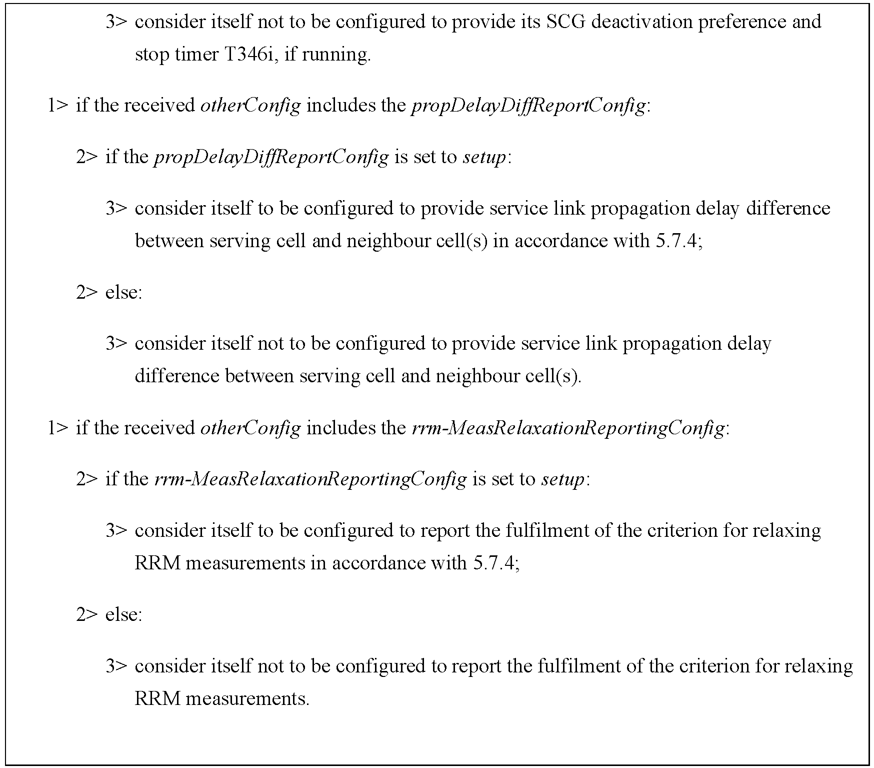

When configuration is performed such, and when the relaxation status of BFD measurement in RRC_CONNECTED changes, a UE that is able to relax BFD measurement of a cell group in the RRC_CONNECTED state will initiate the following process to provide an indication of a relaxation status of its BFD measurement.

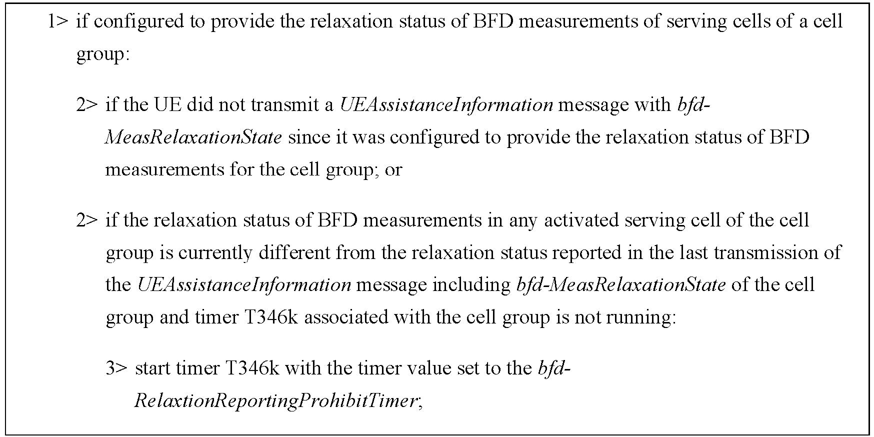

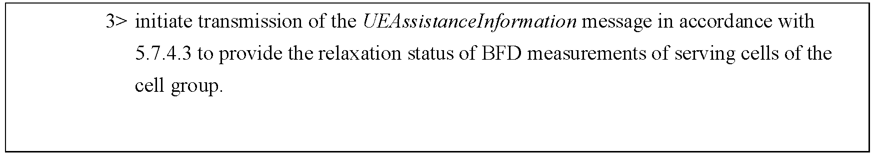

The following timer is used to control the reporting:

| Timer | Start | Stop | At expiry |
|---|---|---|---|
| T346k (The UE maintains one instance of this timer per cell group) | Upon transmitting *UEAssistanceInformation* message with *bfd-RelaxationReportingConfig.* | Upon releasing *bfd-RelaxationReportingConfig* during the connection re-establishment/resume procedures, upon receiving *bfd-RelaxationReportingConfig* set to release, or upon performing MR-DC release. | No action. |

Contents of the reporting are set as follows:

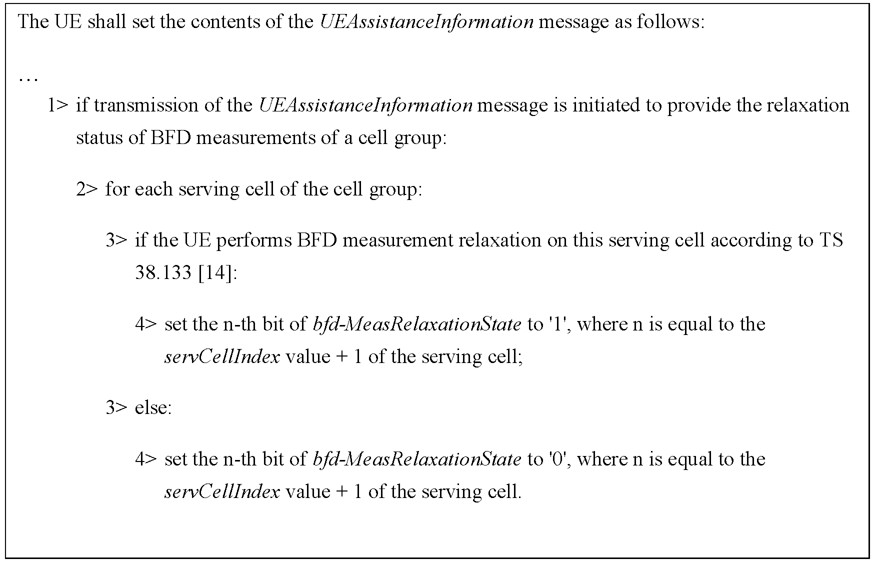

Specific messages are as follows:

| |
|---|
| - *UEAssistanceInformation* The *UEAssistanceInformation* message is used for the indication of UE assistance information to the network. Signalling radio bearer: SRB1, SRB3 RLC-SAP: AM Logical channel: DCCH Direction: UE to Network |

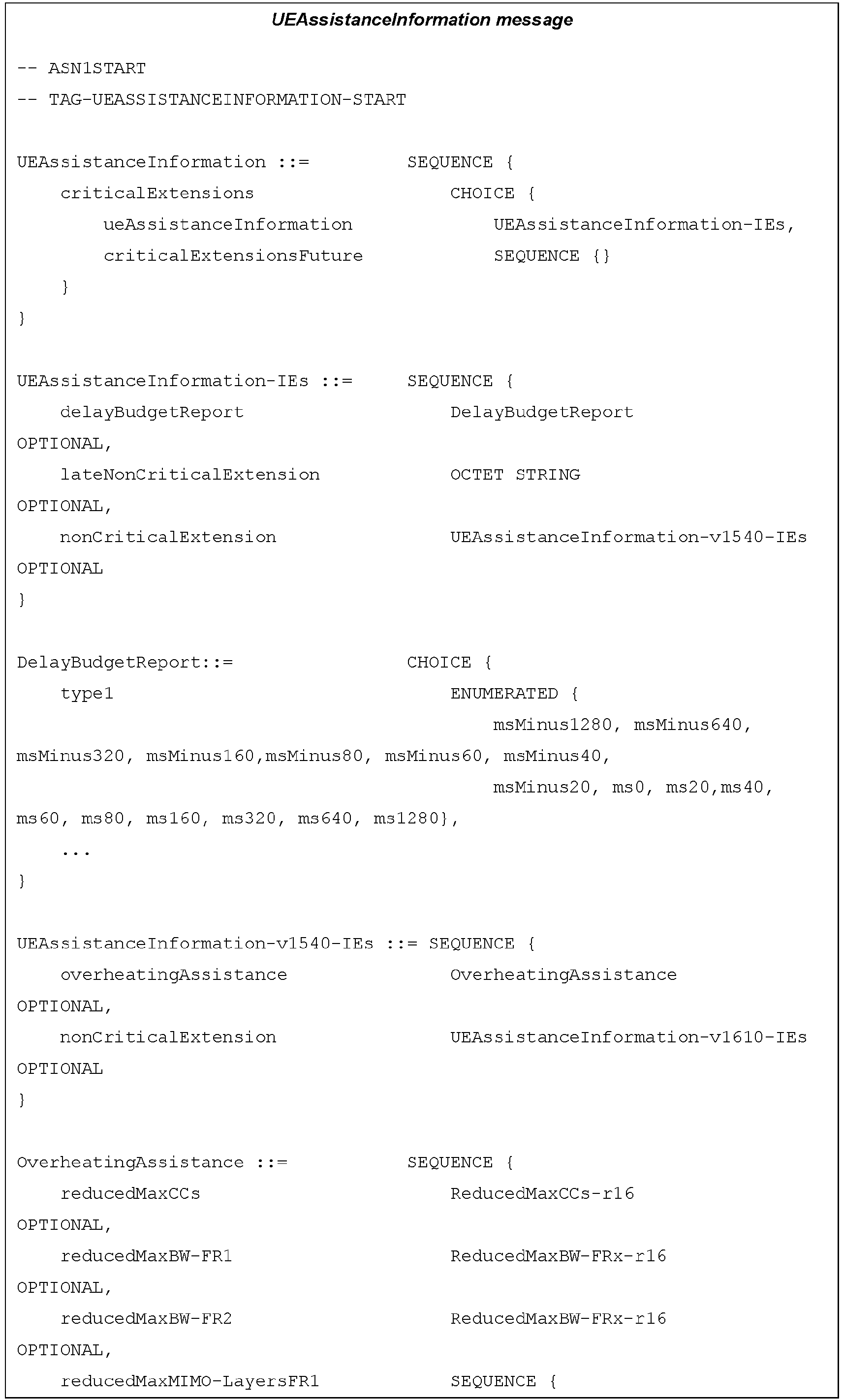

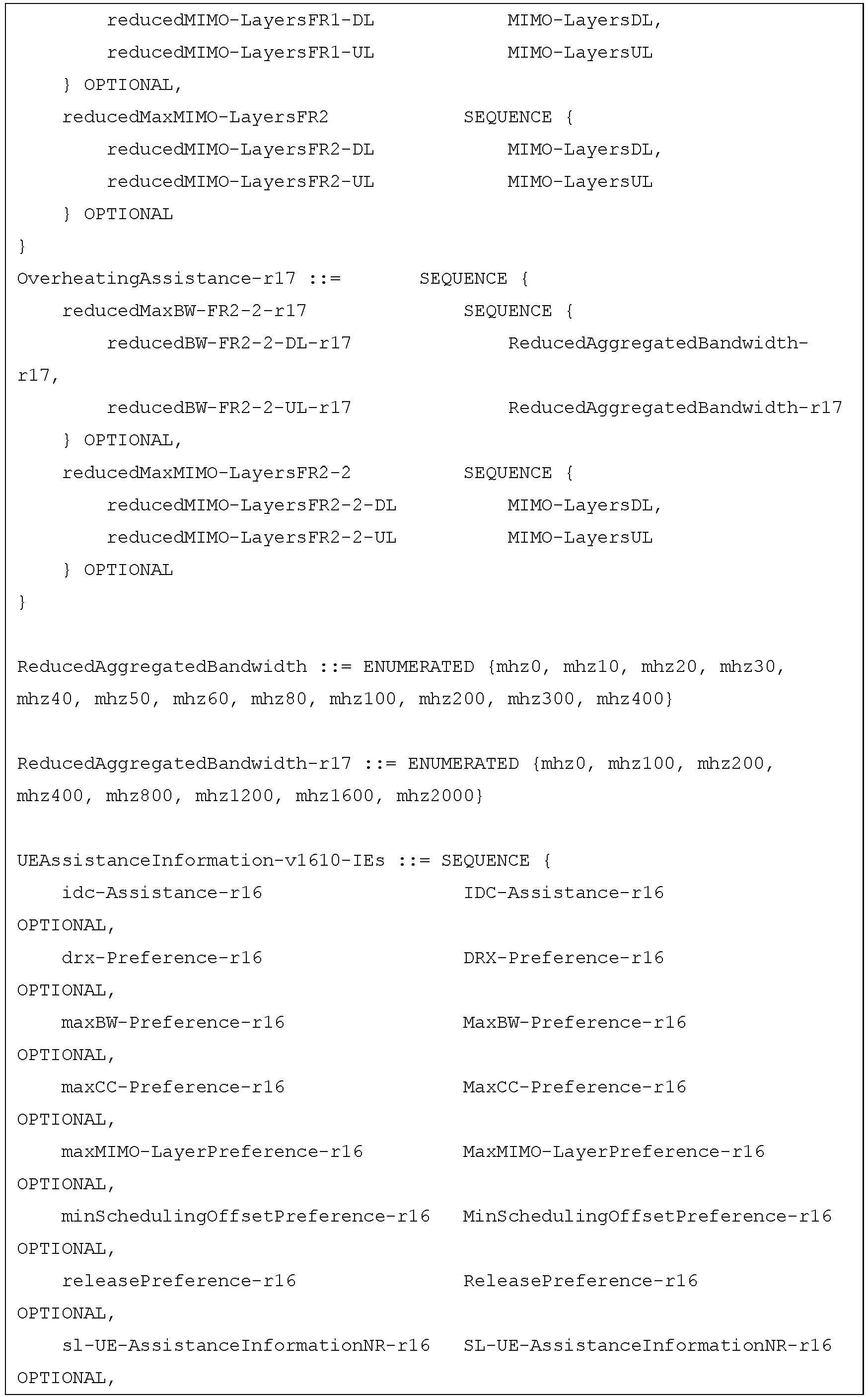

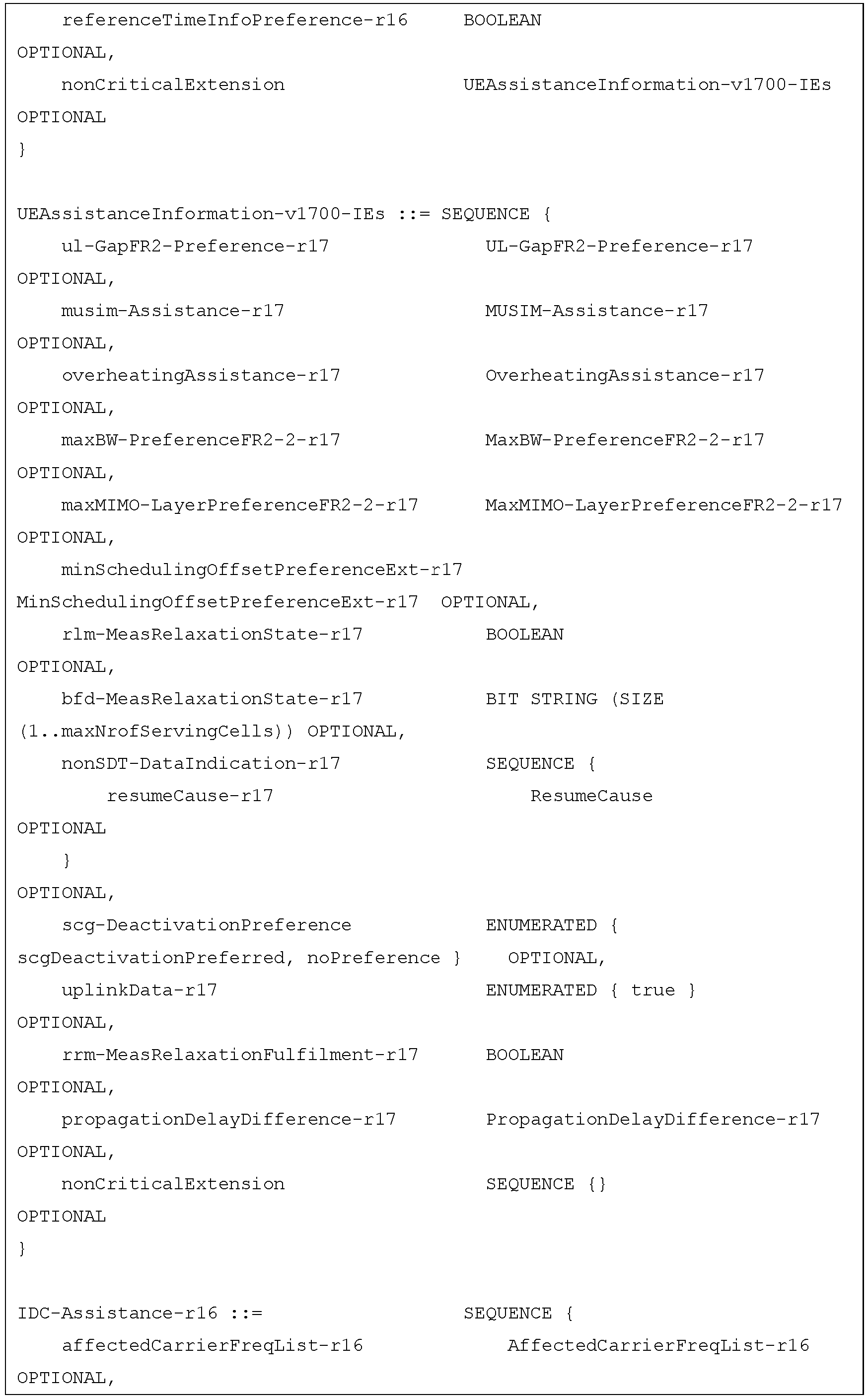

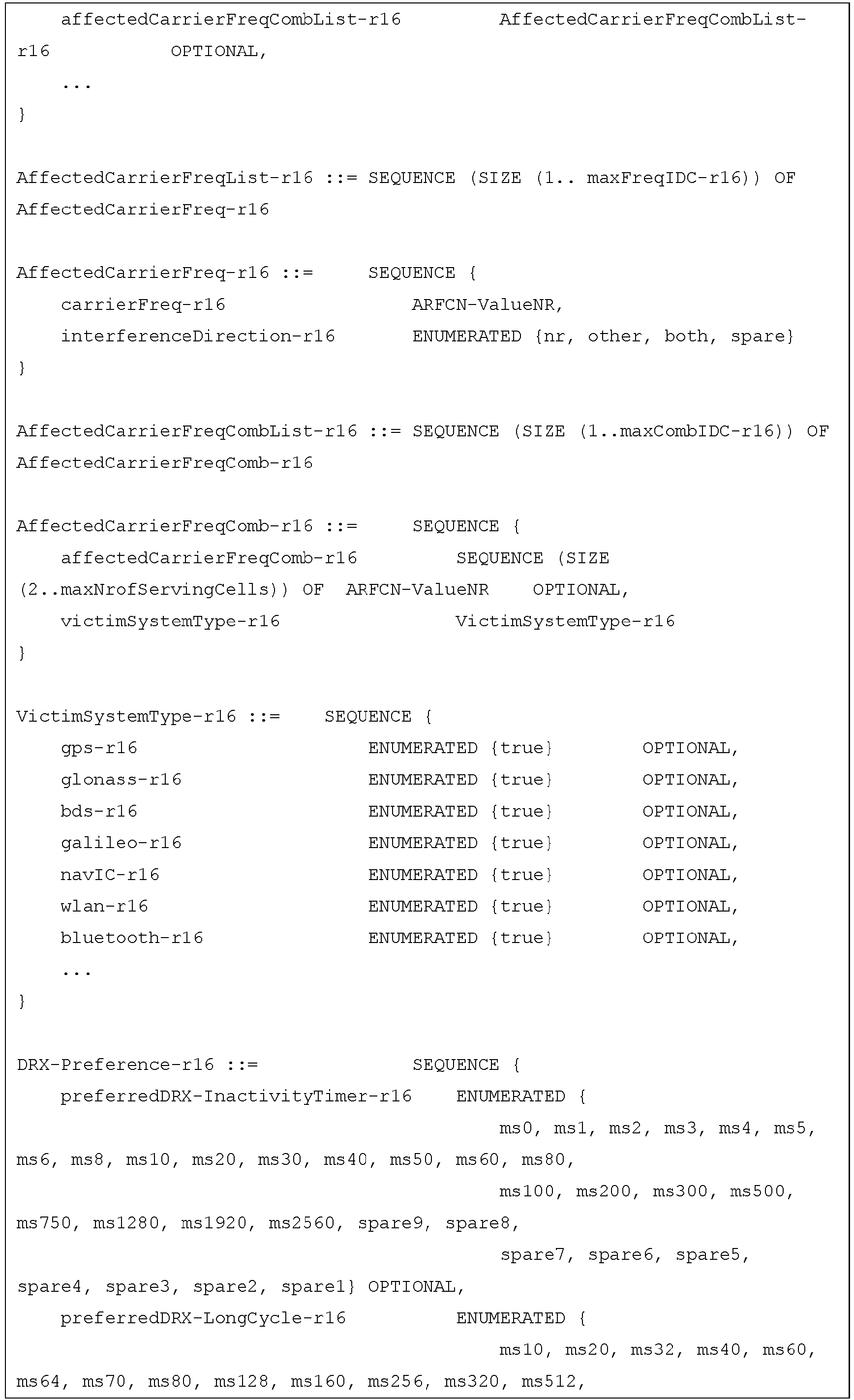

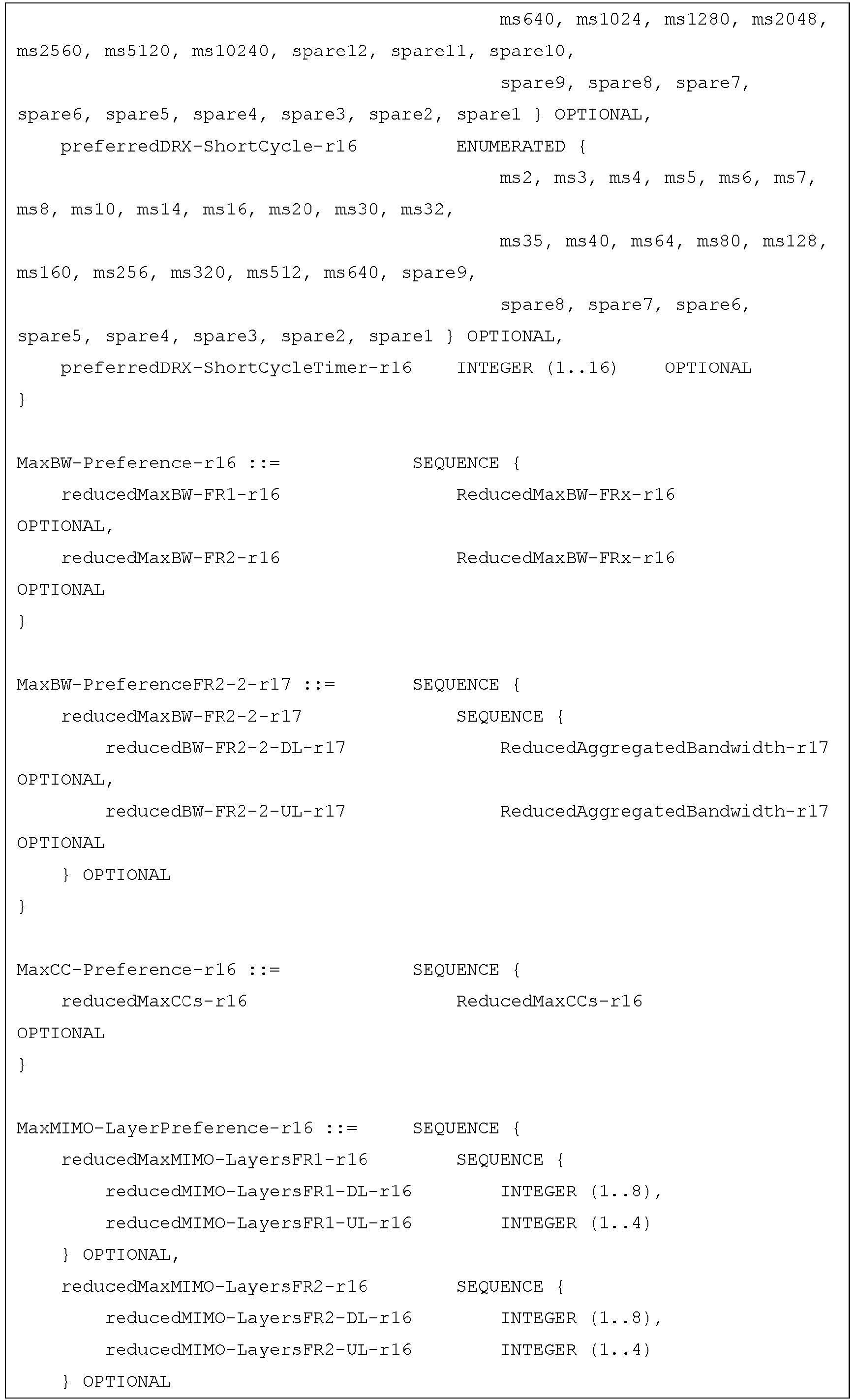

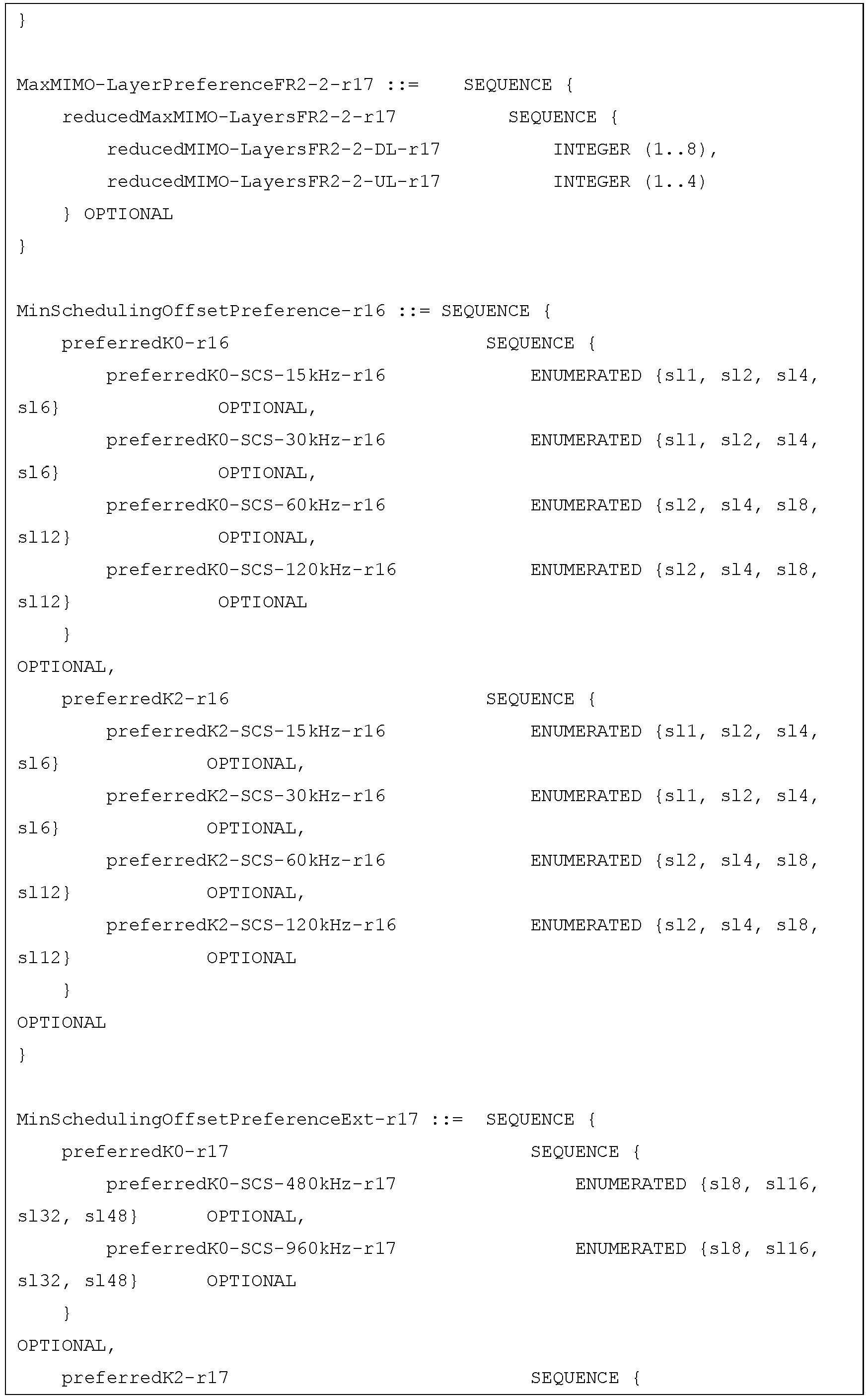

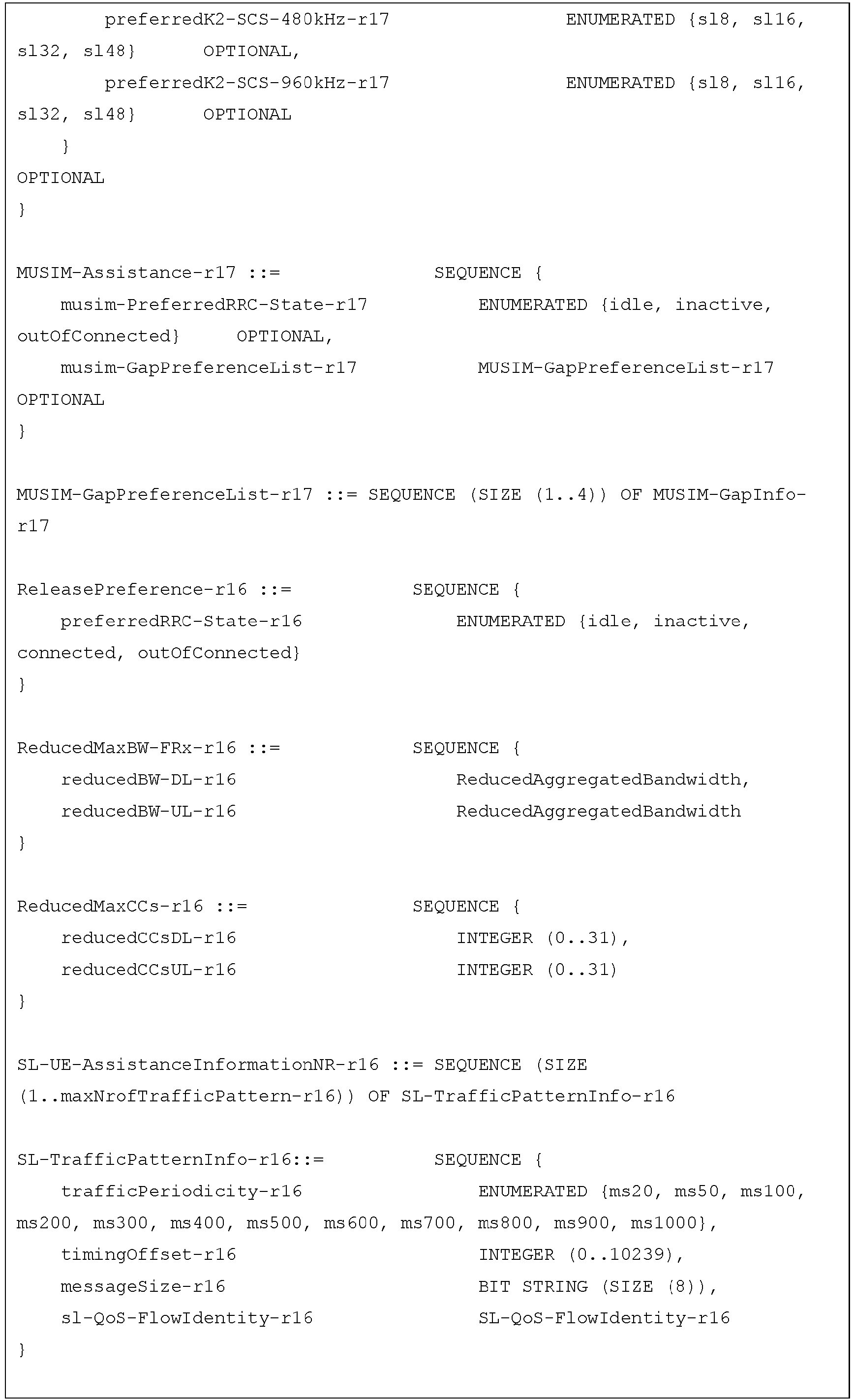

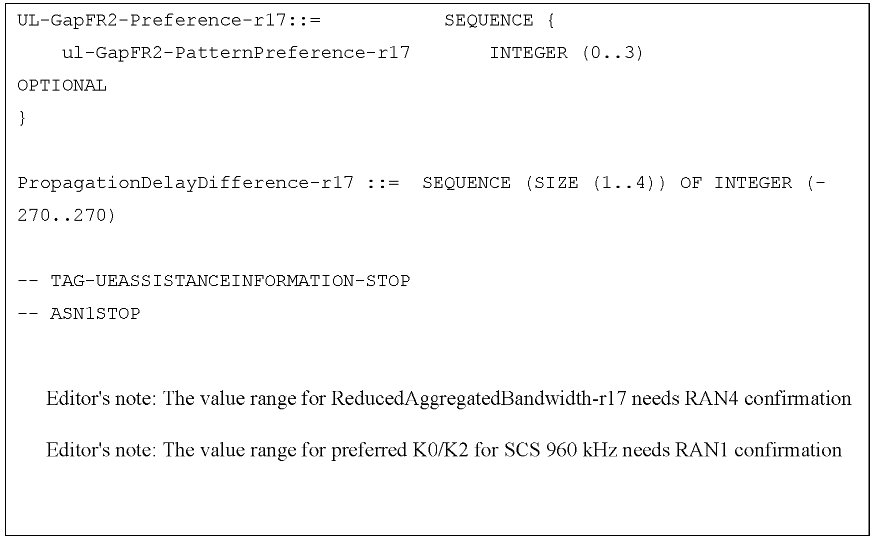

| ***UEAssistanceInformation* field descriptions** |
|---|
| ***bfd-MeasRelaxationState*** |
| Indicates the relaxation status of BFD measurements. Each bit corresponds to a serving cell of the cell group. A serving cell is mapped to the (*servCellIndex*+1)-th bit, starting from MSB. A bit that is set to 1 indicates that the UE is performing BFD measurements relaxation on the serving cell mapped on the bit. A bit that is set to 0 indicates that the UE is not performing BFD measurements relaxation on the serving cell mapped on the bit. If a serving cell is not configured to the UE, the corresponding bit is set to 0. |

Transmission of the UE assistance information is as follows:

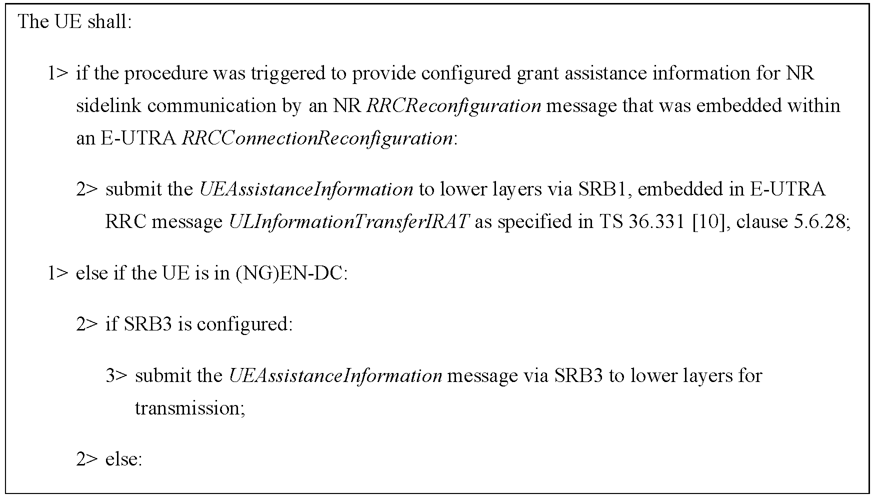

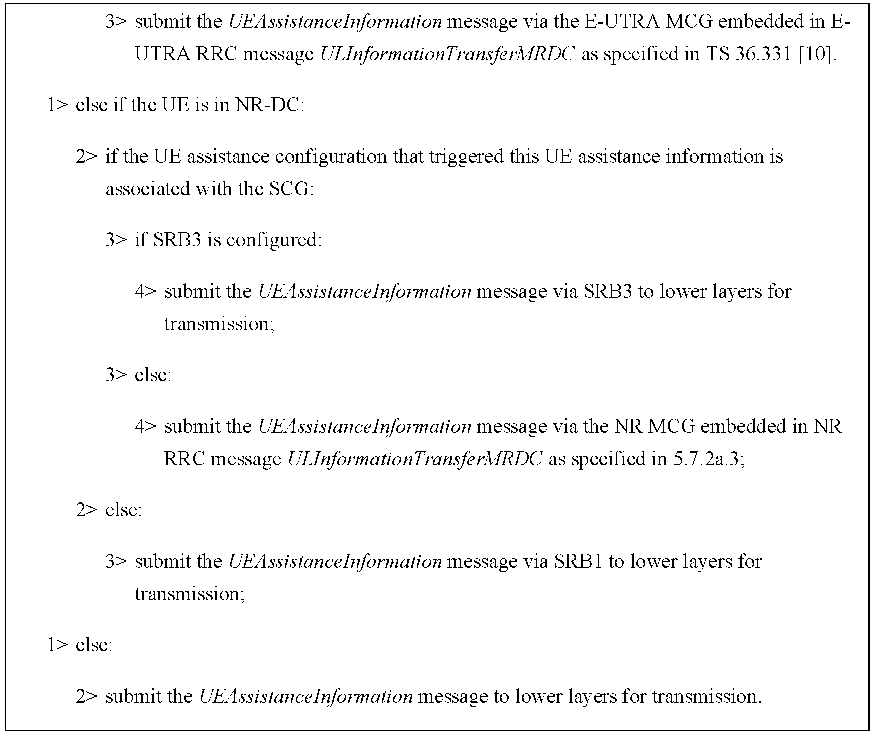

The embodiments of this disclosure are based on the following scenario:
The serving cell of the terminal equipment is configured with two or more beam failure detection reference signal (BFD-RS) sets, such as two BFD-RS sets; or, the terminal equipment is configured with carrier aggregation, wherein some serving cells are configured with beam failure detection, and some of the serving cells are configured with two or more BFD-RS sets, i.e. performing beam failure detection on the BFD-RS sets, and some cells are not configured with two or more BFD-RS sets, i.e. performing beam failure detection on the serving cells.

For example, that a cell is configured with two or more BFD-RS sets includes that a serving cell is configured with failureDetectionSet1-r17 and failureDetectionSet2-r17.

For example, a terminal is configured with at least 2 serving cells for carrier aggregation, where cell 1 (a special cell or secondary cell) is configured with beam failure detection and is configured with more than 2 BFD-RS sets, and cell 2 (a secondary cell) is configured with beam failure detection and is not configured with more than 2 BFD-RS sets. The terminal equipment may further be configured with cell 3.

For example, the terminal equipment performs beam failure detection of BFD-RS set on each BFD-RS set of cell 1, and performs beam failure detection on serving cell 2.

### Embodiments of a first aspect

The embodiments of this disclosure provide a method for measurement relaxation, applicable to a terminal equipment, such as the terminal equipment 102 in FIG. 1.

FIG. 2 is a schematic diagram of the method for measurement relaxation of the embodiments of the first aspect. As shown in FIG. 2, the method for measurement relaxation includes:
operation 201: for a serving cell configured with two or more beam failure detection reference signal (BFD-RS) sets, the terminal equipment does not perform measurement relaxation of beam failure detection (BFD); or, for a serving cell that is not configured with two or more beam failure detection reference signal (BFD-RS) sets, the terminal equipment performs measurement relaxation of beam failure detection (BFD).

For example, for the serving cell configured with two or more BFD-RS sets, measurement relaxation of BFD is not performed, or for the serving cell that is not configured with two or more BFD-RS sets, measurement relaxation of BFD is performed.

With the embodiments of the first aspect, for a case of multi-TRPs, the network device and terminal equipment may be made to have identical understandings of the measurement relaxation of BFD, thereby avoiding inappropriate operations of the network device on mobility of the terminal equipment, and avoiding service interruptions.

In this disclosure, operation 201 may be implemented in at least one of the following schemes 1-1, 1-2 or 1-3.

### Scheme 1-1

In scheme 1-1, the not performing measurement relaxation of beam failure detection (BFD) by the terminal equipment includes that the measurement relaxation of beam failure detection (BFD) is disabled, wherein the disabling may have such meanings as being not allowed, and being disabled, etc.

In scheme 1-1, the performing measurement relaxation of beam failure detection (BFD) by the terminal equipment includes that the measurement relaxation of beam failure detection (BFD) is enabled, wherein the enabling may have such meanings as being allowed, being deactivated, and being enabled, etc.

In at least one embodiment of scheme 1-1, for a serving cell configured with two BFD-RS sets, the measurement relaxation of BFD is disabled; or, only for a serving cell that is not configured with 2 BFD-RS sets, the measurement relaxation of BFD is enabled.

For example, a presence condition and/or field description of a first parameter related to a low mobility criterion and/or a second parameter related to a good cell quality criterion may be changed, wherein the first parameter may be *lowMobilityEvaluationConnected*, and the second parameter may be *goodServingCellEvaluationBFD.* In addition, the second parameter may be a second parameter for a special cell and/or a secondary cell.

Changing the presence condition and/or field description of a first parameter related to a low mobility criterion (*lowMobilityEvaluationConnected*) includes that: the serving cell is a special cell, in a case where there exists a first serving cell in which no two or more beam failure detection reference signal (BFD-RS) sets are configured in a cell group where the serving cell is located, measurement relaxation of beam failure detection (BFD) is disabled or measurement relaxation of beam failure detection (BFD) is enabled.

Specifically, a corresponding criterion for changing presence condition of an IE (information element) may be:

For (1) lowMobilityEvaluationConnected, the standard is as shown in Table 1.

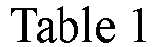

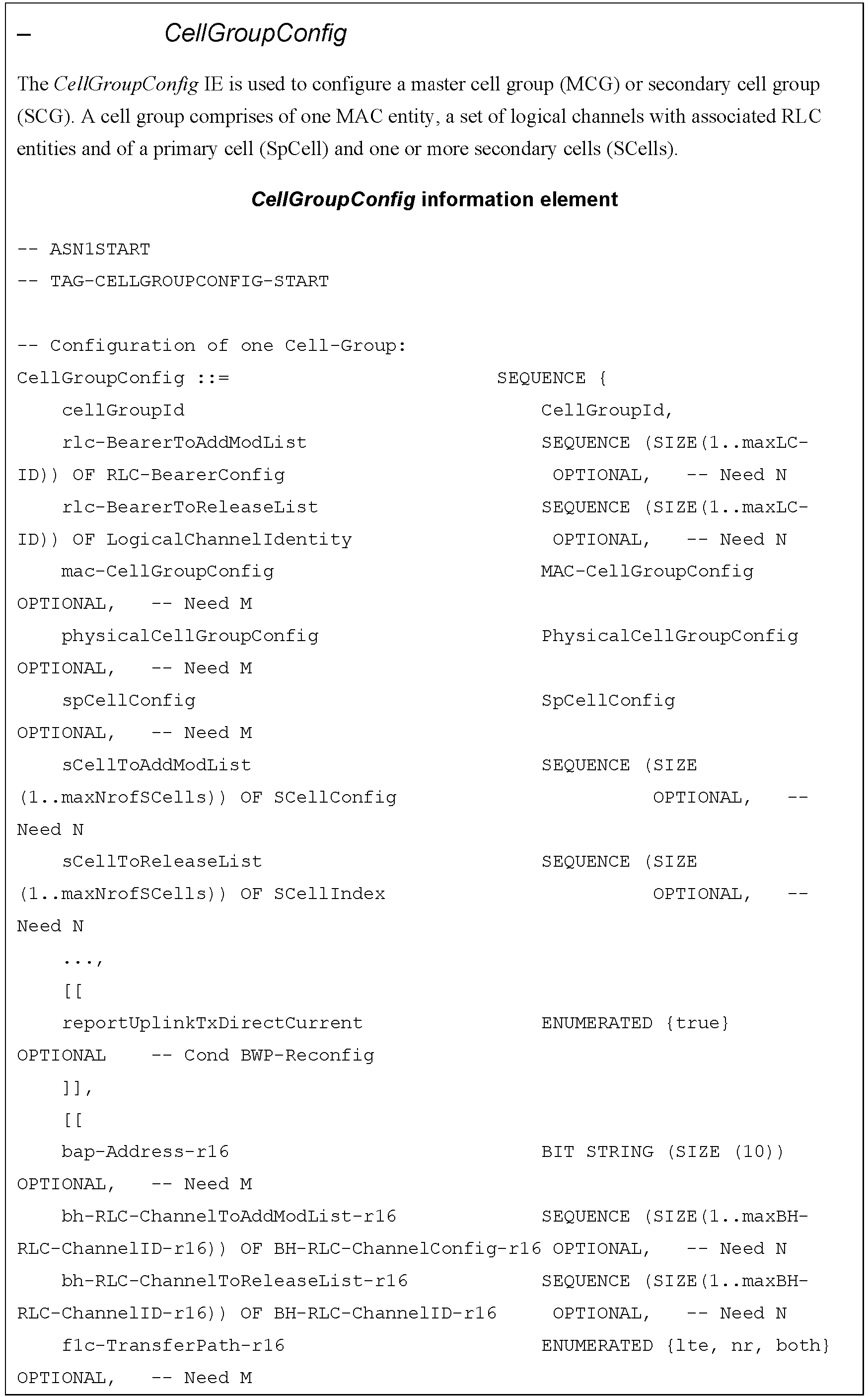

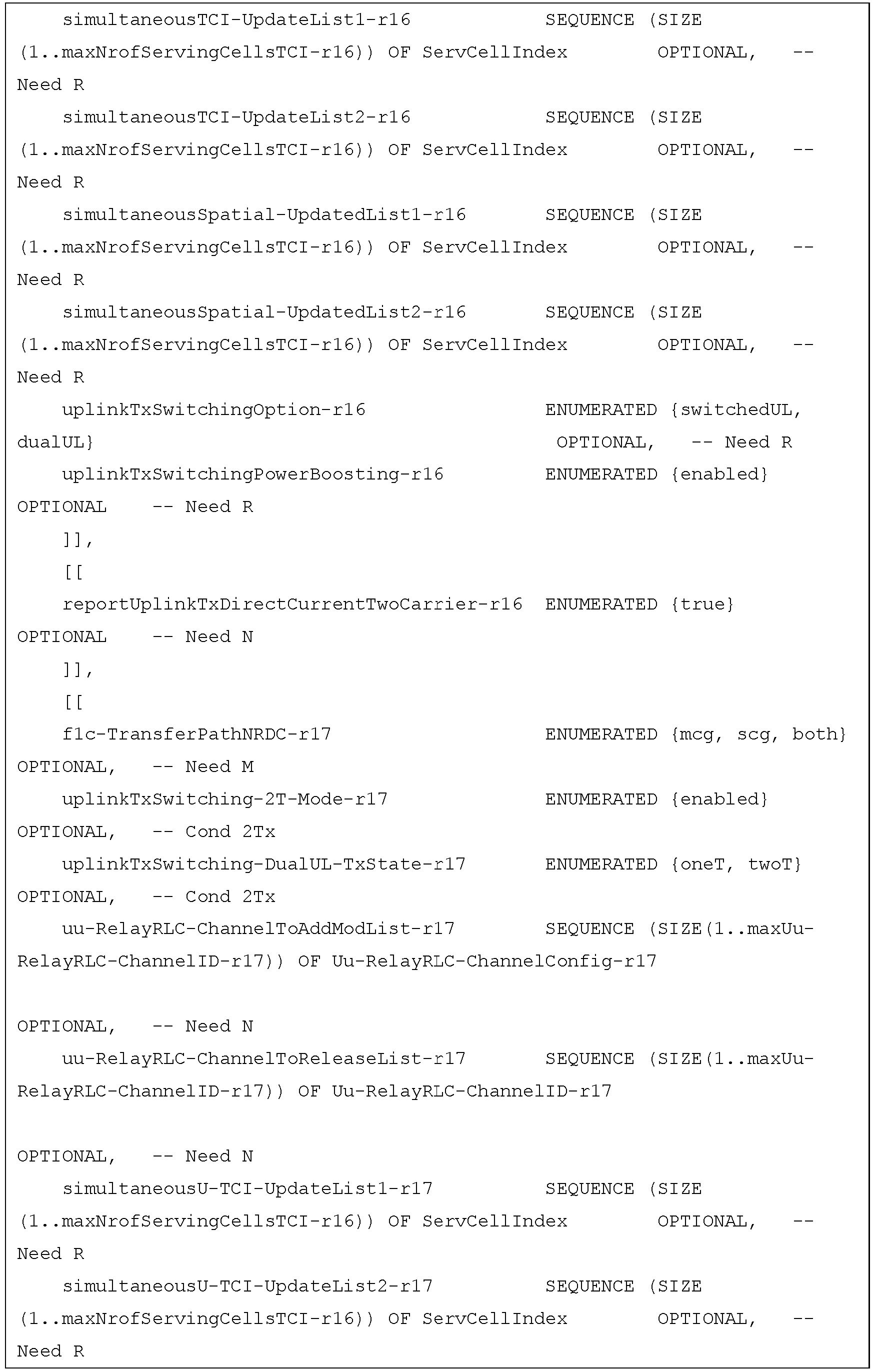

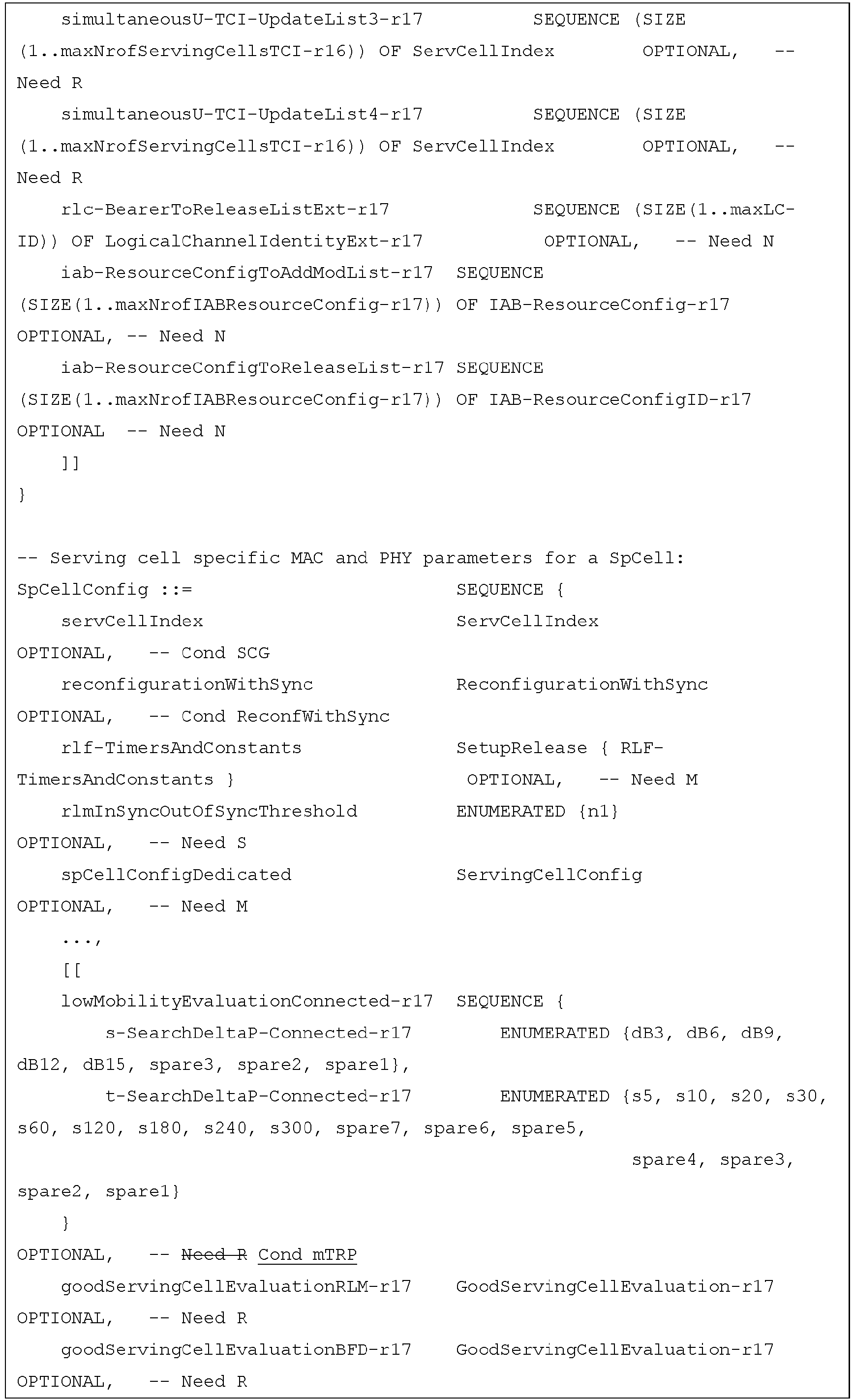

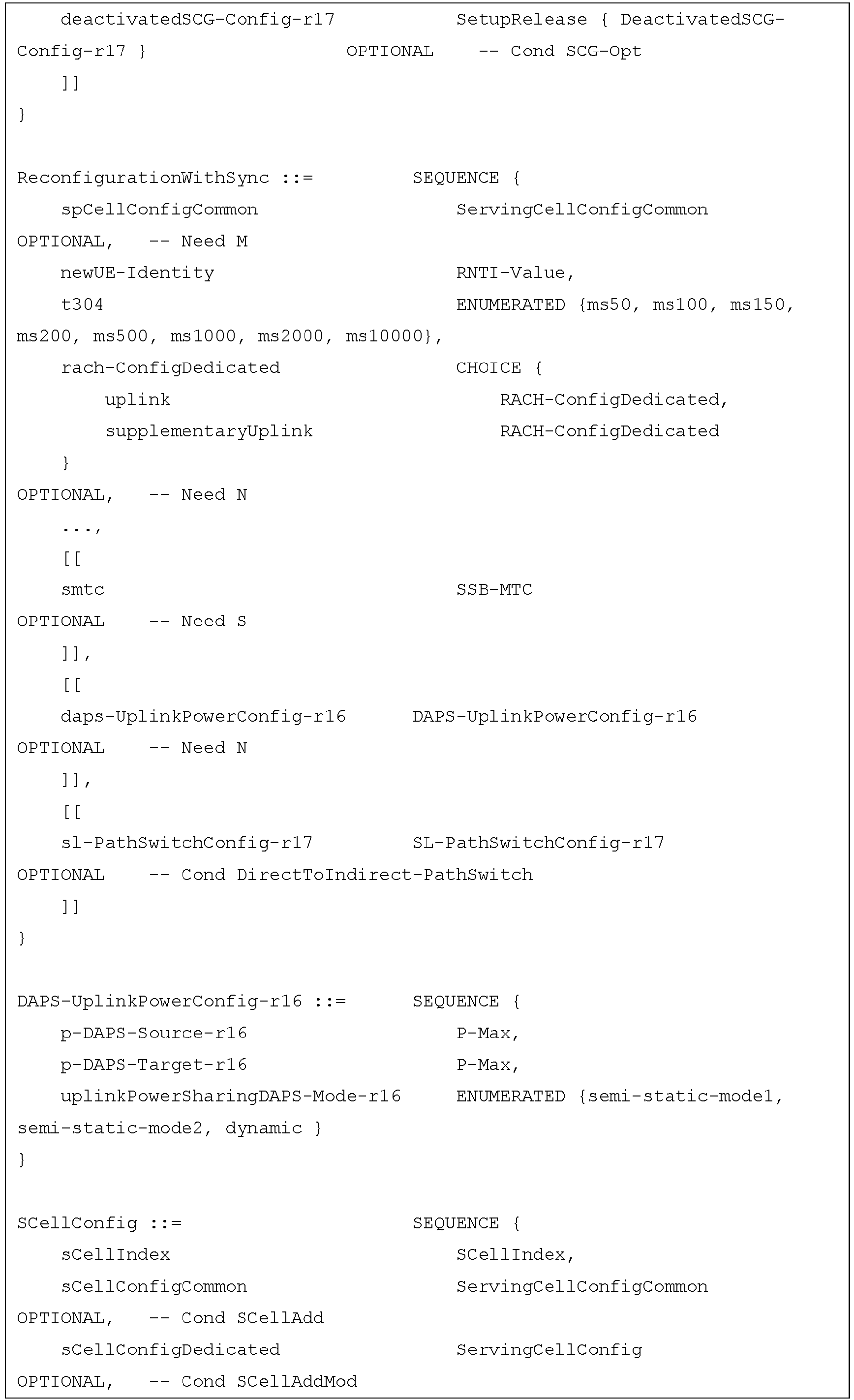

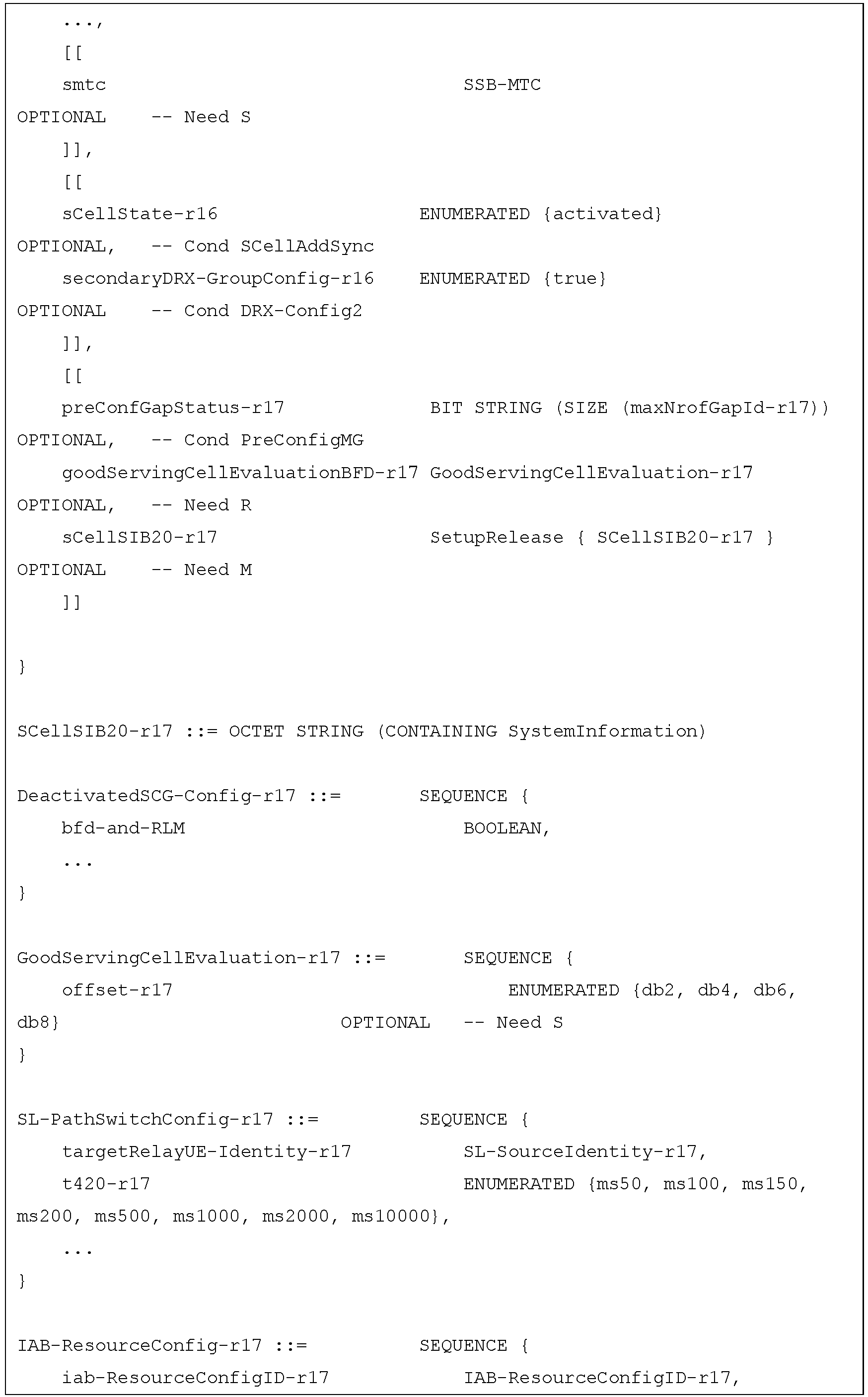

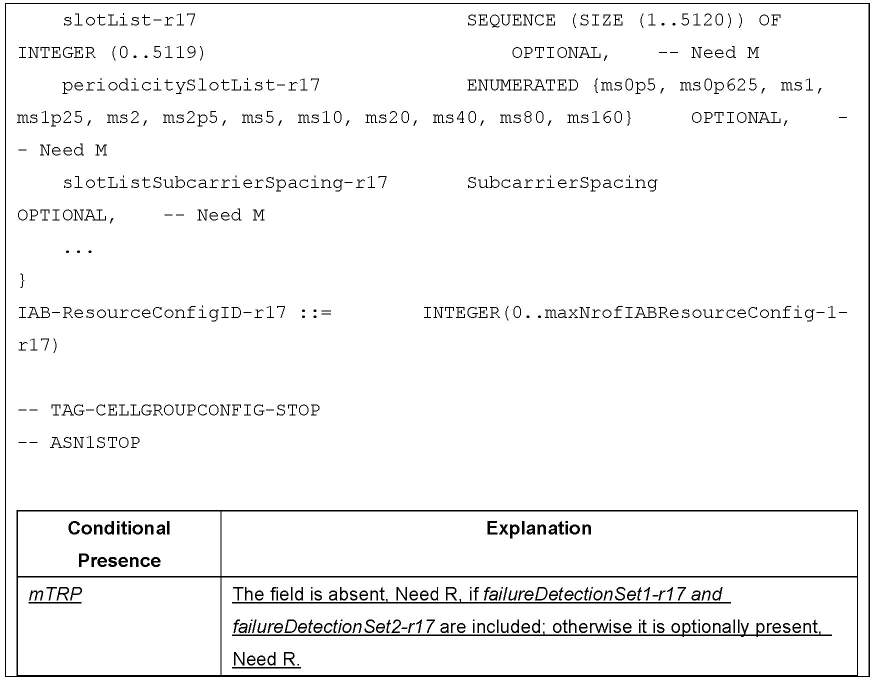

Or, the above "failureDetectionSet1-r17 and failureDetectionSet2-r17 are included" is replaced with "2 BFD RS set are configured";
or, the Explanation part is changed into "The field is optionally present, Need R if failureDetectionSet1-r17 and failureDetectionSet2-r17 are not configured; otherwise it is absent, Need R.".

For (2) *goodServingCellEvaluationBFD,* the standard is as shown in Table 2.

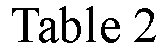

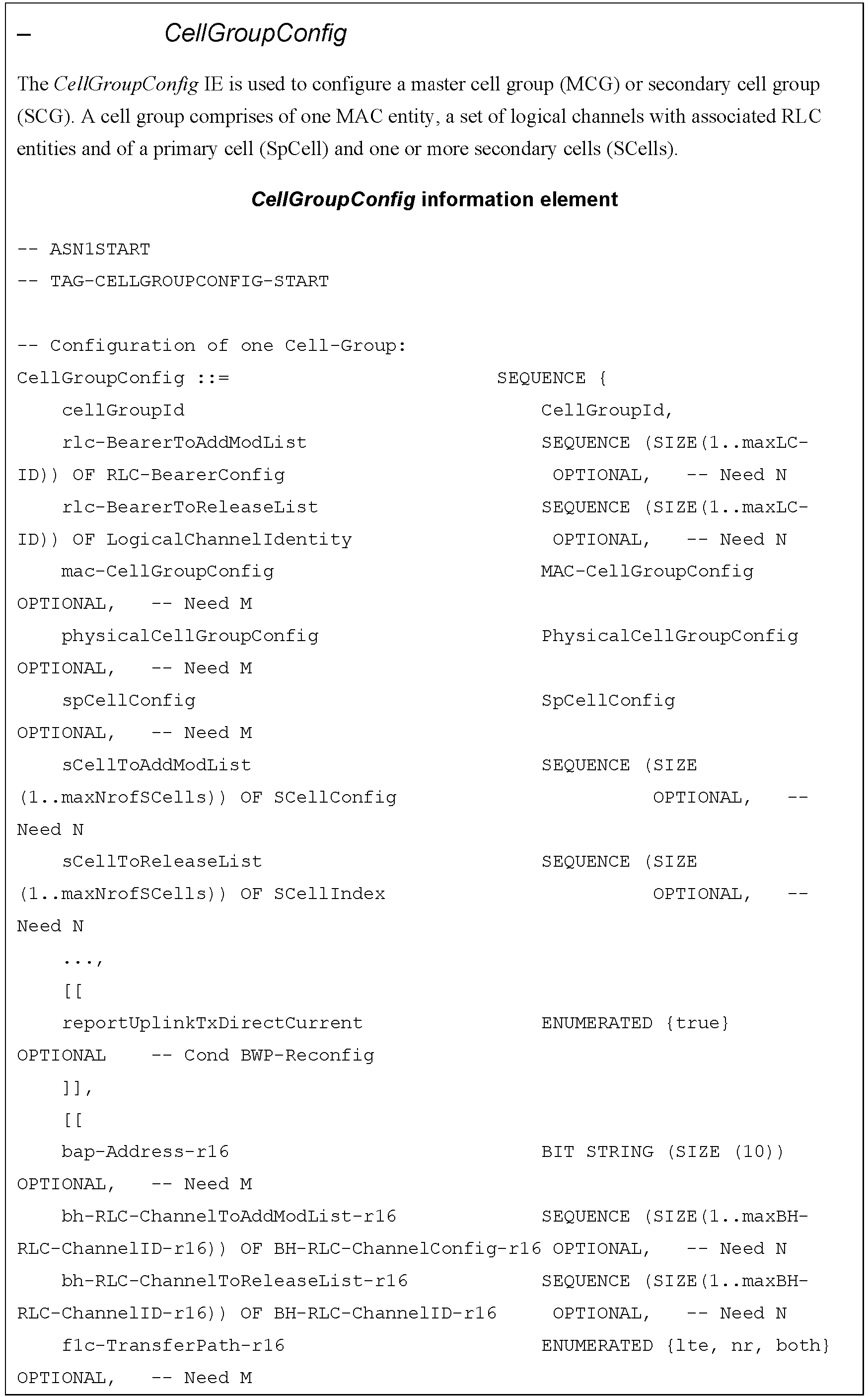

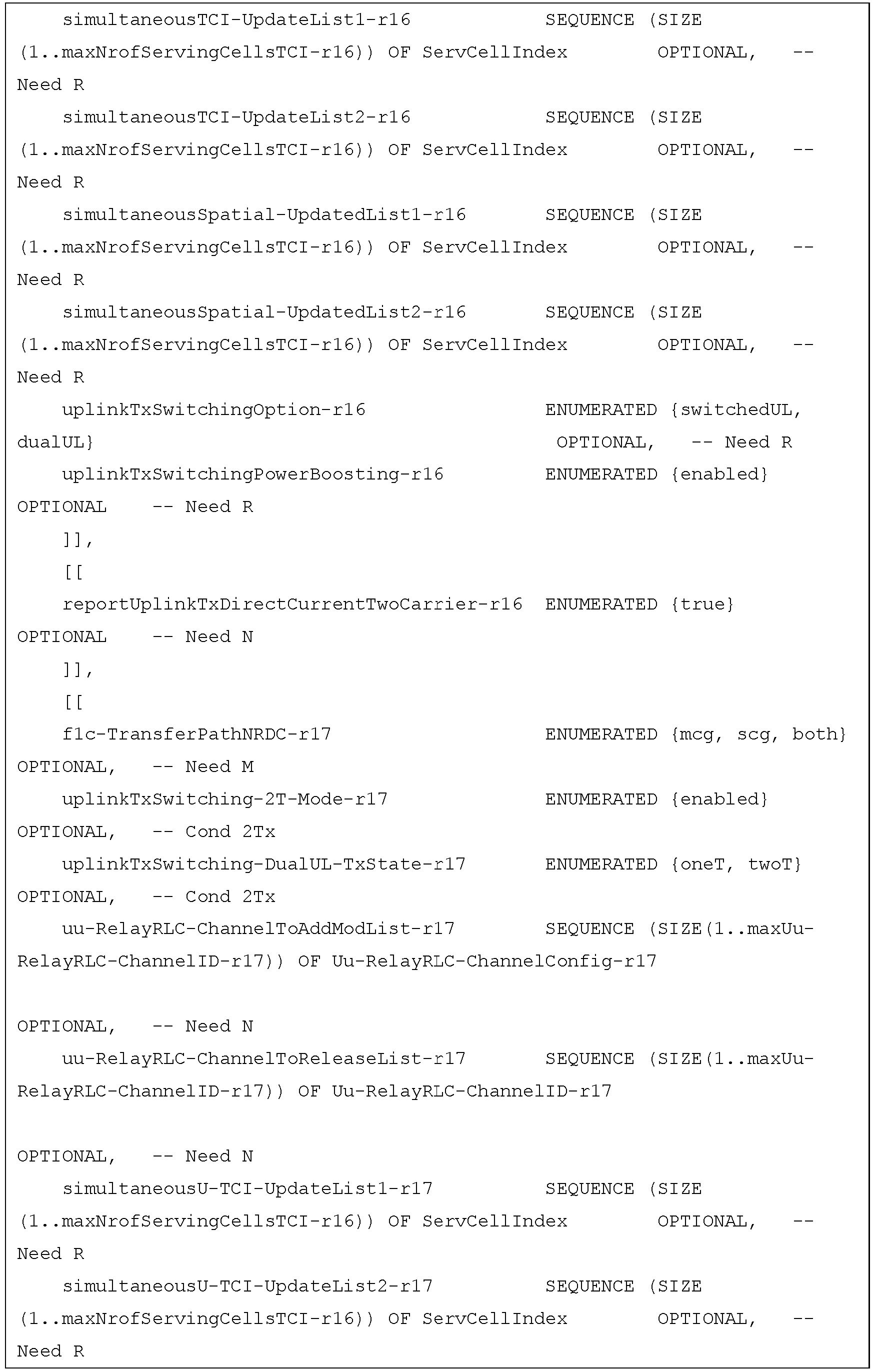

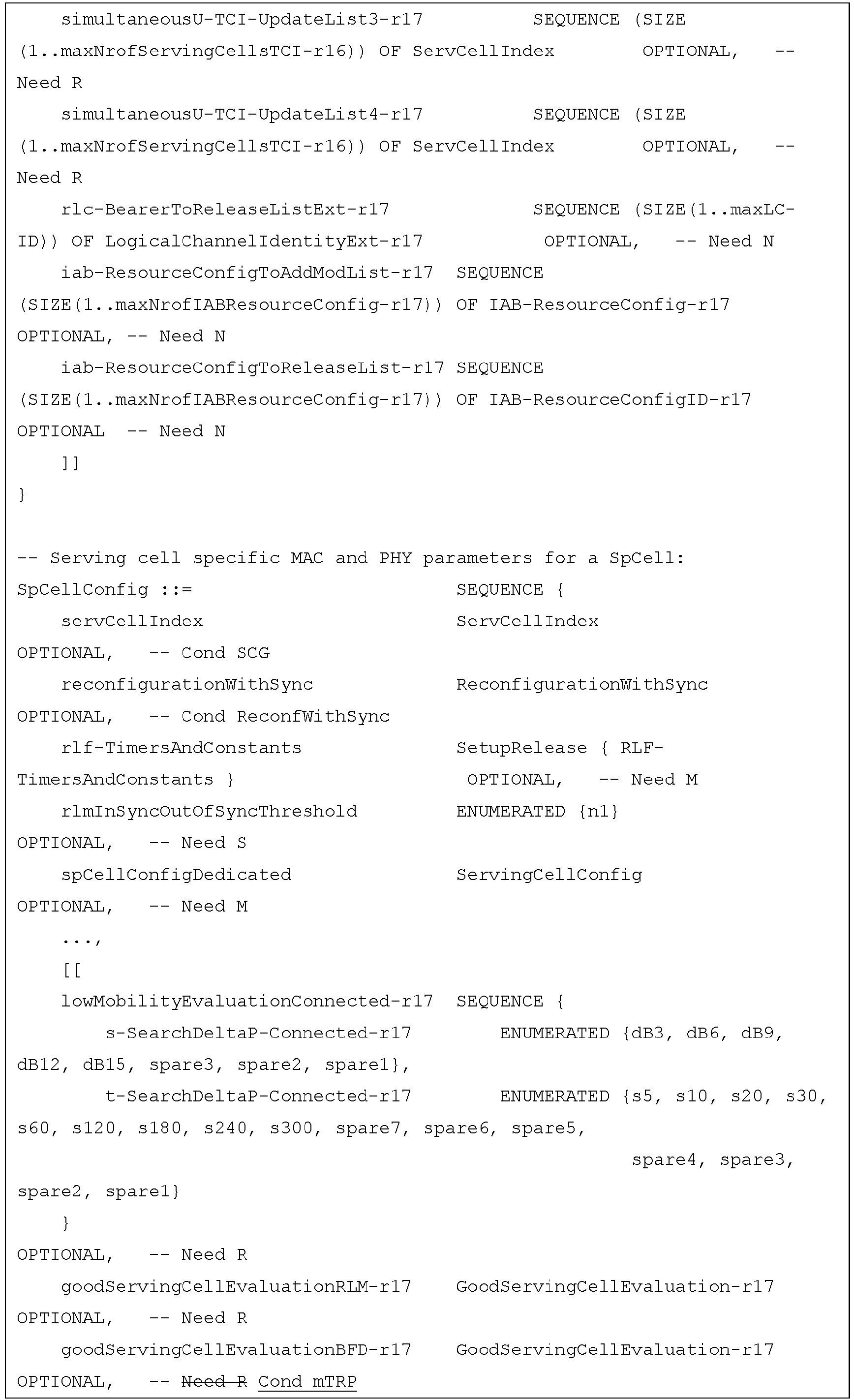

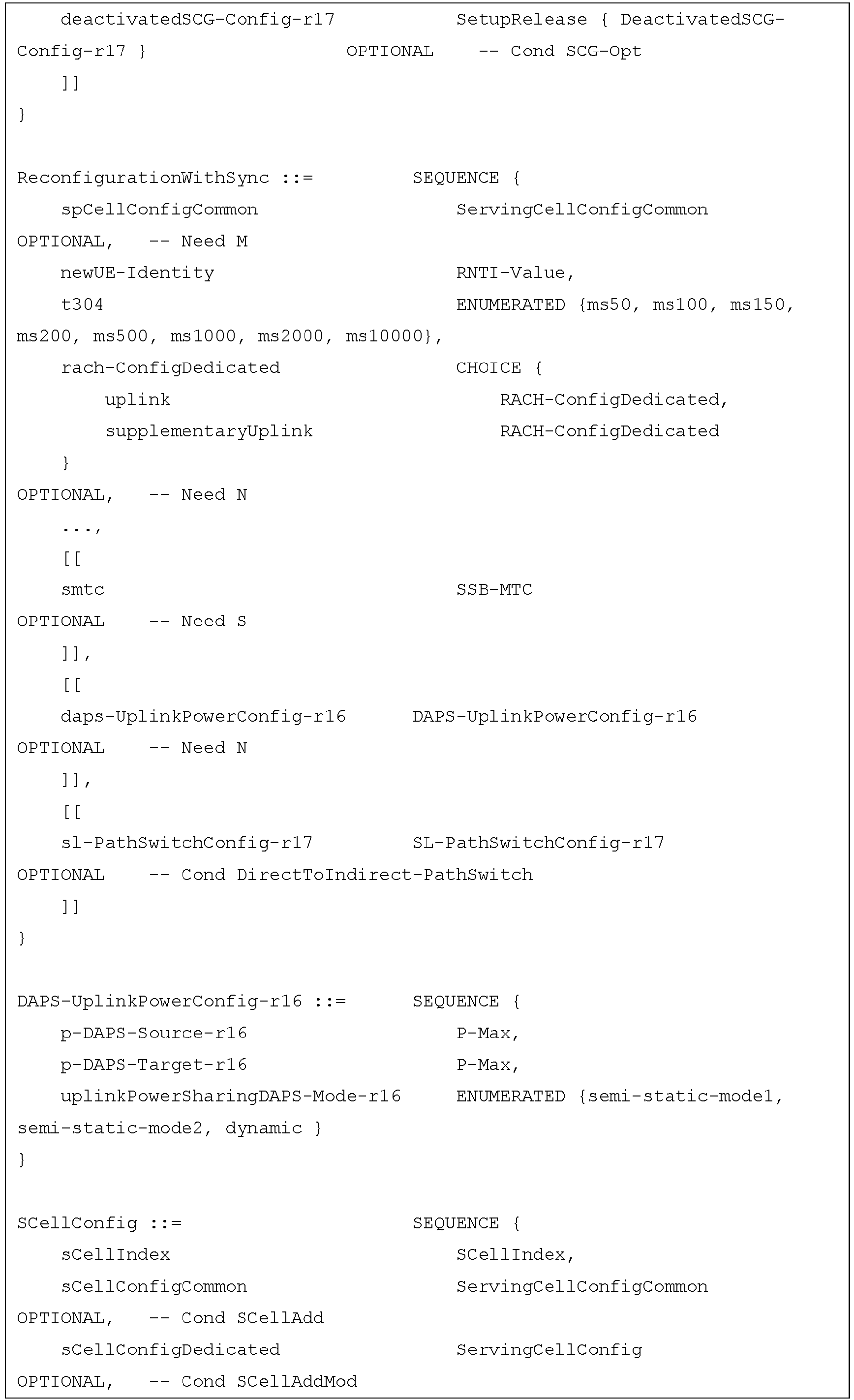

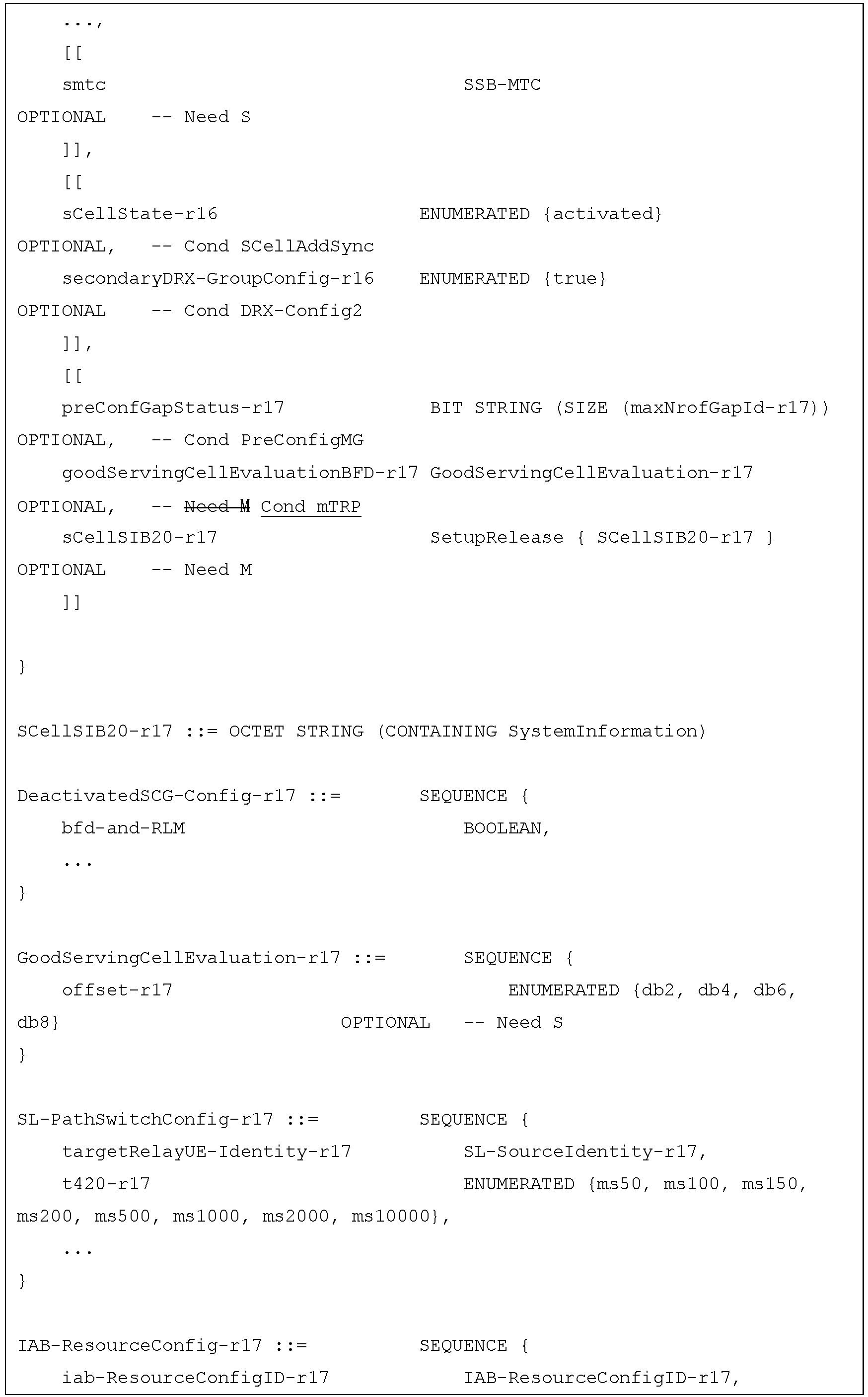

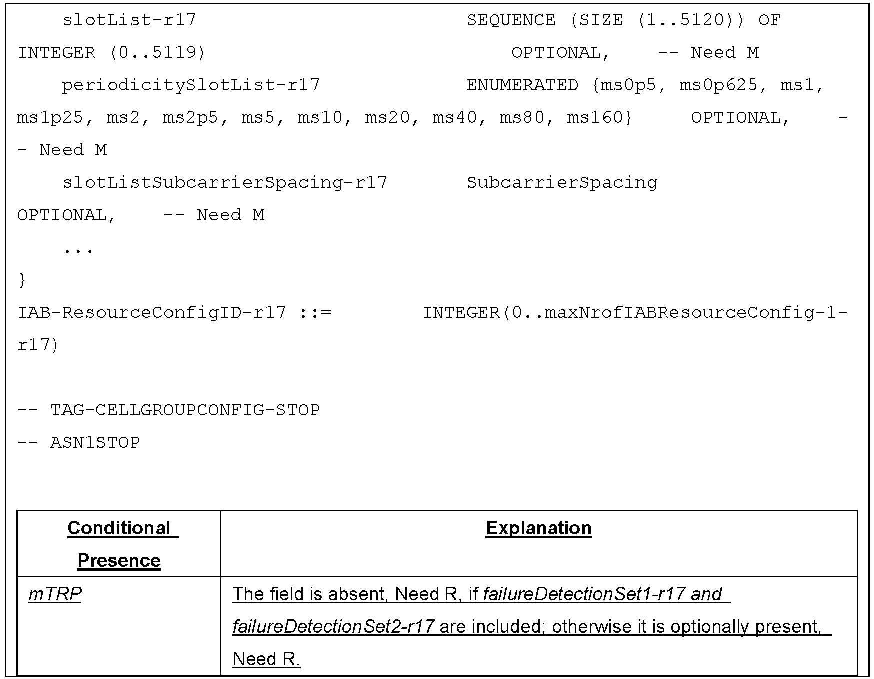

Or, the above "failureDetectionSet1-r17 and failureDetectionSet2-r17 are included" is replaced with "2 BFD RS set are configured";
or, the Explanation part is changed into "The field is optionally present, Need R if failureDetectionSet1-r17 and failureDetectionSet2-r17 are not configured; otherwise it is absent, Need R.".

A corresponding standard for changing a field description of an IE may be, for example:

For (1) lowMobilityEvaluationConnected, the standard is as shown in Table 3.

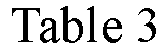

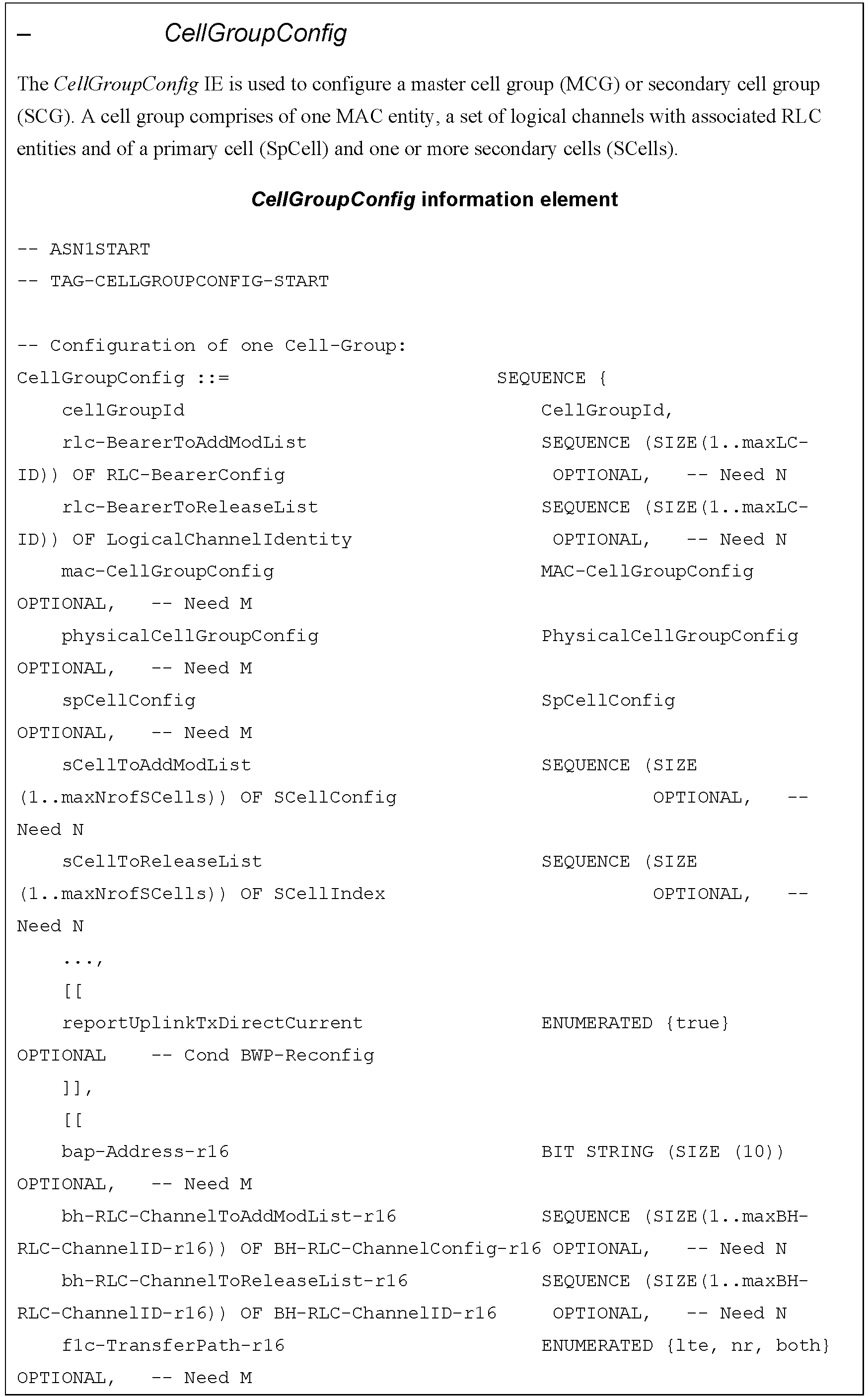

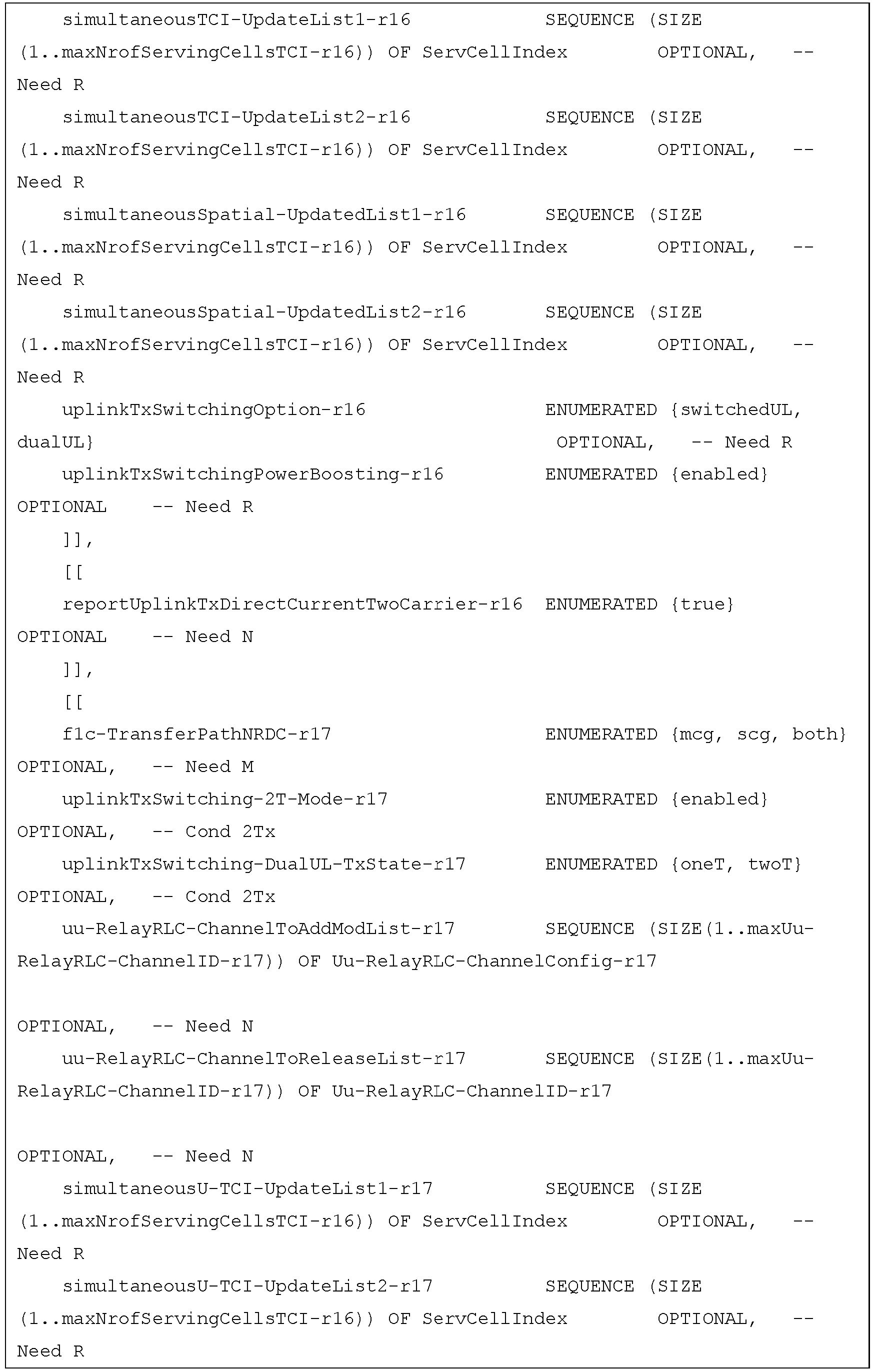

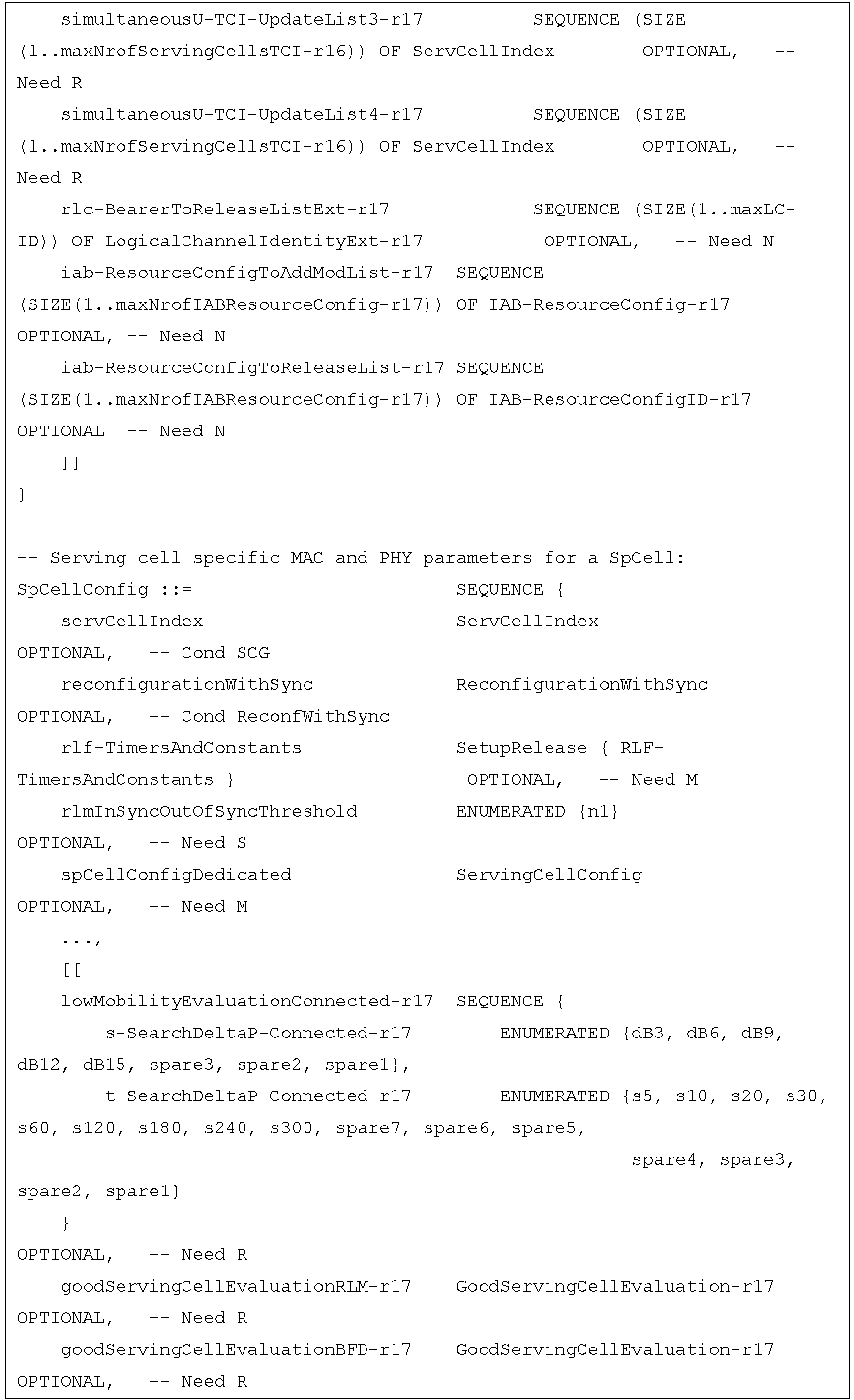

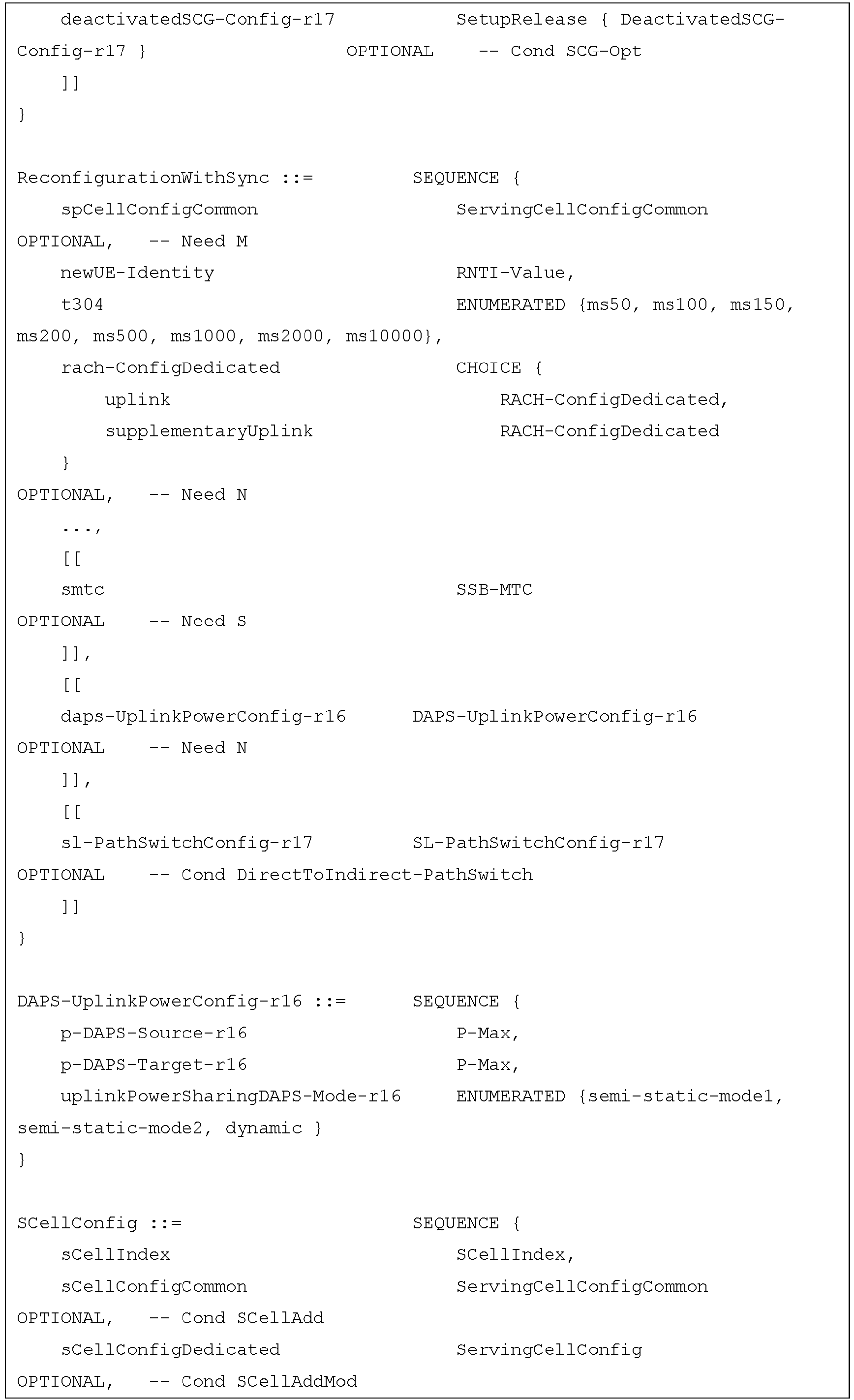

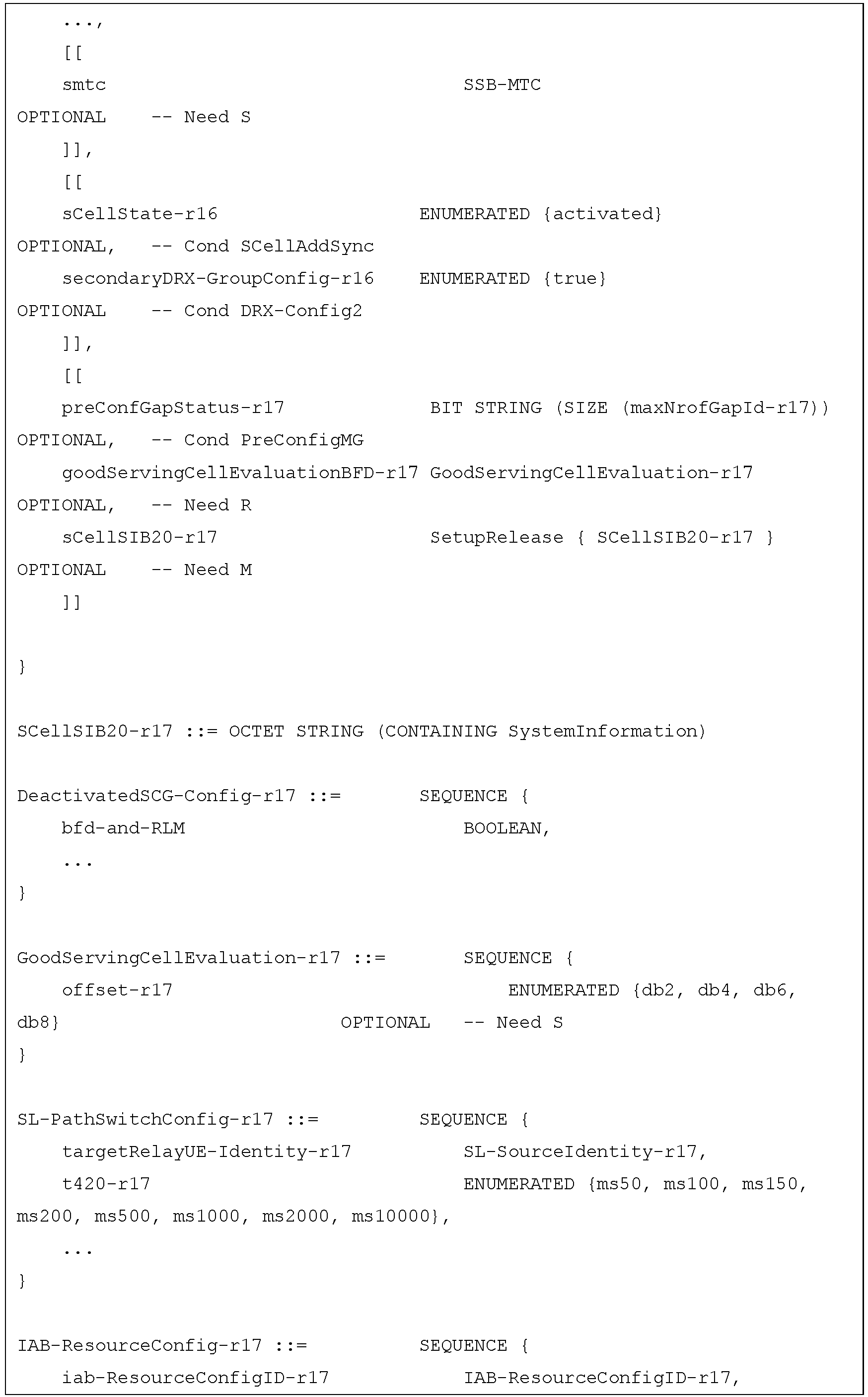

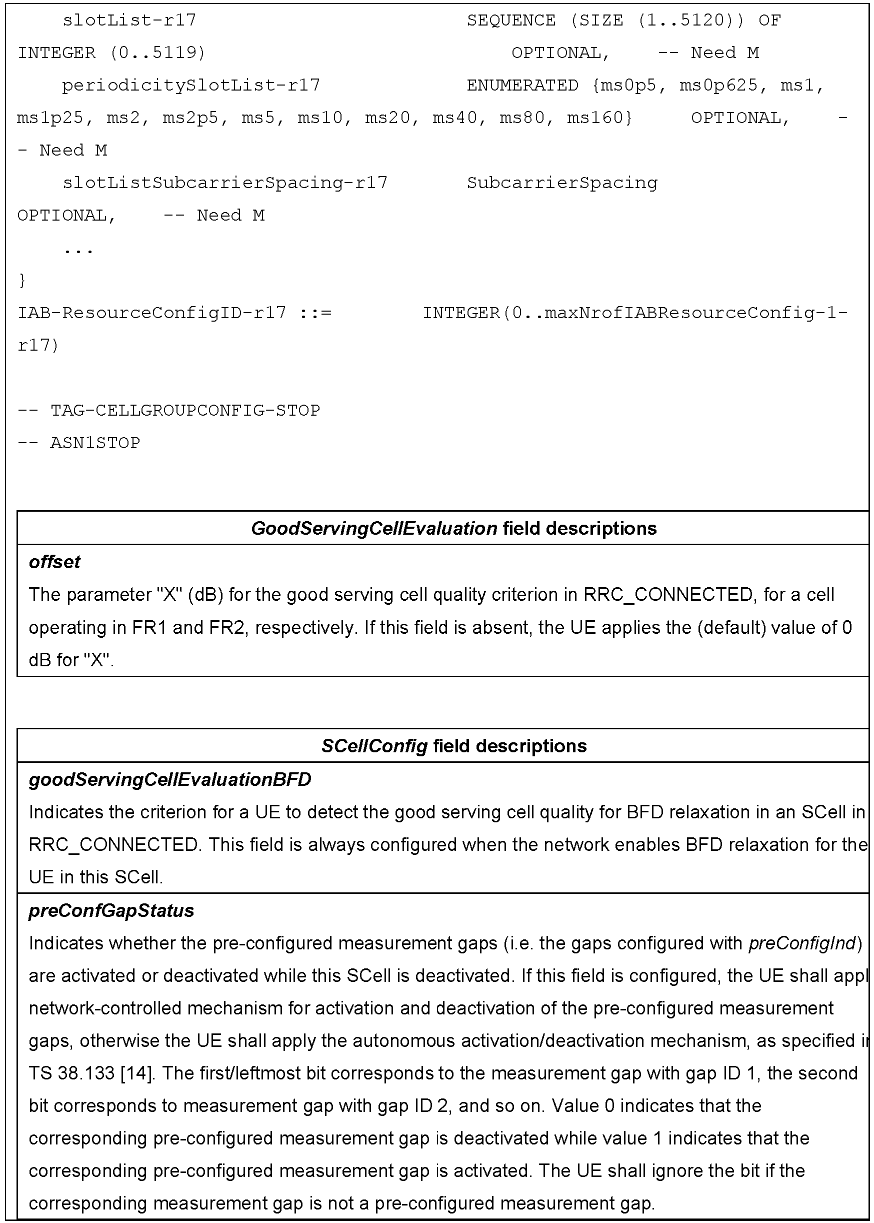

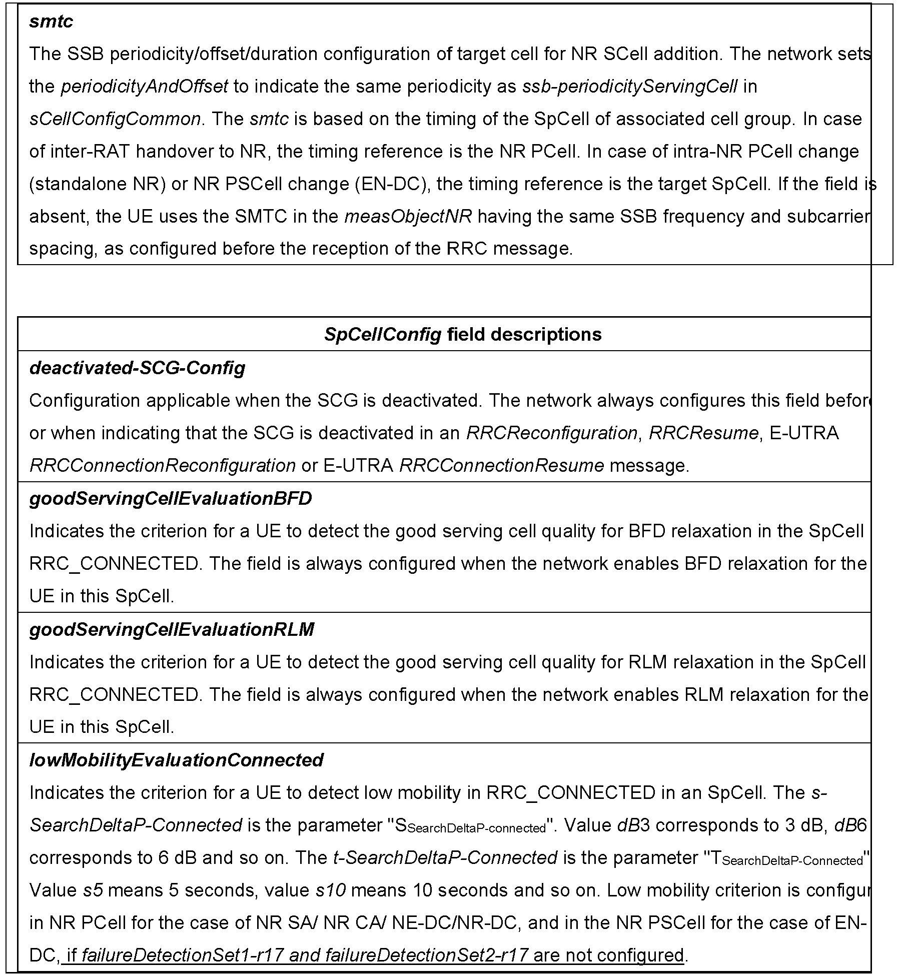

Or, the condition is replaced with "if NR PSCell without mTRP".

For (2) *goodServingCellEvaluationBFD,* the standard is as shown in Table 4.

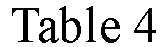

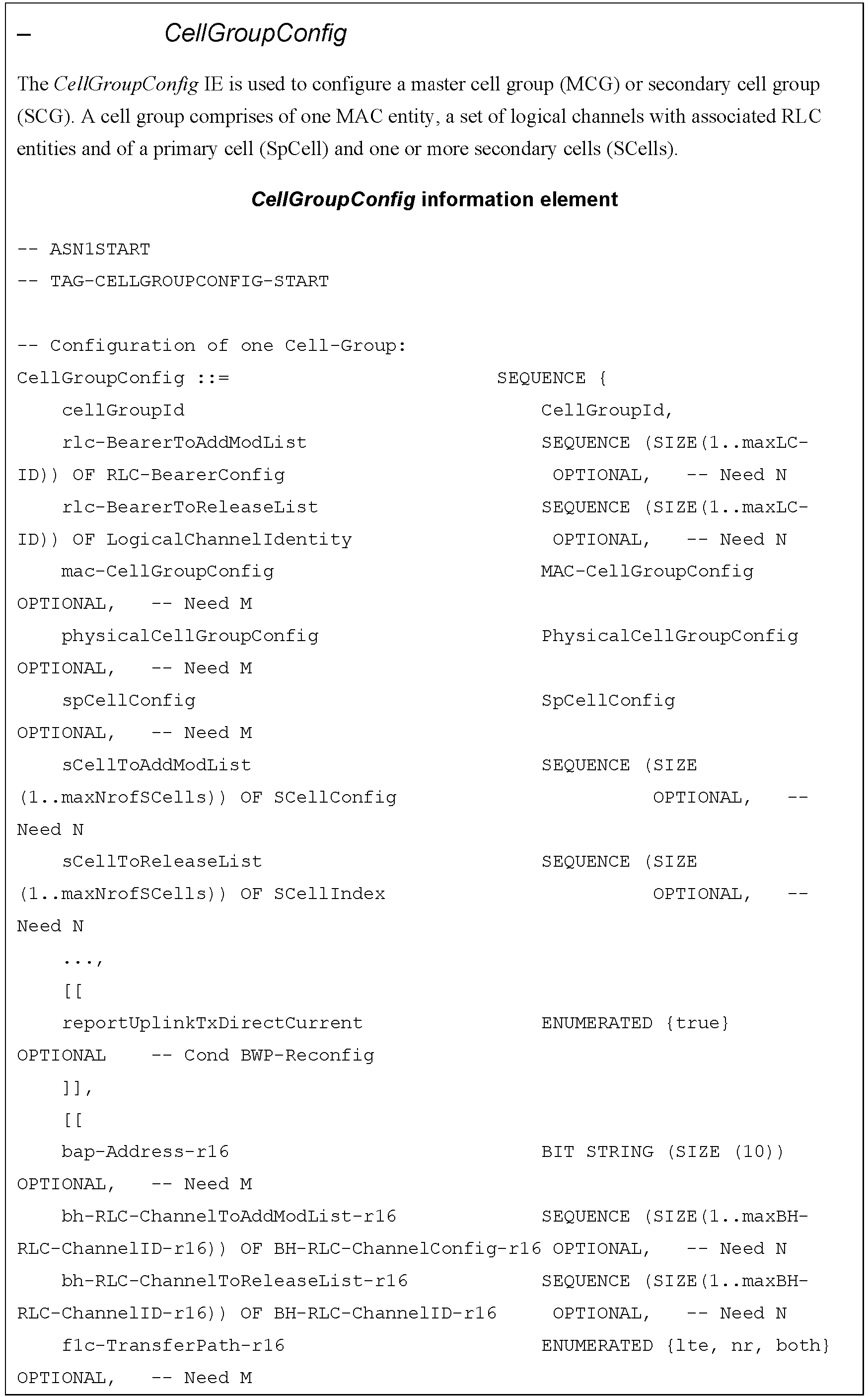

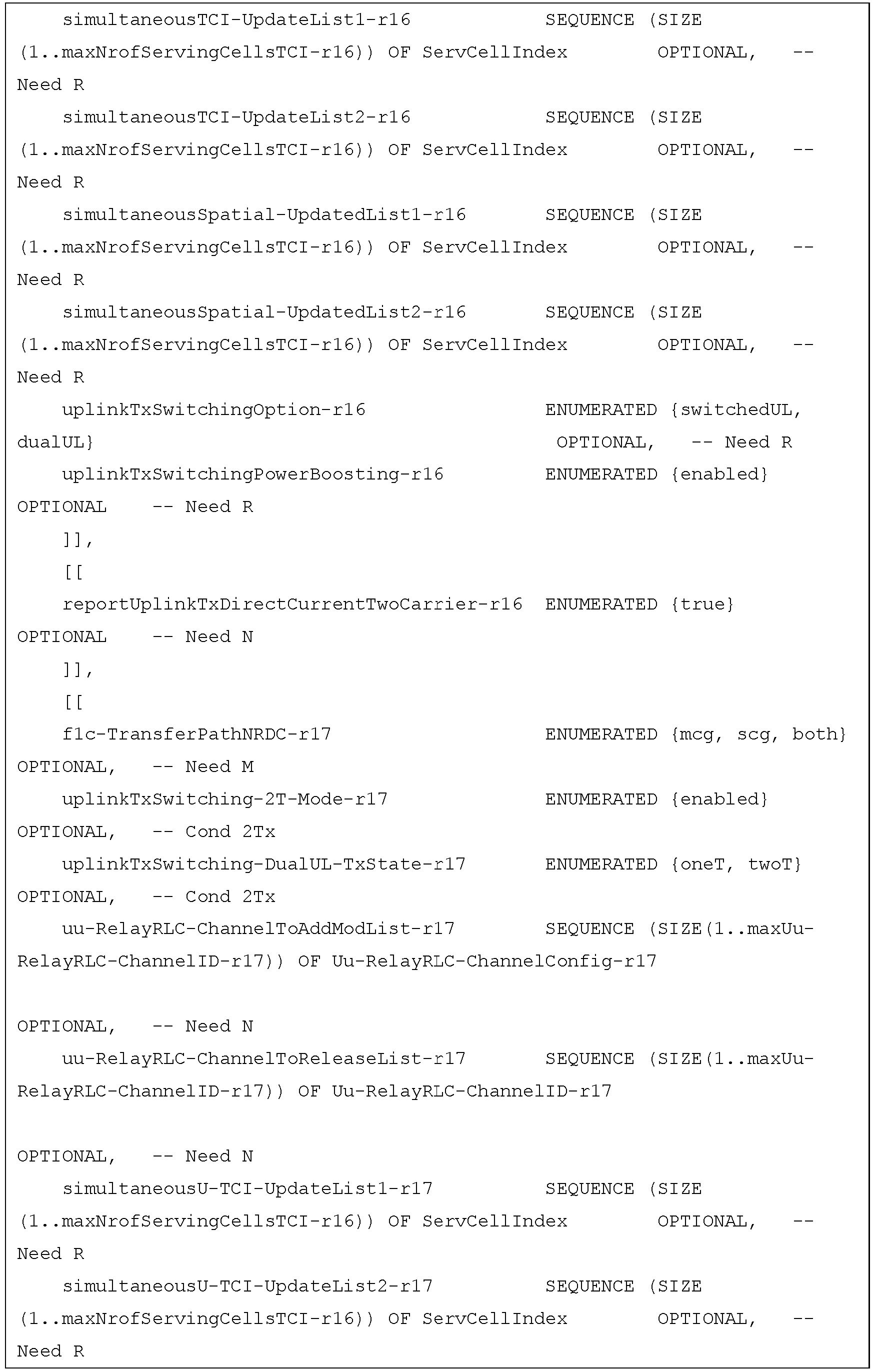

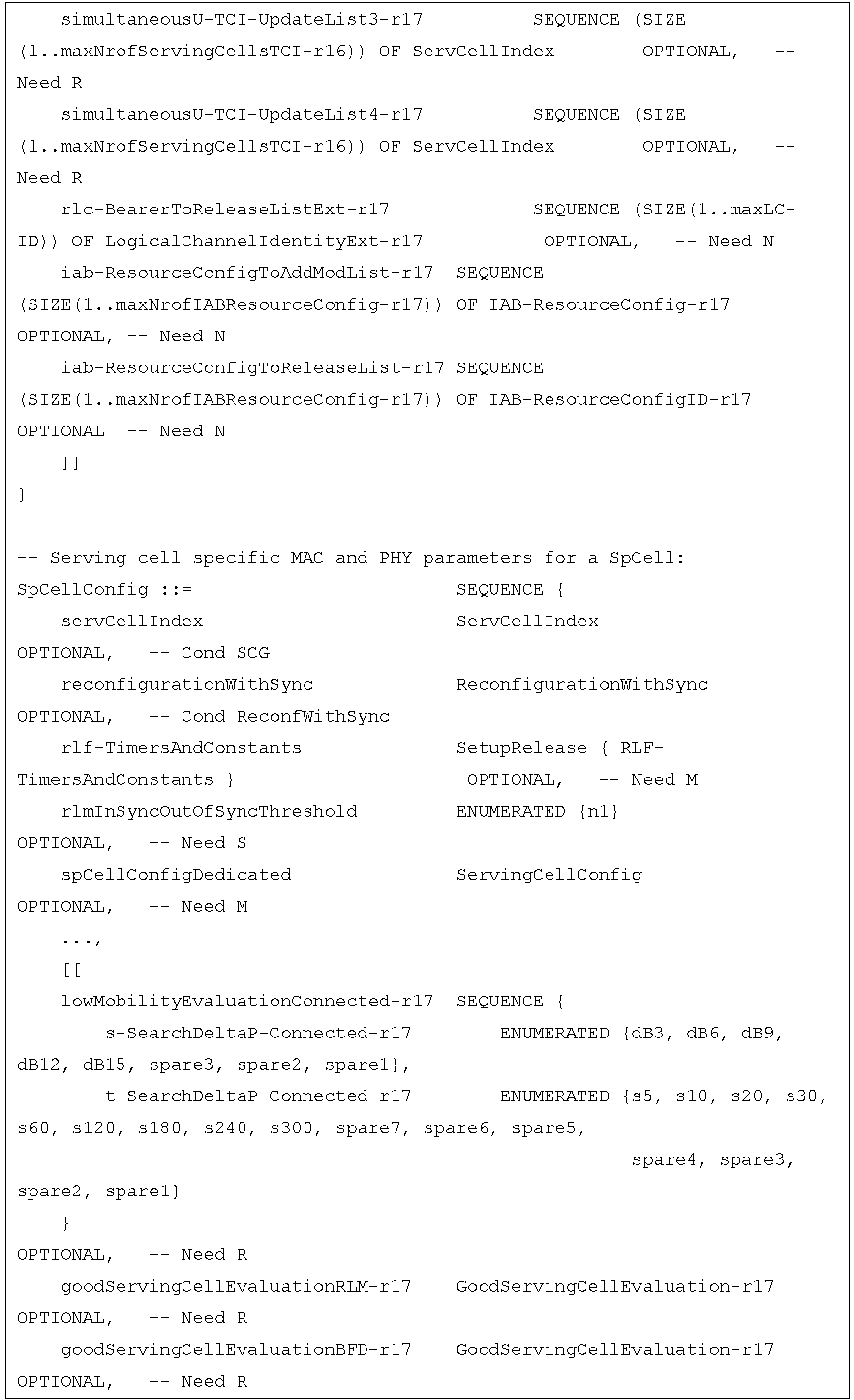

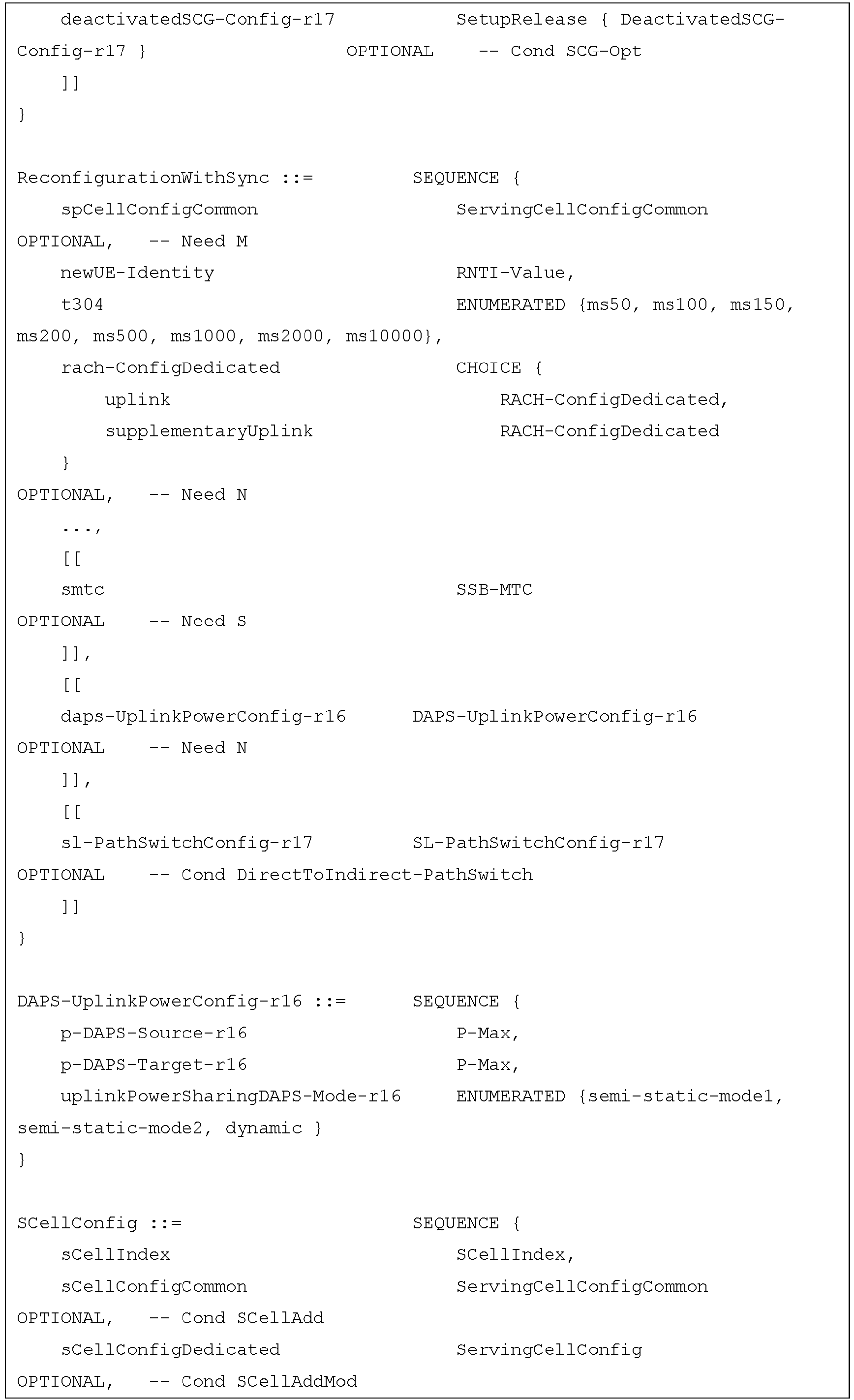

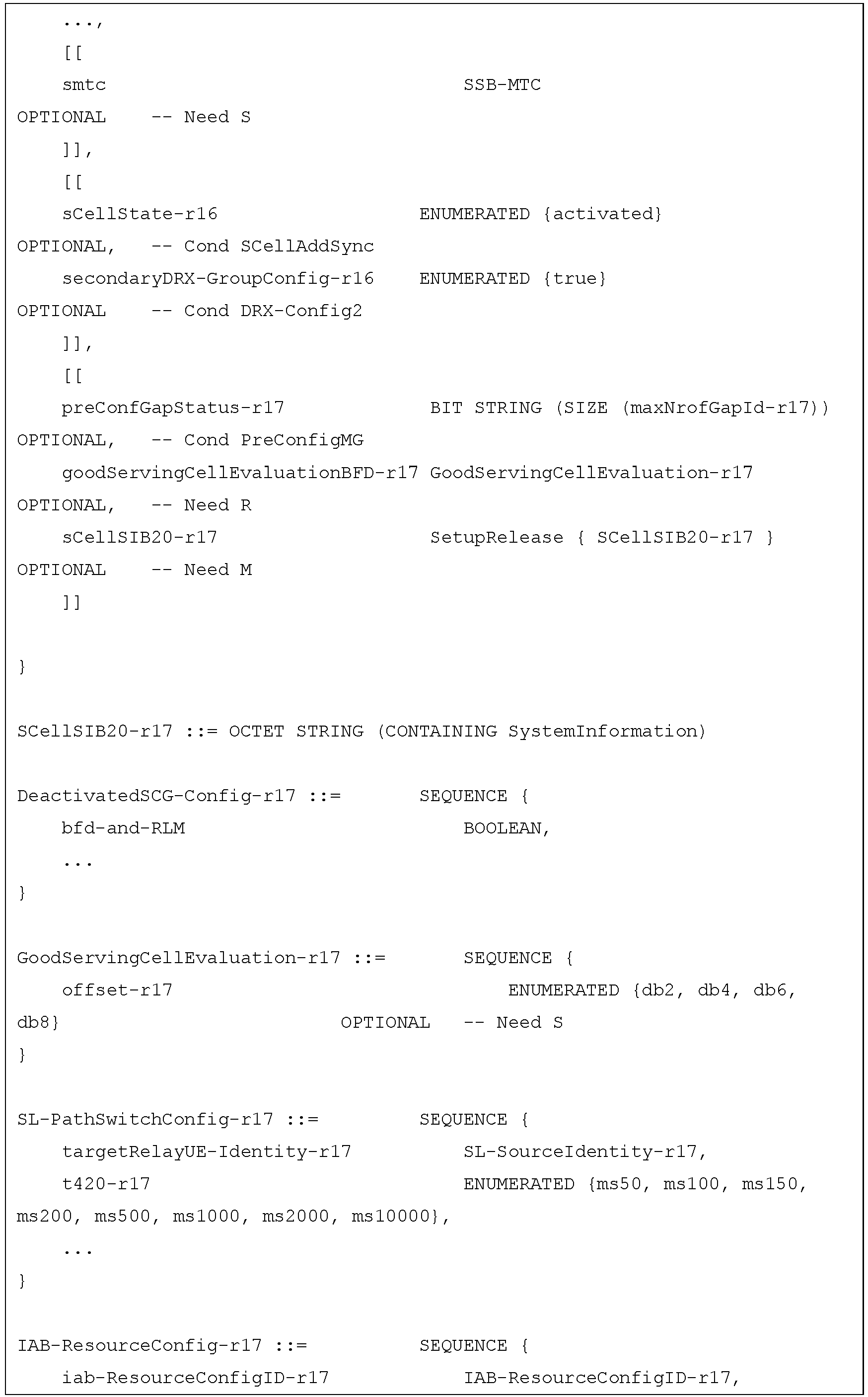

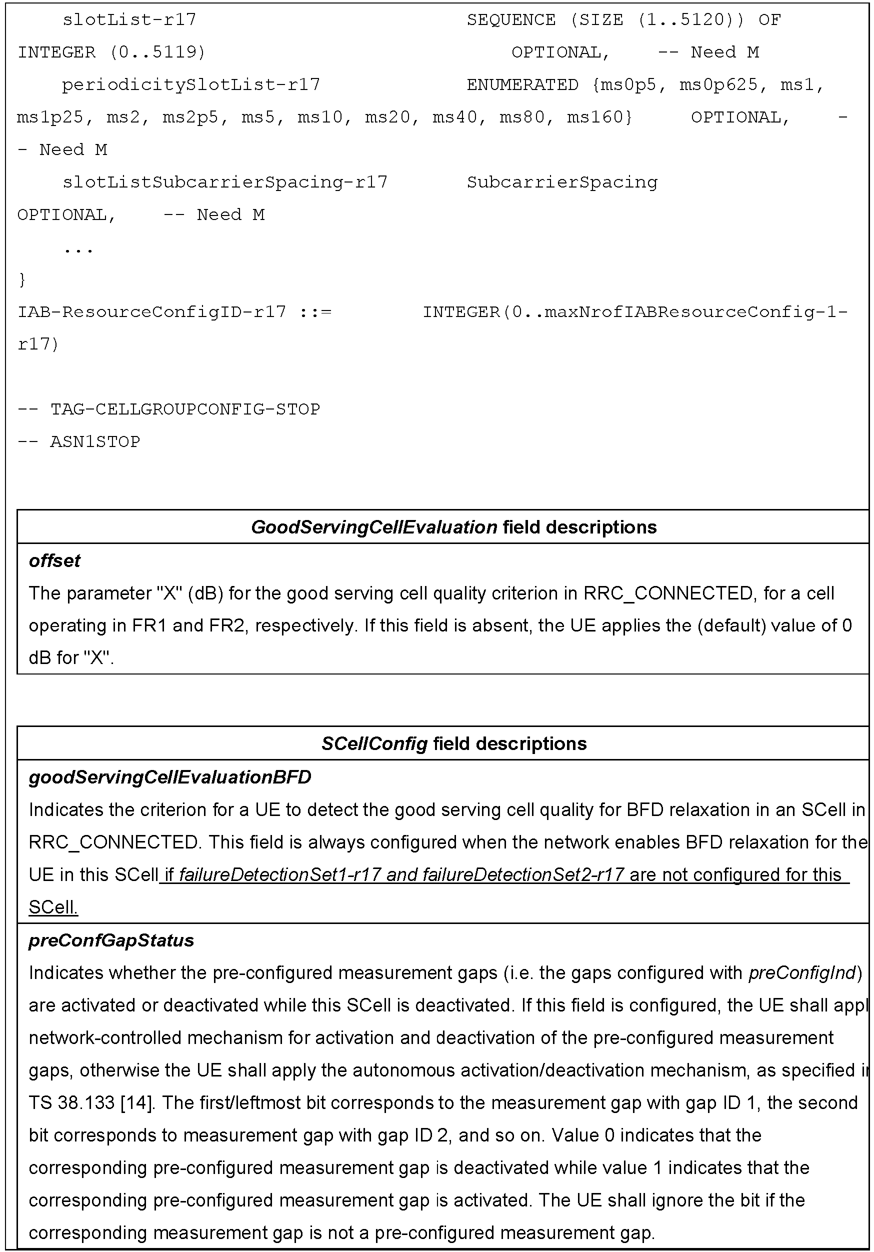

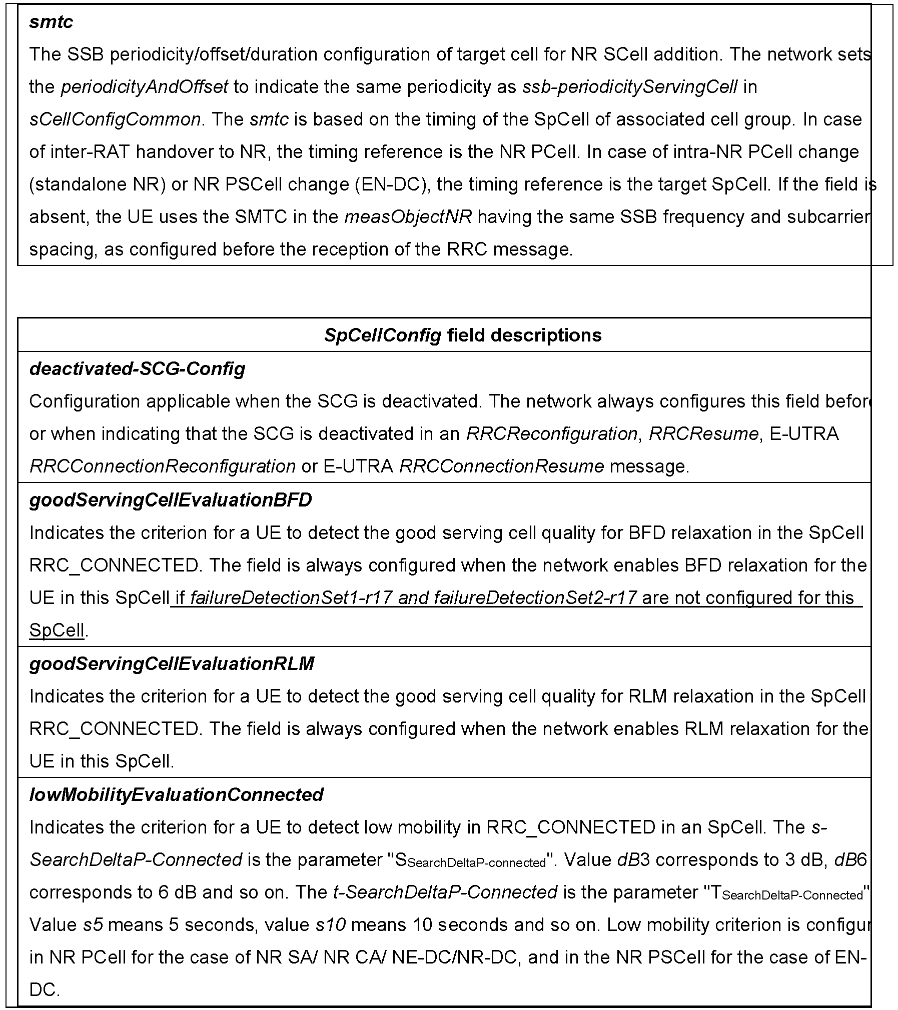

Or, it is replaced with "this SCell/SpCell without mTRP".

For example, it may also be explained in the procedural description of TS38.300 or TS38.331, so as to implement scheme 1-1.

Specifically, it is explained in TS38.300, and a corresponding standard is as shown in Table 5.

**Table 5**

| **11 UE Power Saving** | |
|---|---|
| The PDCCH monitoring activity of the UE in RRC connected mode is governed by DRX, BA, and DCP. | |
| When DRX is configured, the UE does not have to continuously monitor PDCCH. DRX is characterized by the following: | |
| | - **on-duration**: duration that the UE waits for, after waking up, to receive PDCCHs. If the UE successfully decodes a PDCCH, the UE stays awake and starts the inactivity timer; |
| | - **inactivity-timer**: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions); |
| | - **retransmission-timer**: duration until a retransmission can be expected; |
| | - **cycle**: specifies the periodic repetition of the on-duration followed by a possible period of inactivity (see figure 11-1 below); |
| | - **active-time**: total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. |
| | 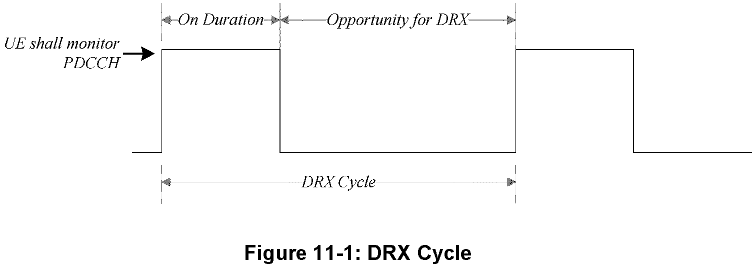 |
| A SL UE can be configured with DRX, in which case, PDCCH providing SL grants can be send to the UE only during its active time. | |
| When BA is configured, the UE only has to monitor PDCCH on the one active BWP i.e. it does not have to monitor PDCCH on the entire DL frequency of the cell. A BWP inactivity timer (independent from the DRX inactivity-timer described above) is used to switch the active BWP to the default one: the timer is restarted upon successful PDCCH decoding and the switch to the default BWP takes place when it expires. | |
| In addition, the UE may be indicated, when configured accordingly, whether it is required to monitor or not the PDCCH during the next occurrence of the on-duration by a DCP monitored on | |
| the active BWP. If the UE does not detect a DCP on the active BWP, it does not monitor the PDCCH during the next occurrence of the on-duration, unless it is explicitly configured to do so in that case. | |
| A UE can only be configured to monitor DCP when connected mode DRX is configured, and at occasion(s) at a configured offset before the on-duration. More than one monitoring occasion can be configured before the on-duration. The UE does not monitor DCP on occasions occurring during active-time, measurement gaps, BWP switching, or when it monitors response for a CFRA preamble transmission for beam failure recovery (see clause 9.2.6), in which case it monitors the PDCCH during the next on-duration. If no DCP is configured in the active BWP, UE follows normal DRX operation. | |
| When CA is configured, DCP is only configured on the PCell. | |
| One DCP can be configured to control PDCCH monitoring during on-duration for one or more UEs independently. | |
| Power saving in RRC_IDLE and RRC_INACTIVE can also be achieved by UE relaxing neighbour cells RRM measurements when it meets the criteria determining it is in low mobility and/or not at cell edge. | |
| UE power saving may be enabled by adapting the DL maximum number of MIMO layers by BWP switching. | |
| Power saving is also enabled during active-time via cross-slot scheduling, which facilitates UE to achieve power saving with the assumption that it won't be scheduled to receive PDSCH, triggered to receive A-CSI or transmit a PUSCH scheduled by the PDCCH until the minimum scheduling offsets K0 and K2. Dynamic adaptation of the minimum scheduling offsets K0 and K2 is controlled by PDCCH. | |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are on-duration and inactivity-timer. | |
| UE power saving in RRC_IDLE/RRC_INACTIVE may be enabled by using RRC_CONNECTED state TRS. These TRSs may allow UEs in RRC_IDLE/RRC_INACTIVE to sleep longer before waking-up for its paging occasion. The TRS configuration is provided in SIB 17. The availability of TRS configured in SIB 17 is indicated by L 1 based TRS availability indication. TRS may also be used by the UEs configured with eDRX. | |
| UE power saving may be enabled by UE relaxing measurements for RLM/BFD. When configured, UE determines whether it is in low mobility status and/or if its serving cell radio link quality is better than a threshold. The configuration for low mobility and good serving cell quality criterion is provided through dedicated signalling. | |
| RLM and BFD relaxation may be enabled/disabled separately. Additionally, RLM relaxation may be enabled/disabled on per-CG basis while the BFD relaxation may be enabled/disabled on per serving cell without mTRP basis. | |
| The UE is only allowed to perform RLM and/or BFD relaxation when relaxed measurement criterion for low mobility and/or for good serving cell quality is met. If configured to do so, the UE shall trigger reporting of its RLM and/or BFD relaxation status through UE assistance information if the UE changes its respective RLM and/or BFD relaxation status while meeting the UE minimum requirements specified in TS 38.133 [13]. | |
| UE power saving may also be achieved through PDCCH skipping mechanism when configured by the network. In this case UE does not monitor PDCCH during the PDCCH skipping duration. | |
| However, in the following cases, UE ignores PDCCH skipping: | |
| | - on all serving cells of the corresponding Cell Group when SR is sent and is pending; |
| | - on SpCell while contention resolution timer is running; |
| | - on SpCell during monitoring of the RAR/MsgB window. |

Or, such a description may be added: "RLM and BFD relaxation may be enabled if there is no serving cell with mTRP." may be replaced with "RLM and BFD relaxation will be disabled if any serving cell with mTRP is configured.".

It is explained in TS38.331, and a corresponding standard is as shown in Table 6.

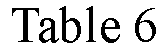

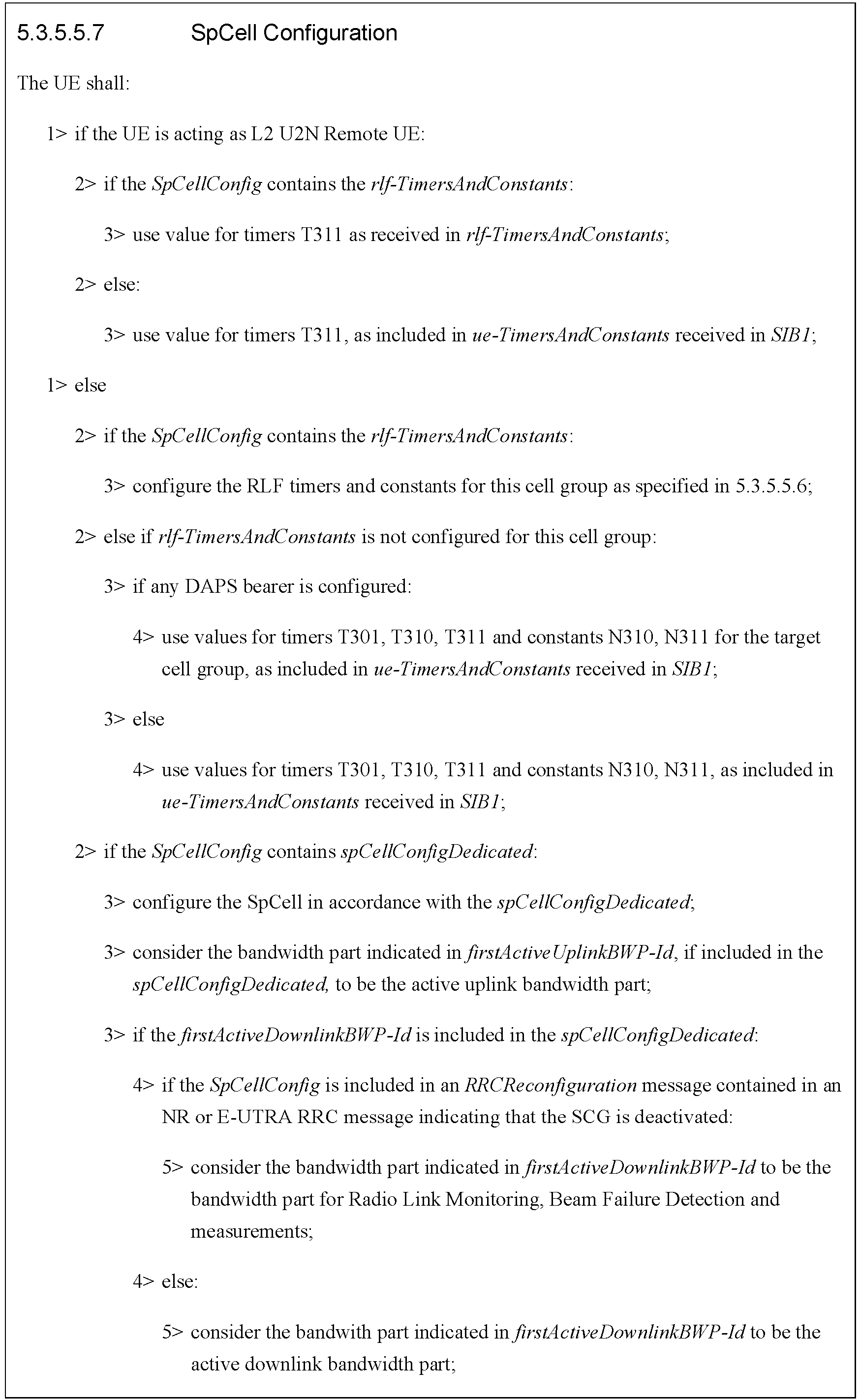

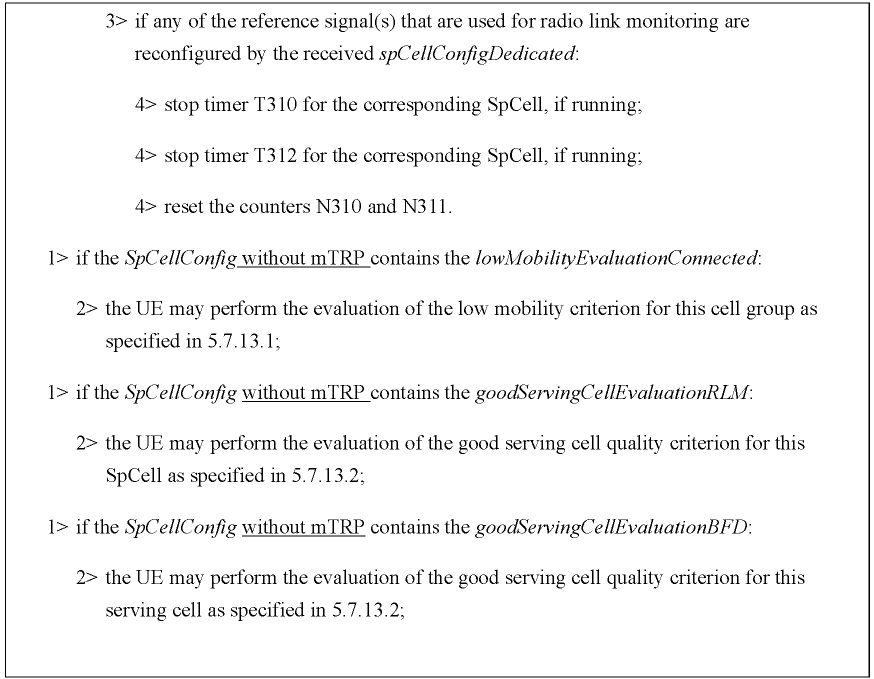

Or, for each of the above parameters, "and if failureDetectionSet1-r17 and failureDetectionSet2-r17 are not configured for this SpCell" is added after "if the SpCellConfig contains the ···".

### Scheme 1-2

In scheme 1-2, the not performing measurement relaxation of beam failure detection (BFD) includes: not evaluating whether a measurement relaxation criterion for beam failure detection (BFD) on the serving cell is satisfied.

In scheme 1-2, the performing measurement relaxation of beam failure detection (BFD) includes: evaluating whether a measurement relaxation criterion for beam failure detection (BFD) on the serving cell is satisfied.

For example, for the serving cell is configured with 2 BFD-RS sets, whether its criterion for relaxation measurement is satisfied is not evaluated, or, whether a criterion for relaxation measurement on the serving cell not configured with 2 BFD-RS sets is only evaluated.

In scheme 1-2, whether the measurement relaxation criterion is satisfied includes whether a low mobility criterion is satisfied, for example, reference may be to 5.7.13.1 of TS38.331; and/or, whether a good cell quality criterion is satisfied, for example, reference may be to 5.7.13.2 of TS38.331.

Whether the low mobility criterion is satisfied includes that: in a case where two or more (e.g. 3) beam failure detection reference signal (BFD-RS) sets are not configured in a cell group where the serving cell is located, whether the low mobility criterion is satisfied is evaluated.

In at least one embodiment of scheme 1-2, scheme 1-2 may be implemented by modifying 5.7.13 in TS 38.331 or TS 38.300.

Specifically, it is explained in TS38.300, and a corresponding standard is as shown in Table 7.

**Table 7**

| **11 UE Power Saving** | |
|---|---|
| The PDCCH monitoring activity of the UE in RRC connected mode is governed by DRX, BA, and DCP. | |
| When DRX is configured, the UE does not have to continuously monitor PDCCH. DRX is characterized by the following: | |
| | - **on-duration**: duration that the UE waits for, after waking up, to receive PDCCHs. If the UE successfully decodes a PDCCH, the UE stays awake and starts the inactivity timer; |
| | - **inactivity-timer**: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions); |
| | - **retransmission-timer**: duration until a retransmission can be expected; |
| | - **cycle**: specifies the periodic repetition of the on-duration followed by a possible period of inactivity (see figure 11-1 below); |
| | - **active-time**: total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. |
| | 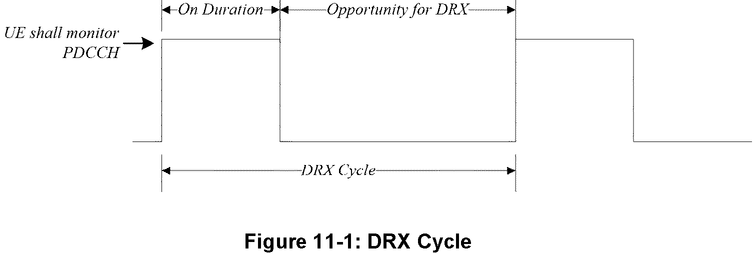 |
| A SL UE can be configured with DRX, in which case, PDCCH providing SL grants can be send to the UE only during its active time. | |
| When BA is configured, the UE only has to monitor PDCCH on the one active BWP i.e. it does not have to monitor PDCCH on the entire DL frequency of the cell. A BWP inactivity timer (independent from the DRX inactivity-timer described above) is used to switch the active BWP to the default one: the timer is restarted upon successful PDCCH decoding and the switch to the default BWP takes place when it expires. | |
| In addition, the UE may be indicated, when configured accordingly, whether it is required to monitor or not the PDCCH during the next occurrence of the on-duration by a DCP monitored on | |
| the active BWP. If the UE does not detect a DCP on the active BWP, it does not monitor the PDCCH during the next occurrence of the on-duration, unless it is explicitly configured to do so in that case. | |
| A UE can only be configured to monitor DCP when connected mode DRX is configured, and at occasion(s) at a configured offset before the on-duration. More than one monitoring occasion can be configured before the on-duration. The UE does not monitor DCP on occasions occurring during active-time, measurement gaps, BWP switching, or when it monitors response for a CFRA preamble transmission for beam failure recovery (see clause 9.2.6), in which case it monitors the PDCCH during the next on-duration. If no DCP is configured in the active BWP, UE follows normal DRX operation. | |
| When CA is configured, DCP is only configured on the PCell. | |
| One DCP can be configured to control PDCCH monitoring during on-duration for one or more UEs independently. | |
| Power saving in RRC_IDLE and RRC_INACTIVE can also be achieved by UE relaxing neighbour cells RRM measurements when it meets the criteria determining it is in low mobility and/or not at cell edge. | |
| UE power saving may be enabled by adapting the DL maximum number of MIMO layers by BWP switching. | |
| Power saving is also enabled during active-time via cross-slot scheduling, which facilitates UE to achieve power saving with the assumption that it won't be scheduled to receive PDSCH, triggered to receive A-CSI or transmit a PUSCH scheduled by the PDCCH until the minimum scheduling offsets K0 and K2. Dynamic adaptation of the minimum scheduling offsets K0 and K2 is controlled by PDCCH. | |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are on-duration and inactivity-timer. | |
| UE power saving in RRC_IDLE/RRC_INACTIVE may be enabled by using RRC_CONNECTED state TRS. These TRSs may allow UEs in RRC _IDLE/RRC_INACTIVE to sleep longer before waking-up for its paging occasion. The TRS configuration is provided in SIB 17. The availability of TRS configured in SIB 17 is indicated by L 1 based TRS availability indication. TRS may also be used by the UEs configured with eDRX. | |
| UE power saving may be enabled by UE relaxing measurements for RLM/BFD. When configured for serving cell without mTRP, UE determines whether it is in low mobility status and/or if its serving cell radio link quality is better than a threshold. The configuration for low mobility and good serving cell quality criterion is provided through dedicated signalling. | |
| RLM and BFD relaxation may be enabled/disabled separately. Additionally, RLM relaxation may be enabled/disabled on per-CG basis while the BFD relaxation may be enabled/disabled on per serving cell basis. | |
| The UE is only allowed to perform RLM and/or BFD relaxation when relaxed measurement criterion for low mobility and/or for good serving cell quality is met. If configured to do so, the UE shall trigger reporting of its RLM and/or BFD relaxation status through UE assistance information if the UE changes its respective RLM and/or BFD relaxation status while meeting the UE minimum requirements specified in TS 38.133 [13]. | |
| UE power saving may also be achieved through PDCCH skipping mechanism when configured by the network. In this case UE does not monitor PDCCH during the PDCCH skipping duration. However, in the following cases, UE ignores PDCCH skipping: | |
| | - on all serving cells of the corresponding Cell Group when SR is sent and is pending; |
| | - on SpCell while contention resolution timer is running; |
| | - on SpCell during monitoring of the RAR/MsgB window. |

It is explained in the process description of TS38.331, and a corresponding standard is as shown in Table 8.

**Table 8**

| **5.7.13 RLM/BFD relaxation** |
|---|
| The UE is only allowed to perform RLM and/or BFD relaxation according to requirements specified in TS 38.133 [14] when relaxed measurement criterion for low mobility and/or for good serving cell quality is met for the serving cell without mTRP |

Or, it is replaced with "if failureDetectionSet1-r17 and failureDetectionSet2-r17 are not included for the serving cell".

### Scheme 1-3

In scheme 1-3, for the serving cell not configured with two or more beam failure detection reference signal (BFD-RS) sets, when the low mobility criterion for beam failure detection (BFD) is satisfied, the terminal equipment is allowed to perform measurement relaxation of beam failure detection (BFD).

For example, when the low mobility criterion is satisfied, the terminal equipment is allowed to perform measurement relaxation of BFD on the serving cell not configured with two or more BFD-RS sets.

In a specific example, TS 38.300 may be modified, which is as shown in Table 9.

**Table 9**

| | |
|---|---|
| 11 UE Power Saving | |
| The PDCCH monitoring activity of the UE in RRC connected mode is governed by DRX, BA, and DCP. | |
| When DRX is configured, the UE does not have to continuously monitor PDCCH. DRX is characterized by the following: | |
| | - **on-duration**: duration that the UE waits for, after waking up, to receive PDCCHs. If the UE successfully decodes a PDCCH, the UE stays awake and starts the inactivity timer; |
| | - **inactivity-timer**: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions); |
| | - **retransmission-timer**: duration until a retransmission can be expected; |
| | - **cycle**: specifies the periodic repetition of the on-duration followed by a possible period of inactivity (see figure 11-1 below); |
| | - **active-time**: total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. |
| | 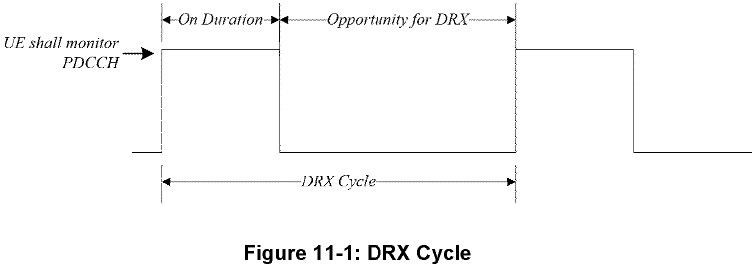 |
| A SL UE can be configured with DRX, in which case, PDCCH providing SL grants can be send to the UE only during its active time. | |
| When BA is configured, the UE only has to monitor PDCCH on the one active BWP i.e. it does not have to monitor PDCCH on the entire DL frequency of the cell. A BWP inactivity timer (independent from the DRX inactivity-timer described above) is used to switch the active BWP to the default one: the timer is restarted upon successful PDCCH decoding and the switch to the default BWP takes place when it expires. | |
| In addition, the UE may be indicated, when configured accordingly, whether it is required to monitor or not the PDCCH during the next occurrence of the on-duration by a DCP monitored on the active BWP. If the UE | |
| does not detect a DCP on the active BWP, it does not monitor the PDCCH during the next occurrence of the on-duration, unless it is explicitly configured to do so in that case. | |
| A UE can only be configured to monitor DCP when connected mode DRX is configured, and at occasion(s) at a configured offset before the on-duration. More than one monitoring occasion can be configured before the on-duration. The UE does not monitor DCP on occasions occurring during active-time, measurement gaps, BWP switching, or when it monitors response for a CFRA preamble transmission for beam failure recovery (see clause 9.2.6), in which case it monitors the PDCCH during the next on-duration. If no DCP is configured in the active BWP, UE follows normal DRX operation. | |
| When CA is configured, DCP is only configured on the PCell. | |
| One DCP can be configured to control PDCCH monitoring during on-duration for one or more UEs independently. | |
| Power saving in RRC_IDLE and RRC _INACTIVE can also be achieved by UE relaxing neighbour cells RRM measurements when it meets the criteria determining it is in low mobility and/or not at cell edge. | |
| UE power saving may be enabled by adapting the DL maximum number of MIMO layers by BWP switching. | |
| Power saving is also enabled during active-time via cross-slot scheduling, which facilitates UE to achieve power saving with the assumption that it won't be scheduled to receive PDSCH, triggered to receive A-CSI or transmit a PUSCH scheduled by the PDCCH until the minimum scheduling offsets K0 and K2. Dynamic adaptation of the minimum scheduling offsets K0 and K2 is controlled by PDCCH. | |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are on-duration and inactivity-timer. | |
| UE power saving in RRC_IDLE/RRC_INACTIVE may be enabled by using RRC_CONNECTED state TRS. These TRSs may allow UEs in RRC_IDLE/RRC_INACTIVE to sleep longer before waking-up for its paging occasion. The TRS configuration is provided in SIB17. The availability of TRS configured in SIB17 is indicated by L 1 based TRS availability indication. TRS may also be used by the UEs configured with eDRX. | |
| UE power saving may be enabled by UE relaxing measurements for RLM/BFD. When configured, UE determines whether it is in low mobility status and/or if its serving cell radio link quality is better than a threshold. The configuration for low mobility and good serving cell quality criterion is provided through dedicated signalling. | |
| RLM and BFD relaxation may be enabled/disabled separately. Additionally, RLM relaxation may be enabled/disabled on per-CG basis while the BFD relaxation may be enabled/disabled on per serving cell basis. | |
| The UE is only allowed to perform RLM and/or BFD relaxation on serving cell without mTRP when relaxed measurement criterion for low mobility and/or for good serving cell quality is met. If configured to do so, the UE shall trigger reporting of its RLM and/or BFD relaxation status through UE assistance information if the | |
| UE changes its respective RLM and/or BFD relaxation status while meeting the UE minimum requirements specified in TS 38.133 [13]. | |
| UE power saving may also be achieved through PDCCH skipping mechanism when configured by the network. In this case UE does not monitor PDCCH during the PDCCH skipping duration. However, in the following cases, UE ignores PDCCH skipping: | |
| | - on all serving cells of the corresponding Cell Group when SR is sent and is pending; |
| | - on SpCell while contention resolution timer is running; |
| | - on SpCell during monitoring of the RAR/MsgB window. |

### Embodiments of a second aspect

The embodiments of the second aspect this disclosure provide a method for measurement relaxation, applicable to a terminal equipment, such as the terminal equipment 102 in FIG. 1.

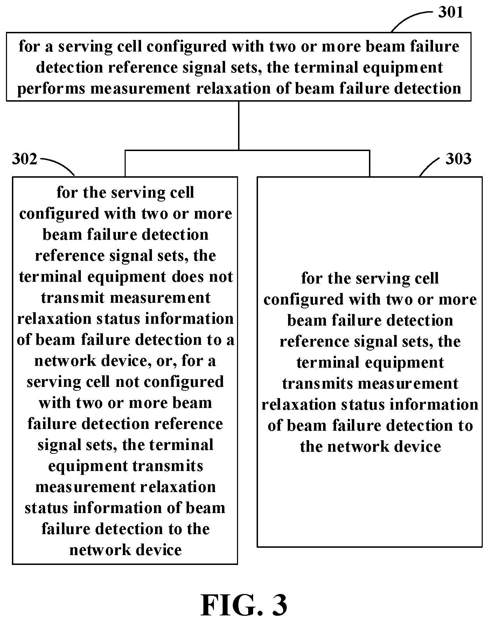

FIG. 3 is a schematic diagram of the method for measurement relaxation of the embodiments of the second aspect. As shown in FIG. 3, the method for measurement relaxation includes:
operation 301: for a serving cell configured with two or more beam failure detection reference signal (BFD-RS) sets, the terminal equipment performs measurement relaxation of beam failure detection (BFD).

In this disclosure, based on operation 301, the terminal equipment may perform at least one of the following operations 302 or 303.

Operation 302: for the serving cell configured with two or more beam failure detection reference signal (BFD-RS) sets, the terminal equipment does not transmit measurement relaxation status information of beam failure detection (BFD) to a network device, or, for a serving cell not configured with two or more beam failure detection reference signal (BFD-RS) sets, the terminal equipment transmits measurement relaxation status information of beam failure detection (BFD) to the network device.

For example, for the serving cell configured with 2 BFD-RS sets, the BFD measurement relaxation status is not reported; or, only for the serving cell not configured 2 BFD-RS sets, the BFD measurement relaxation status is reported.

In the case where operation 302 is executed, overhead of the terminal equipment may be saved.

In operation 302, the terminal equipment not transmitting measurement relaxation status information of beam failure detection (BFD) to a network device includes at least one of the following operations:
not triggering to report the measurement relaxation status information via a terminal equipment assistance information procedure;
in the triggered terminal equipment assistance information procedure, not including the measurement relaxation status information in the terminal equipment assistance information; or
in the triggered terminal equipment assistance information procedure, setting a value of a bit in the terminal equipment assistance information corresponding to the serving cell to be a first value, the first value being, for example, 0.

Operation 303: for the serving cell configured with two or more beam failure detection reference signal (BFD-RS) sets, the terminal equipment transmits measurement relaxation status information of beam failure detection (BFD) to the network device.

For example, for the serving cell configured with 2 BFD-RS sets, the BFD measurement relaxation status is reported.

In the case where operation 303 is executed, the network device is able to learn a situation of BFD measurement relaxation of the terminal equipment.

In at least one embodiment, operation 302 may be implemented in at least one of the following implementations A or B.

### Implementation A

In at least one embodiment of implementation A, the not transmitting measurement relaxation status information of beam failure detection (BFD) by the terminal equipment to a network device includes that: the terminal equipment is not configured to transmit the measurement relaxation status information of beam failure detection (BFD) to the network device.

For example, for the serving cell configured with 2 BFD-RS sets, the terminal equipment is configured by the network device not to transmit the BFD measurement relaxation status to the network device.

Or, in the at least one embodiment, for the serving cell not configured with two or more beam failure detection reference signal (BFD-RS) sets, the transmitting measurement relaxation status information of beam failure detection (BFD) by the terminal equipment to the network device includes that: the terminal equipment is configured to transmit the measurement relaxation status information of beam failure detection (BFD) to the network device.

For example, only for the serving cell not configured with two BFD-RS sets, the terminal equipment is configured by the network device to transmit the BFD measurement relaxation status to the network device.

In the at least one embodiment, TS 38.300 may be modified, or presence condition or field description of a third parameter (such as bfd-RelaxationReportingConfig) related to beam failure detection relaxation reporting configuration may be modified, so as to carry out implementation A. When the beam failure detection reference signal (BFD-RS) sets are reconfigured, the terminal equipment stops a running timer related to the serving cell, such as T346j or T346k.

Specifically, for modifying TS 38.300, a corresponding standard may be as shown in Table 10.

**Table 10**

| | |
|---|---|
| 11 UE Power Saving | |
| The PDCCH monitoring activity of the UE in RRC connected mode is governed by DRX, BA, and DCP. | |
| When DRX is configured, the UE does not have to continuously monitor PDCCH. DRX is characterized by the following: | |
| | - **on-duration**: duration that the UE waits for, after waking up, to receive PDCCHs. If the UE successfully decodes a PDCCH, the UE stays awake and starts the inactivity timer; |
| | - **inactivity-timer**: duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions); |
| | - **retransmission-timer**: duration until a retransmission can be expected; |
| | - **cycle**: specifies the periodic repetition of the on-duration followed by a possible period of inactivity (see figure 11-1 below); |
| | - **active-time**: total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. |
| | 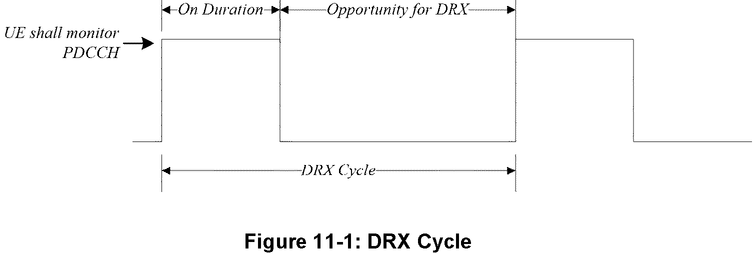 |
| A SL UE can be configured with DRX, in which case, PDCCH providing SL grants can be send to the UE only during its active time. | |
| When BA is configured, the UE only has to monitor PDCCH on the one active BWP i.e. it does not have to monitor PDCCH on the entire DL frequency of the cell. A BWP inactivity timer (independent from the DRX inactivity-timer described above) is used to switch the active BWP to the default one: the timer is restarted upon successful PDCCH decoding and the switch to the default BWP takes place when it expires. | |
| In addition, the UE may be indicated, when configured accordingly, whether it is required to monitor or not the PDCCH during the next occurrence of the on-duration by a DCP monitored on | |
| the active BWP. If the UE does not detect a DCP on the active BWP, it does not monitor the PDCCH during the next occurrence of the on-duration, unless it is explicitly configured to do so in that case. | |
| A UE can only be configured to monitor DCP when connected mode DRX is configured, and at occasion(s) at a configured offset before the on-duration. More than one monitoring occasion can be configured before the on-duration. The UE does not monitor DCP on occasions occurring during active-time, measurement gaps, BWP switching, or when it monitors response for a CFRA preamble transmission for beam failure recovery (see clause 9.2.6), in which case it monitors the PDCCH during the next on-duration. If no DCP is configured in the active BWP, UE follows normal DRX operation. | |
| When CA is configured, DCP is only configured on the PCell. | |
| One DCP can be configured to control PDCCH monitoring during on-duration for one or more UEs independently. | |
| Power saving in RRC_IDLE and RRC_INACTIVE can also be achieved by UE relaxing neighbour cells RRM measurements when it meets the criteria determining it is in low mobility and/or not at cell edge. | |
| UE power saving may be enabled by adapting the DL maximum number of MIMO layers by BWP switching. | |
| Power saving is also enabled during active-time via cross-slot scheduling, which facilitates UE to achieve power saving with the assumption that it won't be scheduled to receive PDSCH, triggered to receive A-CSI or transmit a PUSCH scheduled by the PDCCH until the minimum scheduling offsets K0 and K2. Dynamic adaptation of the minimum scheduling offsets K0 and K2 is controlled by PDCCH. | |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are on-duration and inactivity-timer. | |
| UE power saving in RRC_IDLE/RRC_INACTIVE may be enabled by using RRC_CONNECTED state TRS. These TRSs may allow UEs in RRC_IDLE/RRC_INACTIVE to sleep longer before waking-up for its paging occasion. The TRS configuration is provided in SIB 17. The availability of TRS configured in SIB 17 is indicated by L 1 based TRS availability indication. TRS may also be used by the UEs configured with eDRX. | |
| UE power saving may be enabled by UE relaxing measurements for RLM/BFD. When configured, UE determines whether it is in low mobility status and/or if its serving cell radio link quality is better than a threshold. The configuration for low mobility and good serving cell quality criterion is provided through dedicated signalling. | |
| RLM and BFD relaxation may be enabled/disabled separately. Additionally, RLM relaxation may be enabled/disabled on per-CG basis while the BFD relaxation may be enabled/disabled on per serving cell basis. | |
| The UE is only allowed to perform RLM and/or BFD relaxation when relaxed measurement criterion for low mobility and/or for good serving cell quality is met. If configured to do so, the UE shall trigger reporting of its RLM and/or BFD relaxation status through UE assistance information if the UE changes its respective RLM and/or BFD relaxation status while meeting the UE minimum requirements specified in TS 38.133 [13]. The reporting RLM and/or BFD relaxation status will not be configured for the serving cell with mTRP. | |
| UE power saving may also be achieved through PDCCH skipping mechanism when configured by the network. In this case UE does not monitor PDCCH during the PDCCH skipping duration. | |
| However, in the following cases, UE ignores PDCCH skipping: | |
| | - on all serving cells of the corresponding Cell Group when SR is sent and is pending; |
| | - on SpCell while contention resolution timer is running; |
| | - on SpCell during monitoring of the RAR/MsgB window. |

Or, modification is made to the above contents: "If configured to do so for the serving cell without mTRP, the UE shall trigger reporting of its RLM and/or BFD relaxation status through UE assistance information if the UE changes its respective RLM and/or BFD relaxation status while meeting the UE minimum requirements specified in TS 38.133 [13].".

In modifying TS38.331, presence condition of bfd-RelaxationReportingConfig is modified, and a corresponding standard is as shown in table 11.

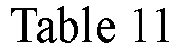

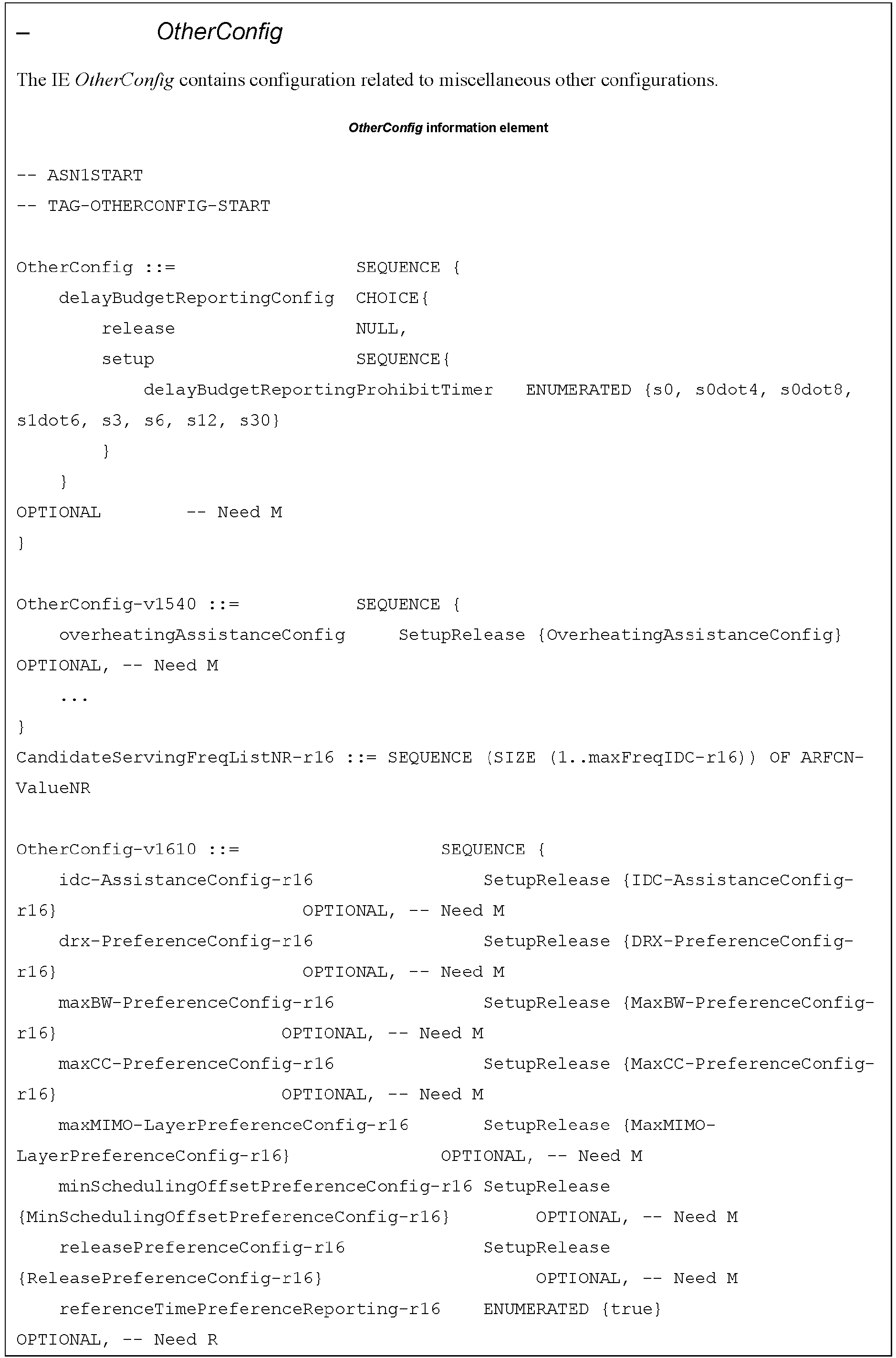

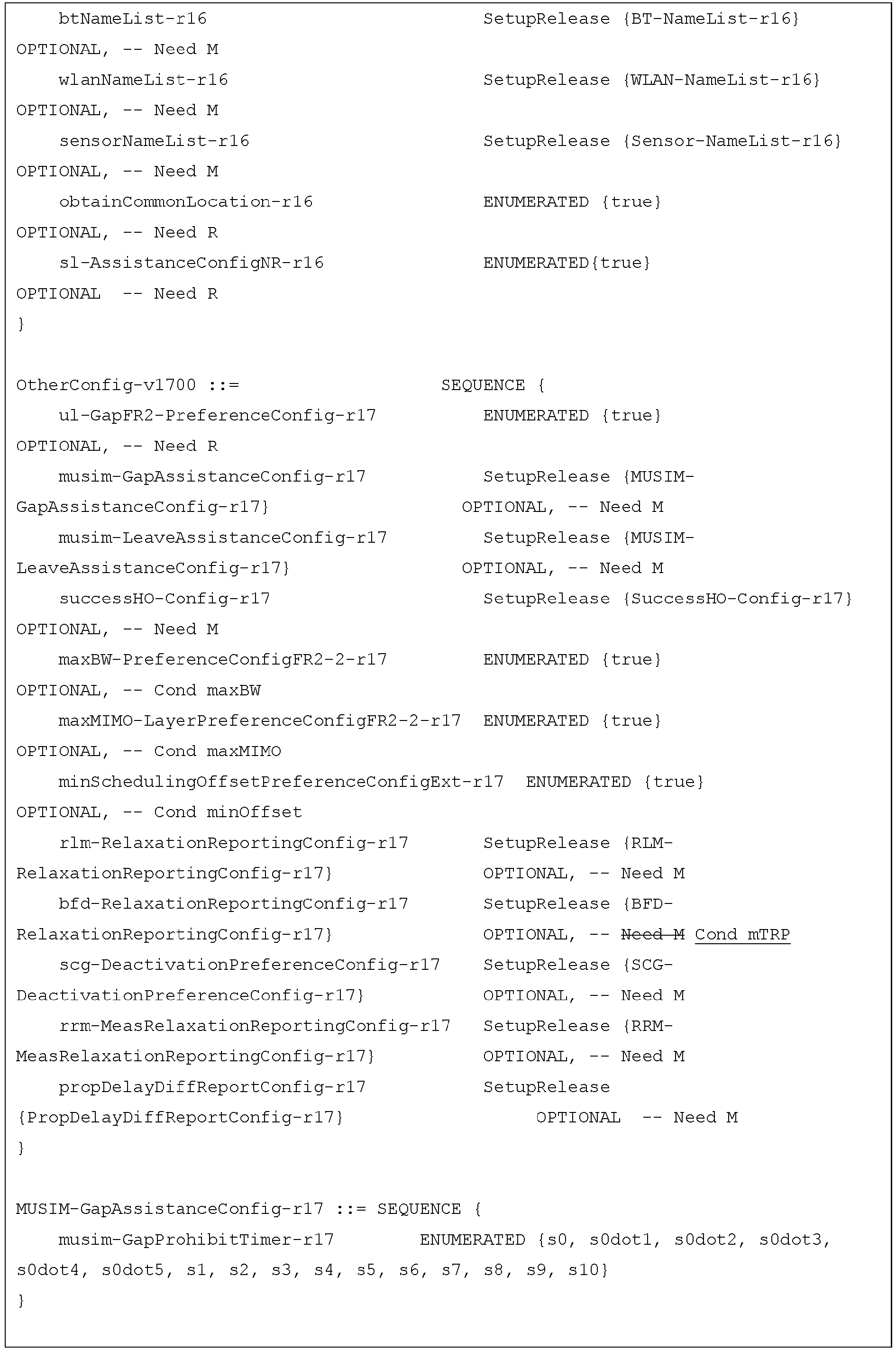

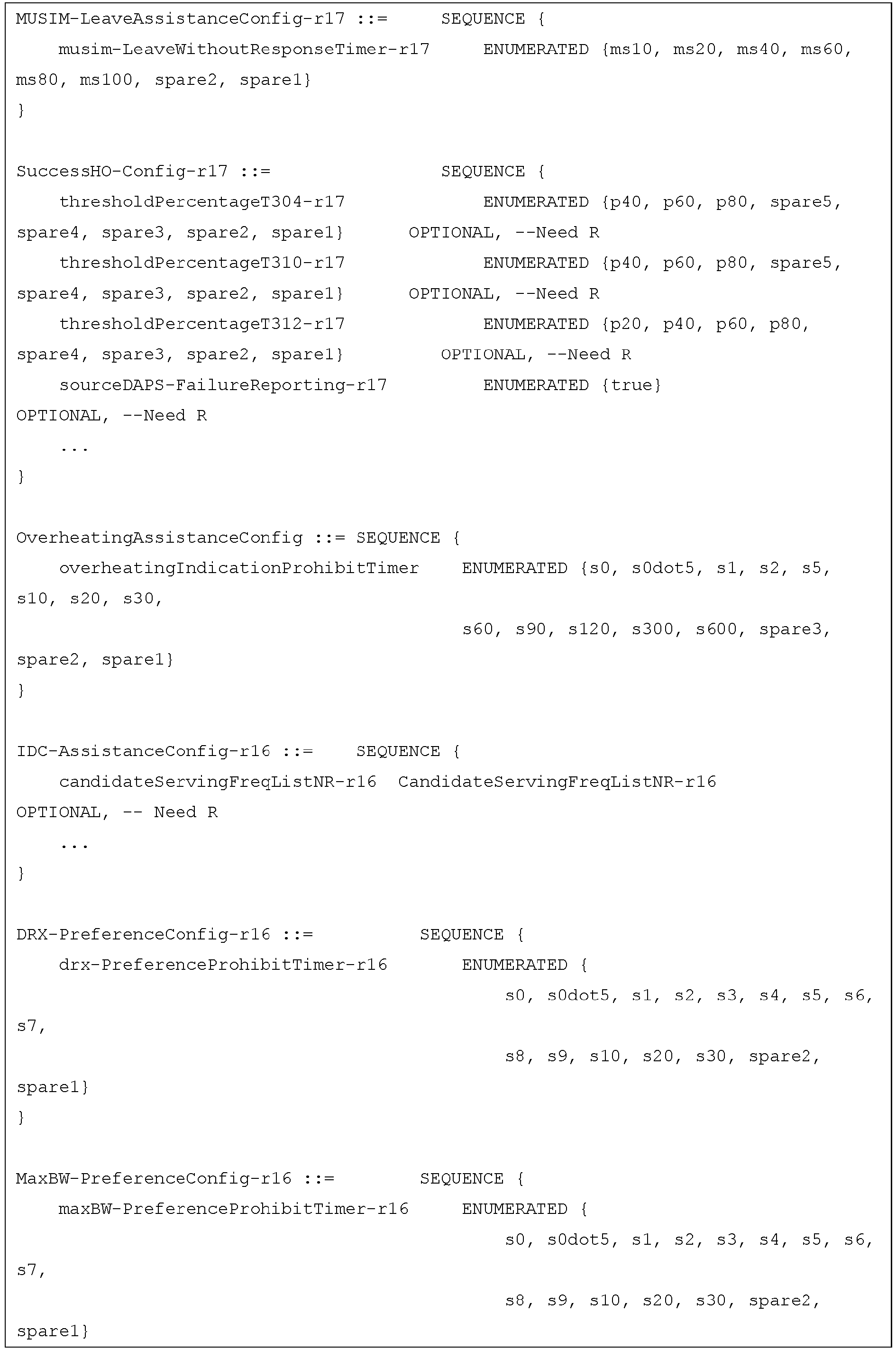

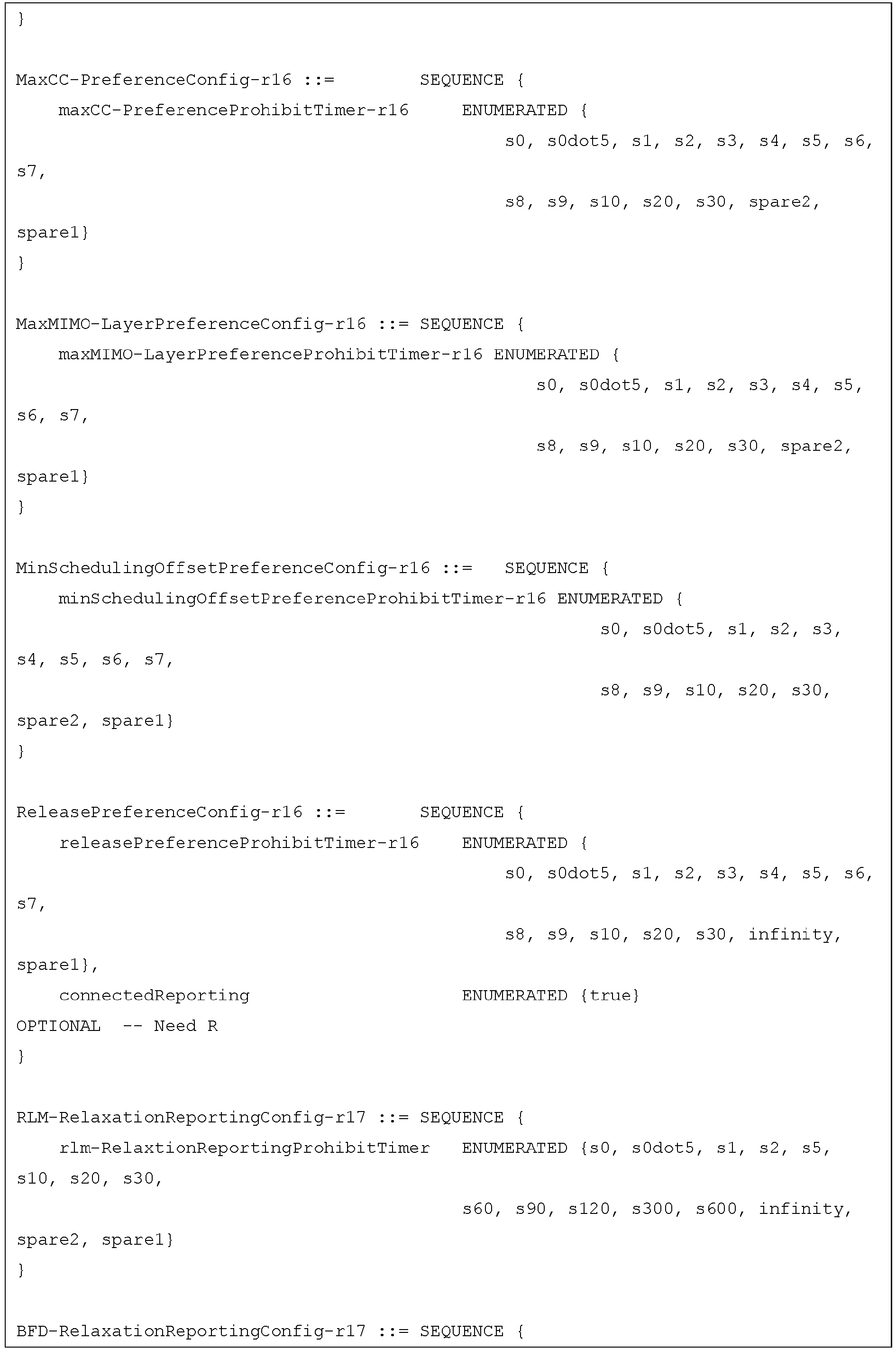

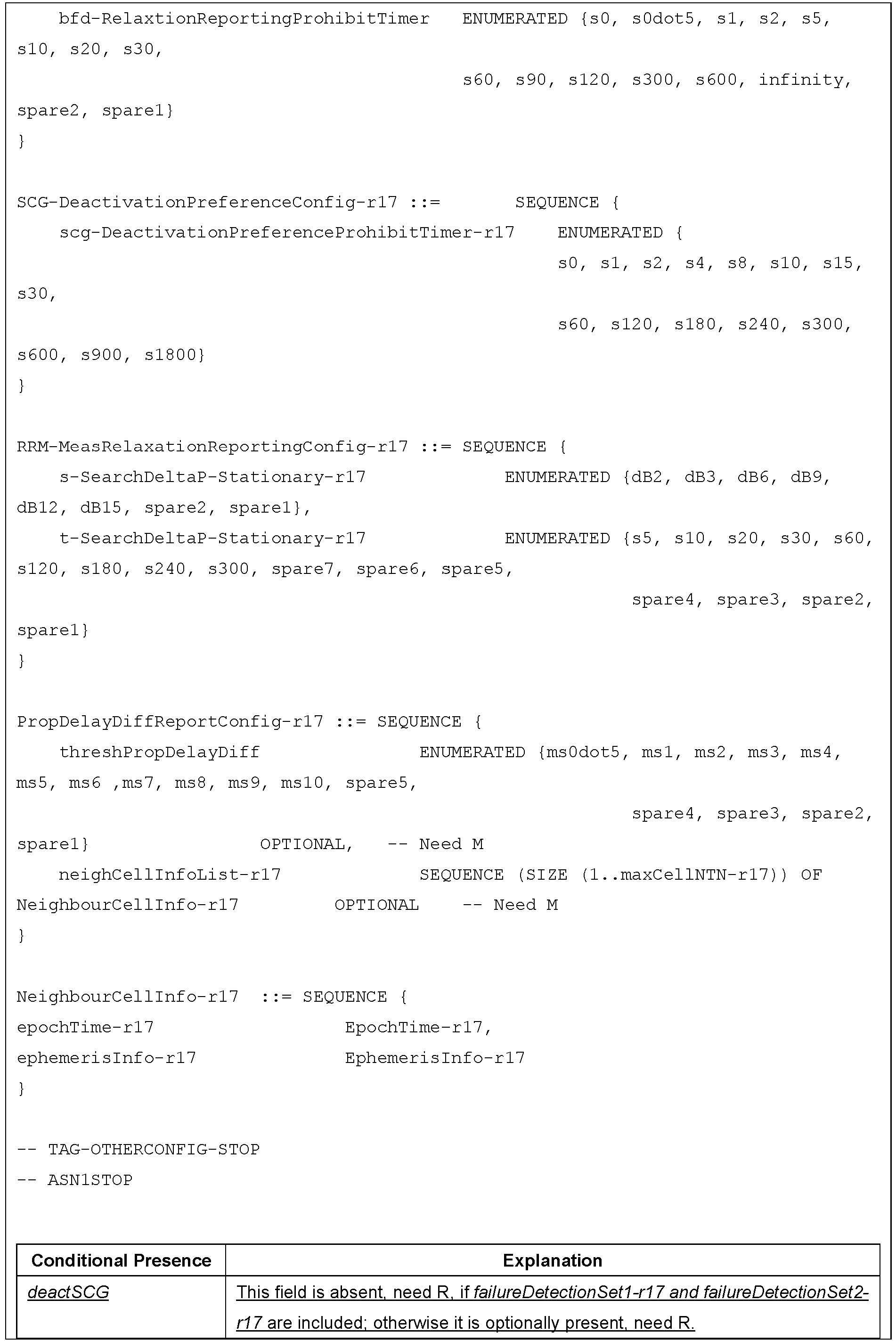

Or, the above "failureDetectionSet1-r17 and failureDetectionSet2-r17 are included" is replaced with "2 BFD-RS set are configured";
or, the Explanation part is modified into "The field is optionally present, Need R if failureDetectionSet1-r17 and failureDetectionSet2-r17 are not configured; otherwise it is absent, Need R.".

A field description of bfd-RelaxationReportingConfig is modified, and a corresponding standard is as shown in table 12.

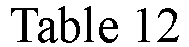

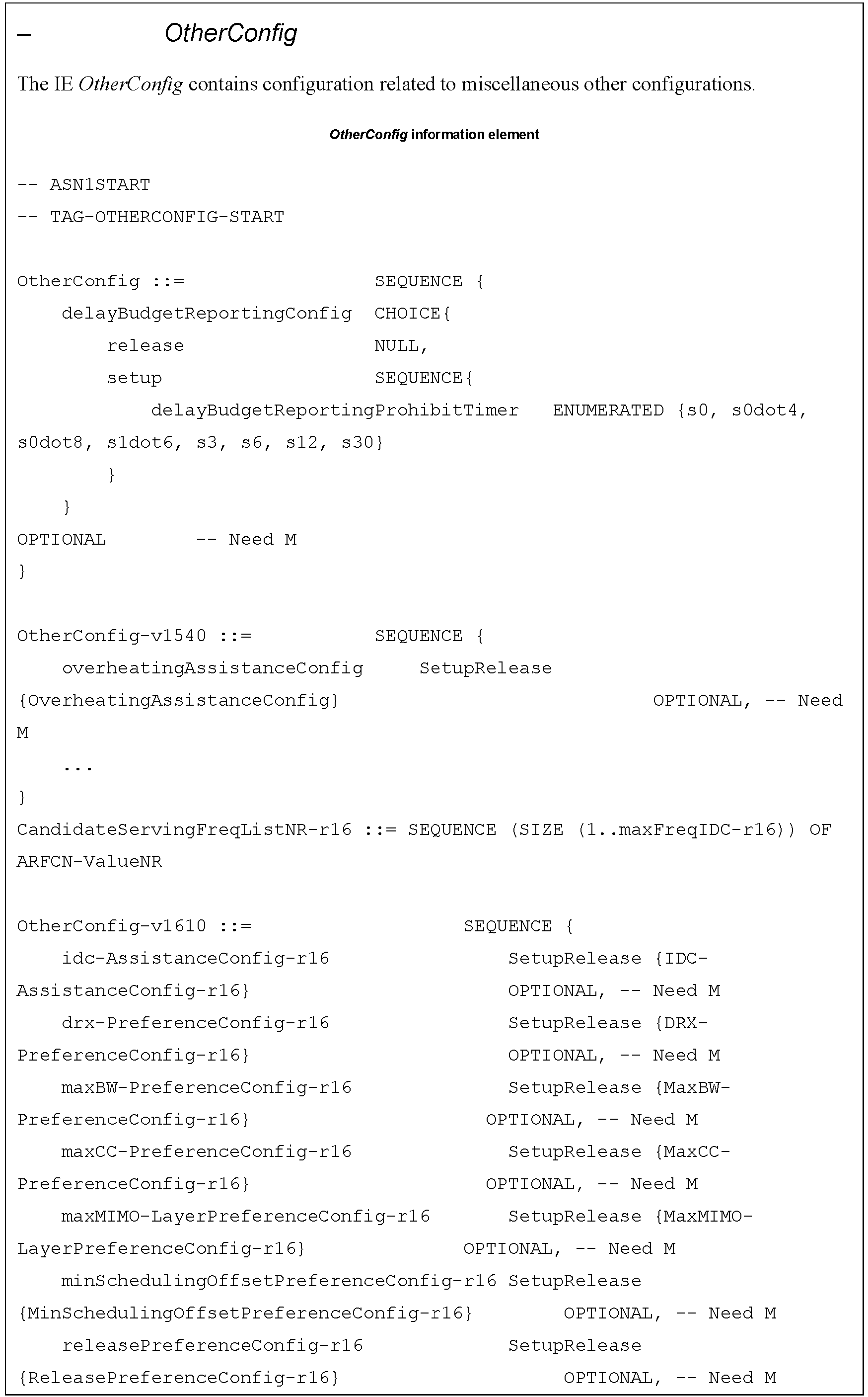

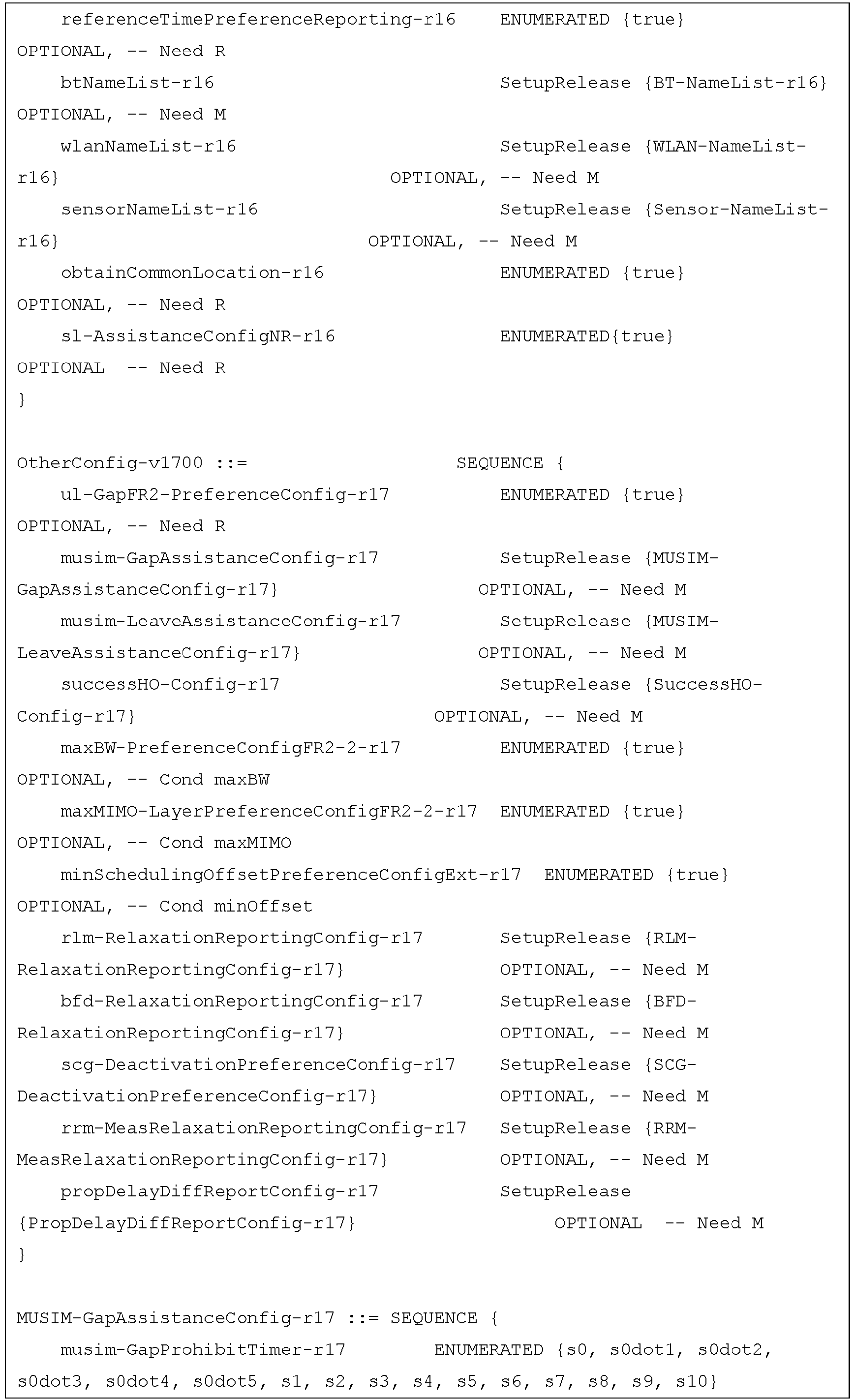

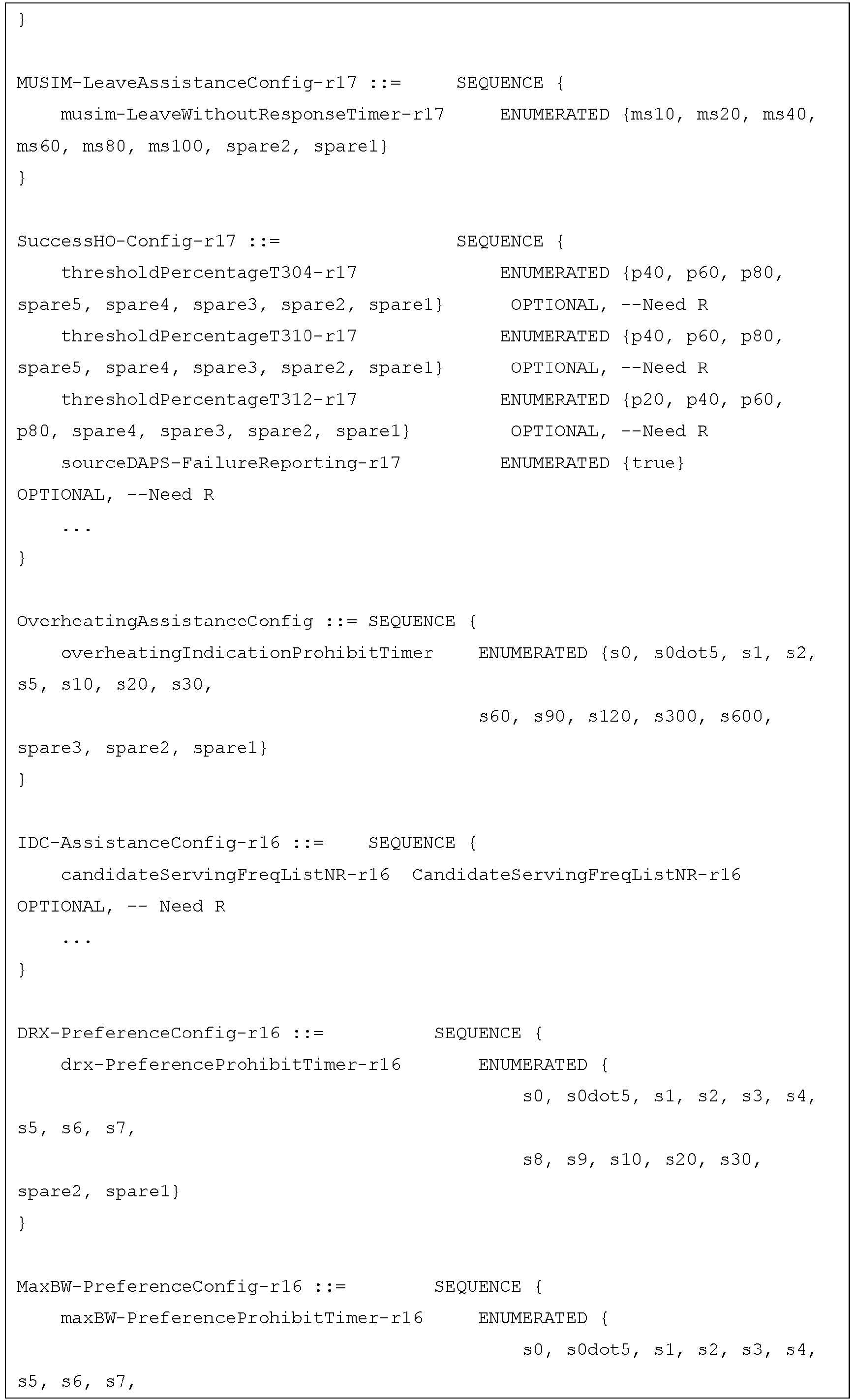

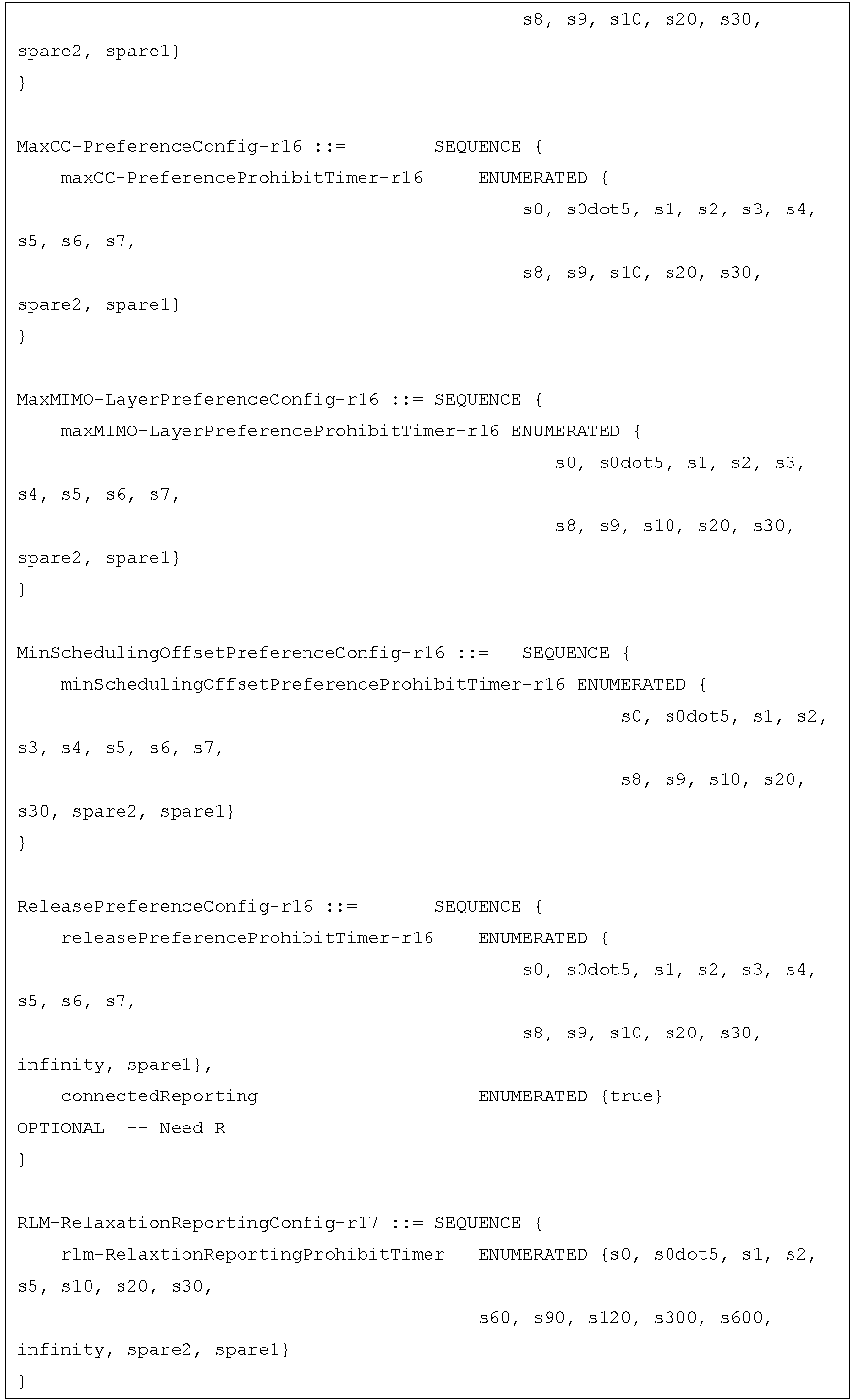

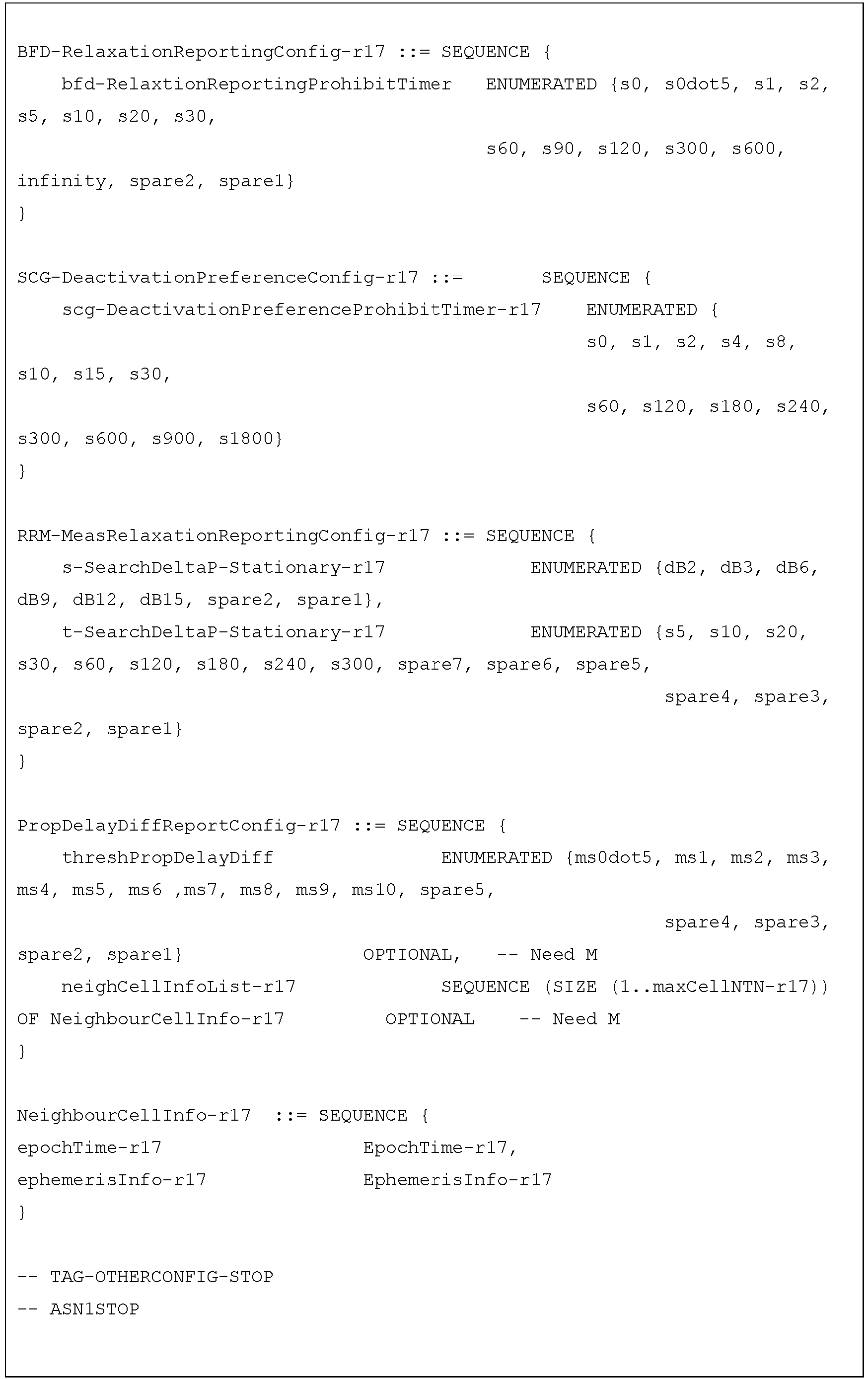

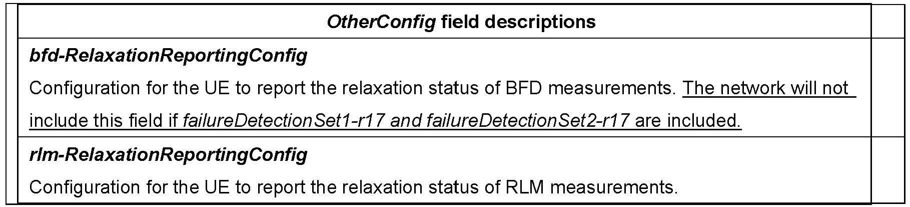

Or, the above description is replaced with "The network only includes this field if failureDetectionSet1-r17 and failureDetectionSet2-r17 are not included.".

In at least one other embodiment, the not transmitting measurement relaxation status information of beam failure detection (BFD) by the terminal equipment to a network device includes that: the terminal equipment considers that the terminal equipment itself is not configured to transmit the measurement relaxation status information of beam failure detection (BFD) to the network device.

For example, for the serving cell configured with two BFD-RS sets, the terminal equipment considers that the terminal equipment itself is not configured, by the network device, to transmit the measurement relaxation status of BFD to the network device.

Or, in the at least one other embodiment, the transmitting measurement relaxation status information of beam failure detection (BFD) by the terminal equipment to a network device includes that: the terminal equipment considers that the terminal equipment itself is configured to transmit the measurement relaxation status information of beam failure detection (BFD) to the network device.

For example, for the serving cell not configured with two BFD-RS sets, the terminal equipment considers that the terminal equipment itself is configured by the network device to transmit the measurement relaxation status of BFD to the network device.

In the at least one other embodiment, implementation A may be carried out by modifying 5.3.5.9 of TS 38.331, which is as shown in Table 13.

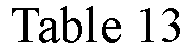

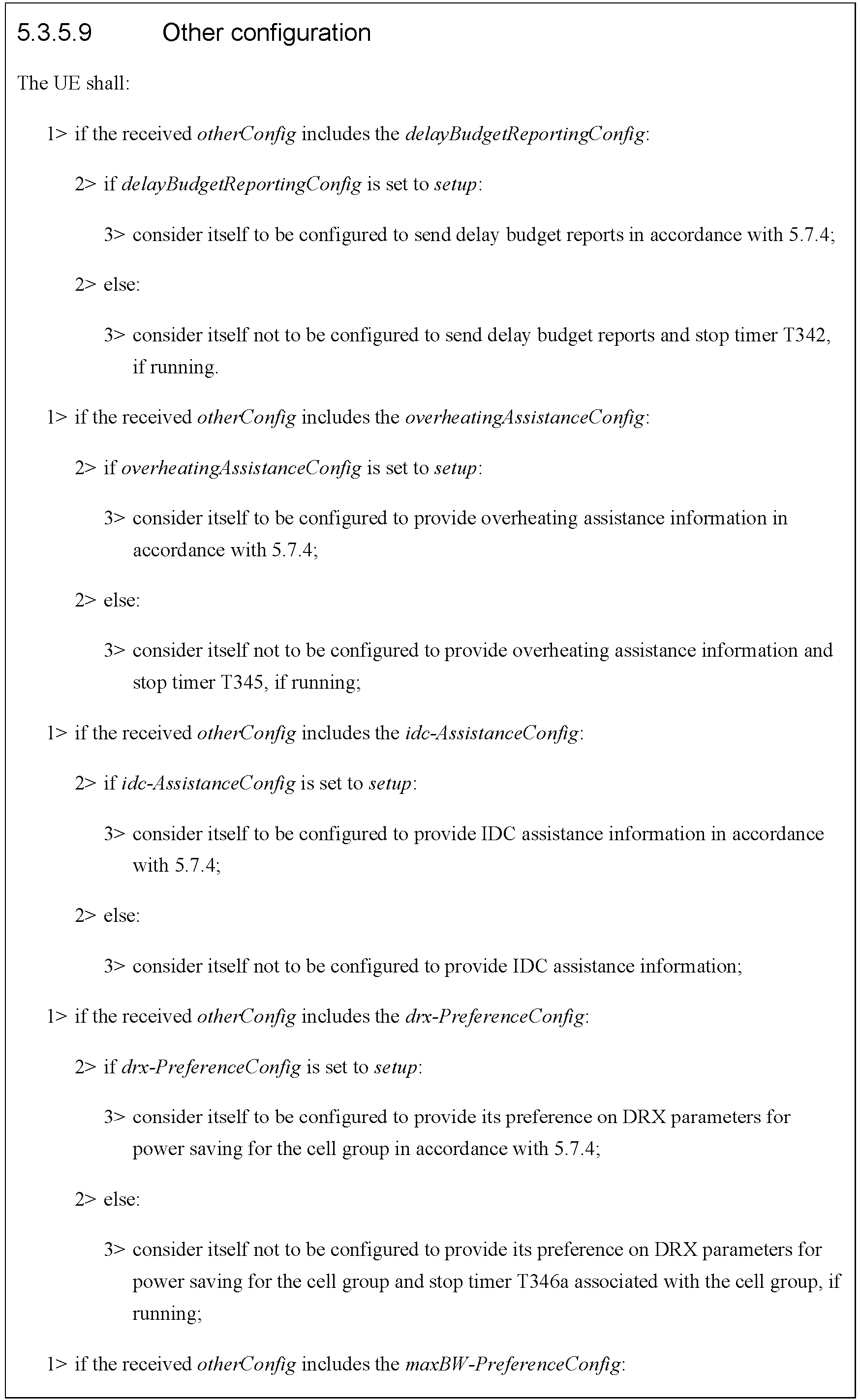

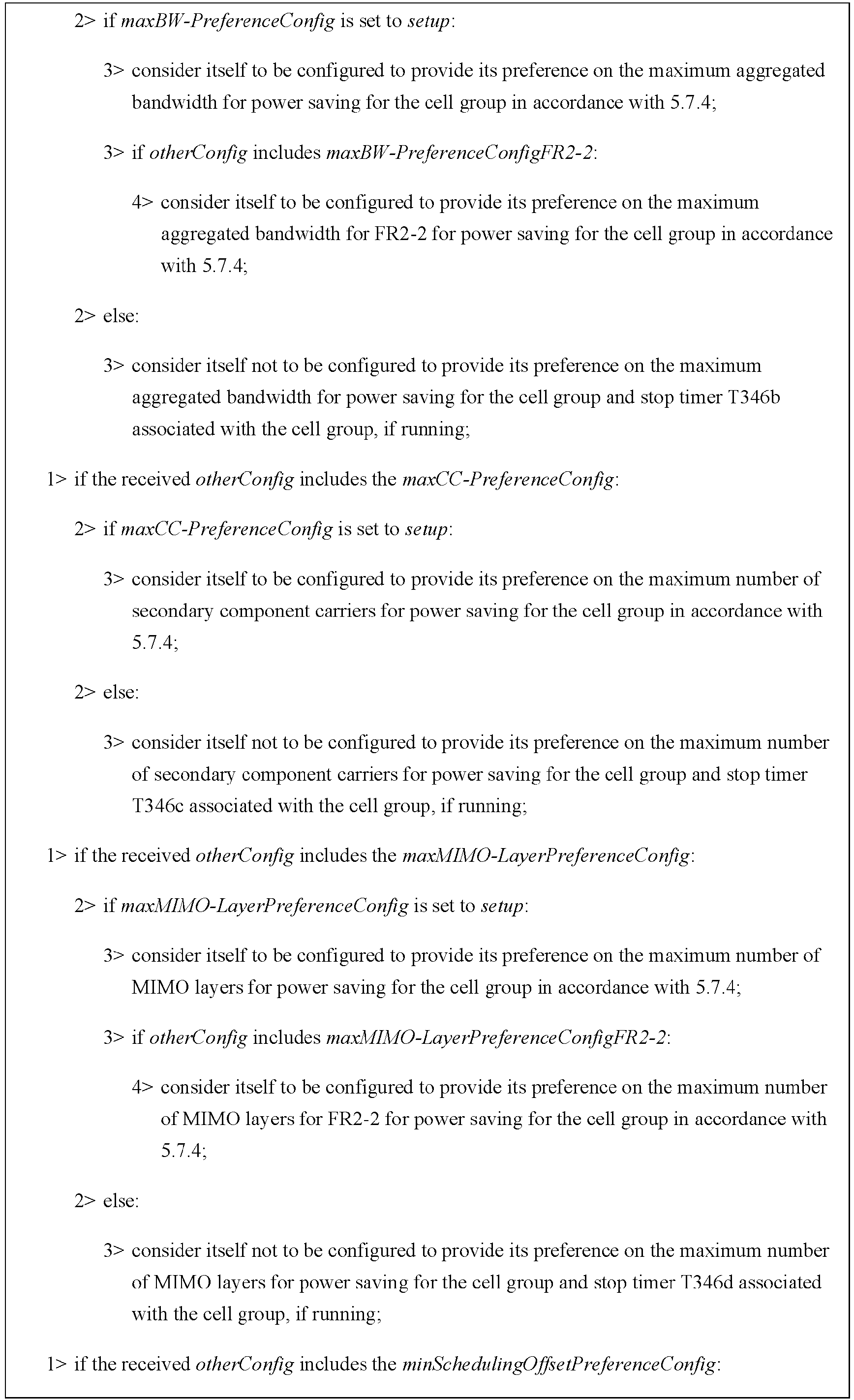

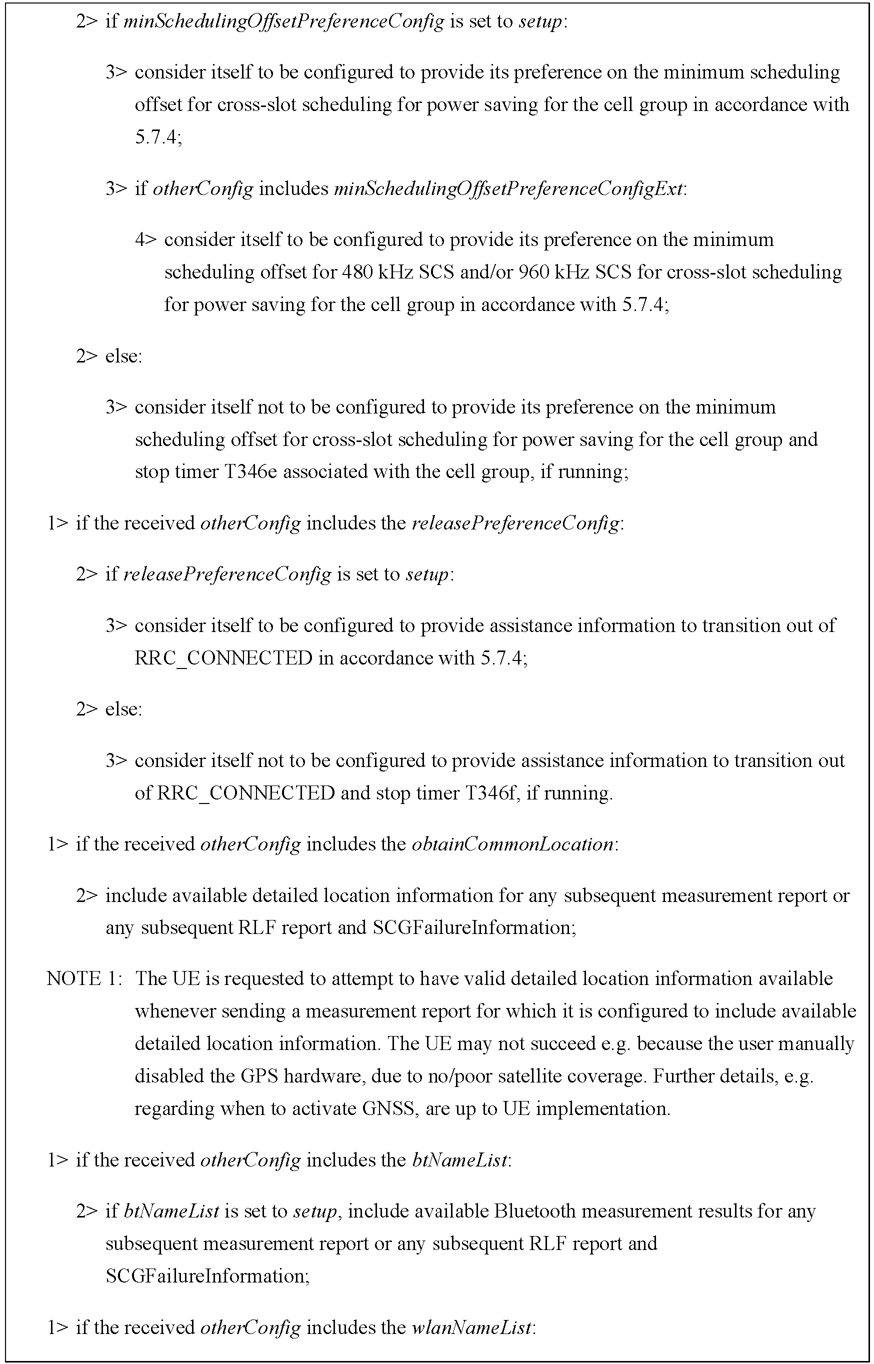

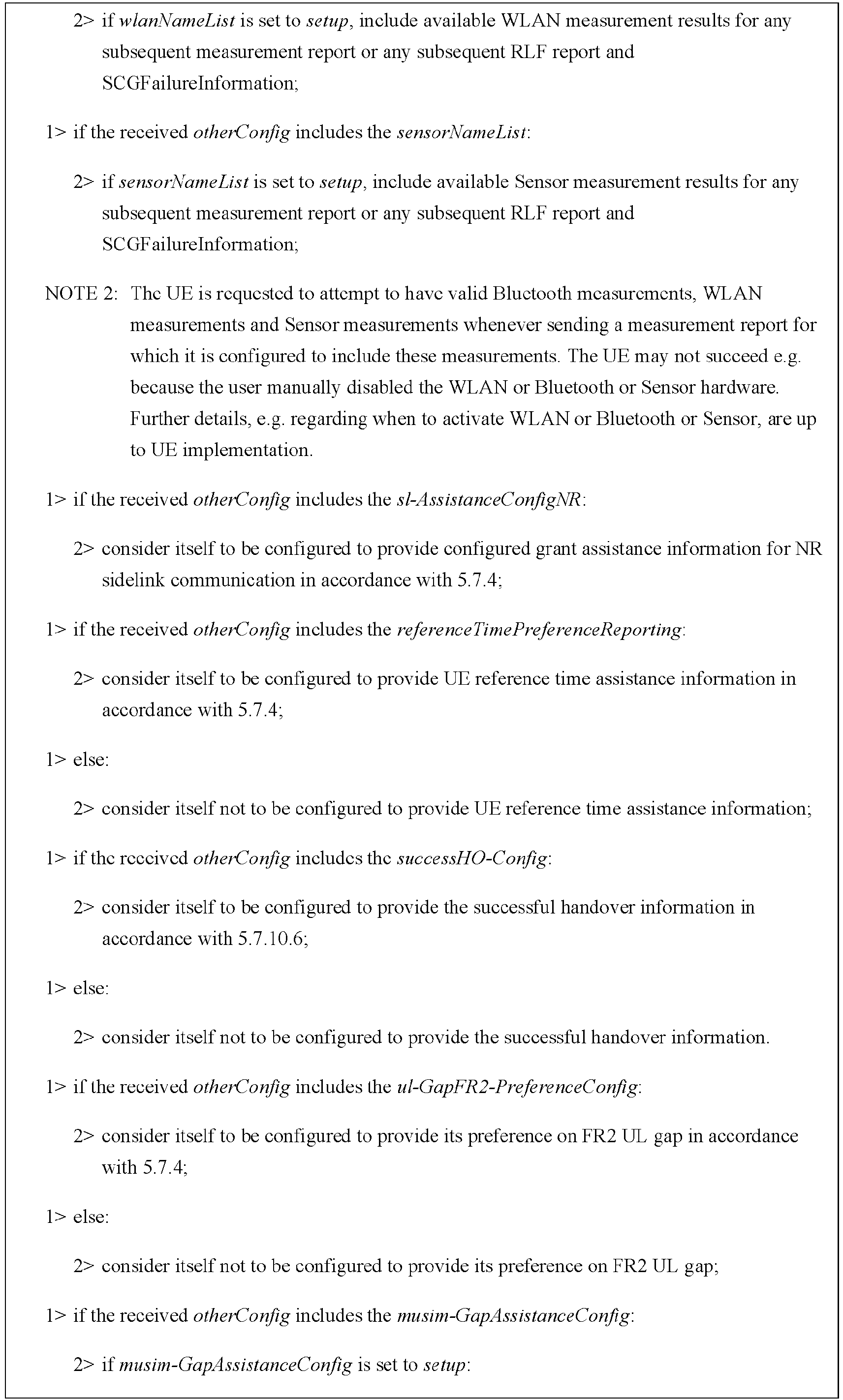

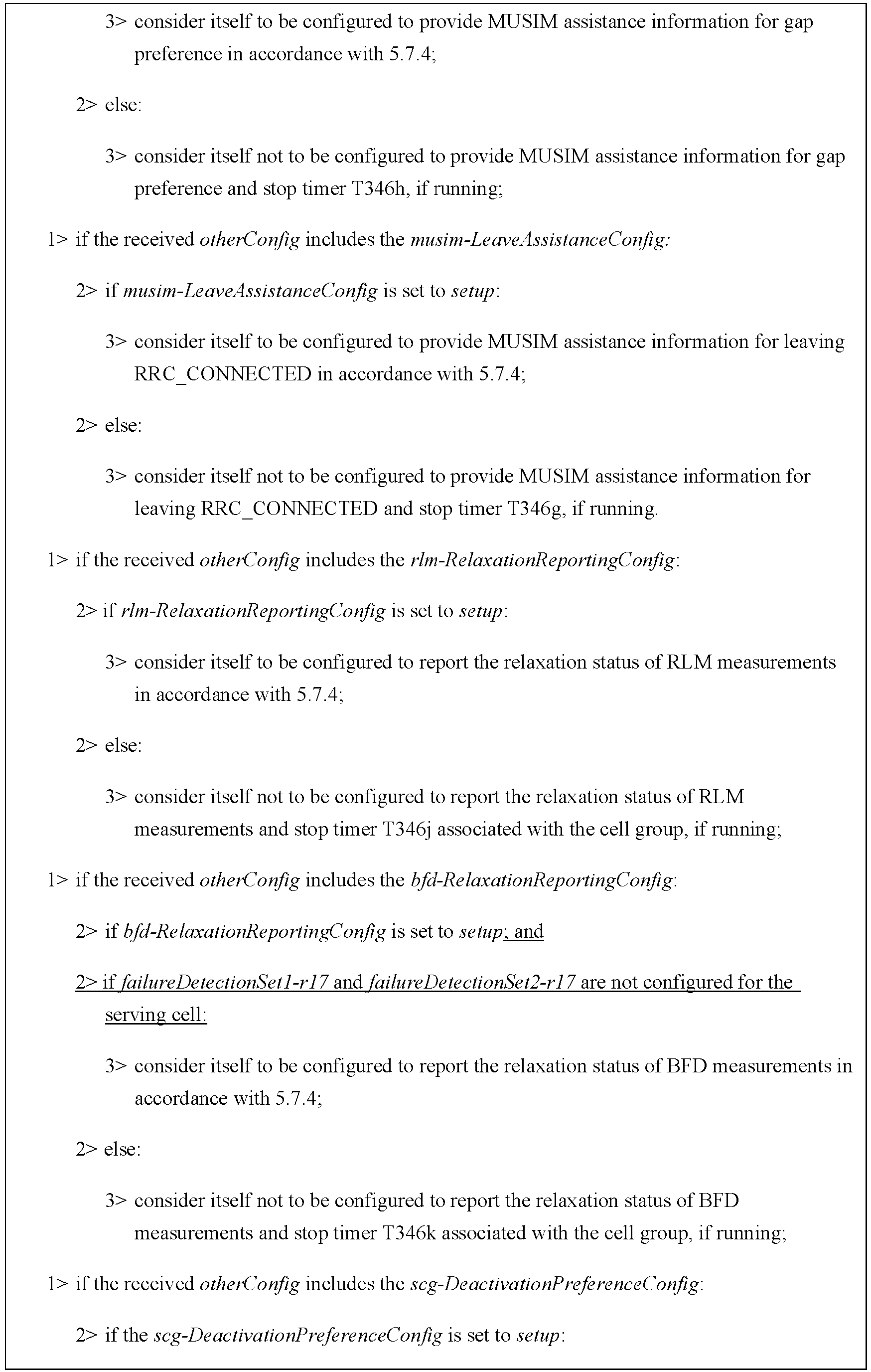

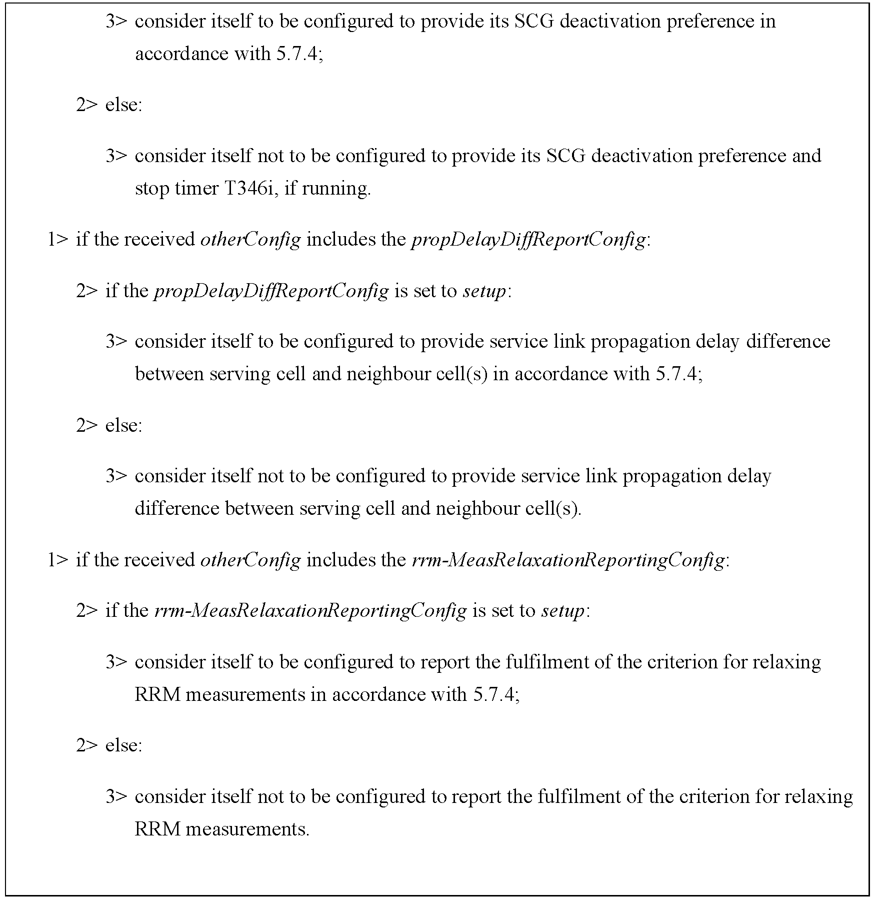

### Implementation B

In at least one embodiment of implementation B, if the terminal equipment is configured to transmit measurement relaxation status information of beam failure detection (BFD) to the network device, and if the serving cell is not configured with two or more beam failure detection reference signal (BFD-RS) sets, when the measurement relaxation status of beam failure detection (BFD) of the terminal equipment on the serving cell is changed and a minimum requirement of the terminal equipment is satisfied, the terminal equipment transmits the measurement relaxation status information to the network device.

In implementation B, the terminal equipment transmits the measurement relaxation status information via terminal equipment assistance information.

For example, if the terminal equipment is configured to transmit measurement relaxation status information of beam failure detection (BFD) to the network device, and if the serving cell is not configured with two BFD-RS sets, if the minimum requirement of the terminal equipment is satisfied when the terminal equipment changes its BFD relaxation status, the terminal equipment will trigger its BFD relaxation status to be reported via the terminal equipment assistance information.

In implementation B, that the relaxed status of the terminal equipment is changed refers to, for example, that the terminal equipment is changed from an unrelaxed status to a relaxed status, or the terminal equipment is changed from a relaxed status to an unrelaxed status.

The minimum requirement of the terminal equipment refers to, for example, a minimum requirement of the terminal equipment for measurement.

In the at least one embodiment, implementation B may be carried out by modifying the process description (5.7.4) of TS 38.331, for example, a corresponding standard is as shown in Table 14.

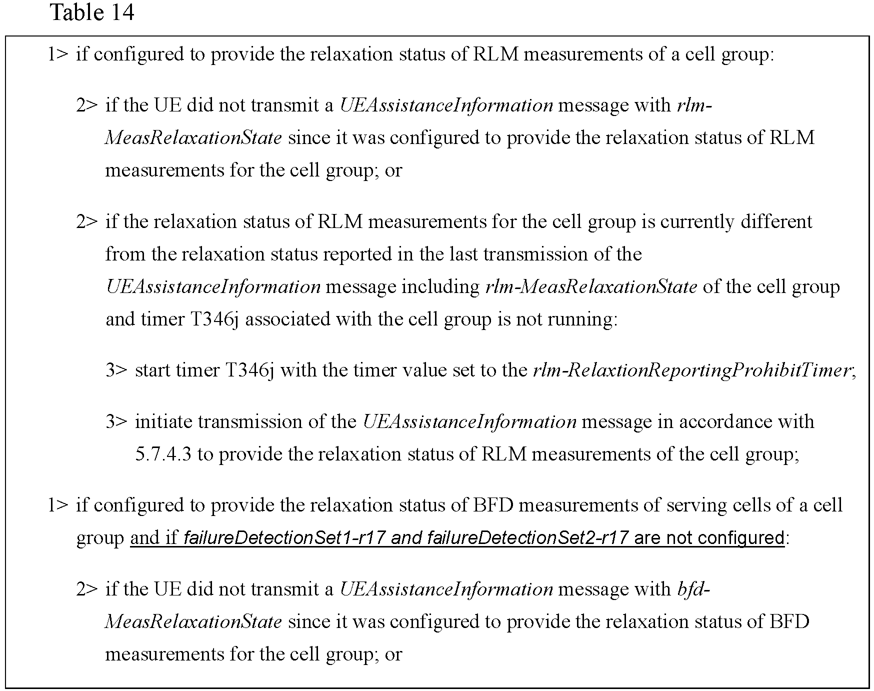

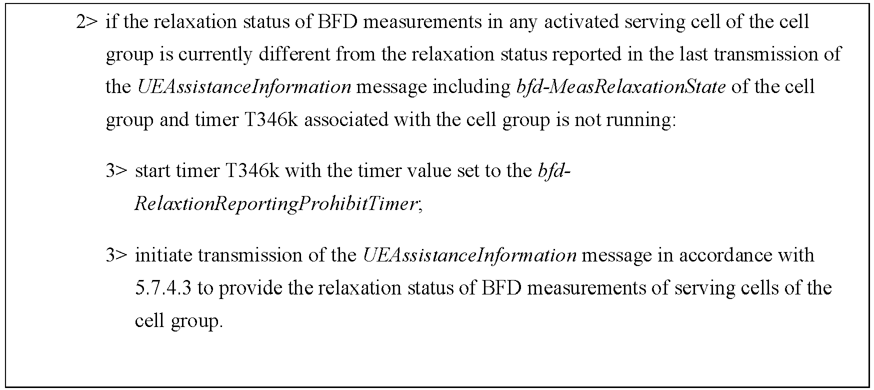

In implementation B, initiation of the terminal equipment assistance information process may be modified into: when the measurement relaxation status of the beam failure detection (BFD) in the radio link control connected (RRC_CONNECTED) state changes, if the terminal equipment is able to perform measurement relaxation of beam failure detection (BFD) in the radio link control connected (e.g. RRC_CONNECTED) state, the terminal equipment initiates the terminal equipment assistance information procedure to transmit measurement relaxation status information to the network device, so as to indicate the measurement relaxation status of the serving cell not configured with 2 or more (e.g. 2) beam failure detection reference signal (BFD-RS) sets.

Operation 303 shall be described below.

In operation 303, for the serving cell configured with two or more beam failure detection reference signal (BFD-RS) sets, the terminal equipment transmits the measurement relaxation status information of beam failure detection (BFD) to the network device.

In operation 303, the terminal equipment may transmit the measurement relaxation status information for the serving cell configured with two or more beam failure detection reference signal (BFD-RS) sets and the measurement relaxation status information for the serving cell not configured with two or more beam failure detection reference signal (BFD-RS) sets to the network device together. For example, the measurement relaxation status information for the serving cell configured with two or more beam failure detection reference signal (BFD-RS) sets and the measurement relaxation status information for the serving cell not configured with two or more beam failure detection reference signal (BFD-RS) sets are placed in the same bitstream and transmitted to the network device.

Or, in operation 303, the terminal equipment may transmit the measurement relaxation status information for the serving cell configured with two or more beam failure detection reference signal (BFD-RS) sets and the measurement relaxation status information for the serving cell not configured with two or more beam failure detection reference signal (BFD-RS) sets to the network device separately. For example, the measurement relaxation status information for the serving cell configured with two or more beam failure detection reference signal (BFD-RS) sets and the measurement relaxation status information for the serving cell not configured with two or more beam failure detection reference signal (BFD-RS) sets may be placed in different bit streams (e.g. two bit streams) and transmitted to the network device.

In at least one embodiment of operation 303, in the case where the measurement relaxation status information for the serving cell configured with two or more beam failure detection reference signal (BFD-RS) sets and the measurement relaxation status information for the serving cell not configured with two or more beam failure detection reference signal (BFD-RS) sets are transmitted to the network device together, the measurement relaxation status includes:
a measurement relaxation status of one beam failure detection reference signal (BFD-RS) set.

The one beam failure detection reference signal (BFD-RS) set is configured by the network device; or, the one beam failure detection reference signal (BFD-RS) set refers to a first beam failure detection reference signal (BFD-RS) set, such as a BFD-RS set appearing first when the network device configured BFD-RS sets; or, the one beam failure detection reference signal (BFD-RS) set is a beam failure detection reference signal (BFD-RS) set corresponding to a transmission reception point (TRP) that is performing non-terminal equipment-dedicated or terminal equipment-dedicated transmission.

In at least one other embodiments of operation 303, in the case where the measurement relaxation status information of the serving cell configured with two or more beam failure detection reference signal (BFD-RS) sets and the measurement relaxation status information of the serving cell not configured with two or more beam failure detection reference signal (BFD-RS) sets are transmitted together or separately by the terminal equipment to the network device, the measurement relaxation status includes:
whether measurement relaxation statuses of two or more beam failure detection reference signal (BFD-RS) sets are consistent.

A first value is indicated if the measurement relaxation statuses of two or more beam failure detection reference signal (BFD-RS) sets are inconsistent, the first value being, for example, 0; or, a second value is indicated if the measurement relaxation statuses of two or more beam failure detection reference signal (BFD-RS) sets are consistent, the second value being, for example, 1.

In at least one further embodiments of operation 303, in the case where the measurement relaxation status information of the serving cell configured with two or more beam failure detection reference signal (BFD-RS) sets and the measurement relaxation status information of the serving cell not configured with two or more beam failure detection reference signal (BFD-RS) sets are transmitted together or separately by the terminal equipment to the network device, the measurement relaxation status includes:
measurement relaxation statuses of two or more beam failure detection reference signal (BFD-RS) sets.

The second value is indicated if the two or more beam failure detection reference signal (BFD-RS) sets are all performing measurement relaxation of beam failure detection (BFD), the second value being, for example, 1; otherwise, the first value is indicated, the first value being, for example, 0; or, the first value is indicated if the two or more beam failure detection reference signal (BFD-RS) sets are all not performing measurement relaxation of beam failure detection (BFD), the first value being, for example, 0; otherwise, the second value is indicated, the second value being, for example, 1.

In at least still another embodiments of operation 303, in the case where the measurement relaxation status information of the serving cell configured with two or more beam failure detection reference signal (BFD-RS) sets and the measurement relaxation status information of the serving cell not configured with two or more beam failure detection reference signal (BFD-RS) sets are transmitted together or separately by the terminal equipment to the network device, the measurement relaxation status information includes first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).

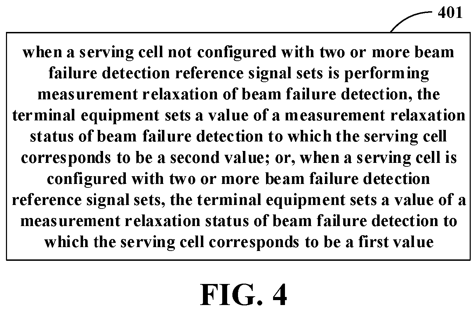

FIG. 4 is another schematic diagram of the method for measurement relaxation of the embodiments of the second aspect, the method for measurement relaxation being applicable to a terminal equipment.

As shown in FIG. 4, the method for measurement relaxation includes:
operation 401: when a serving cell not configured with two or more beam failure detection reference signal (BFD-RS) sets is performing measurement relaxation of beam failure detection (BFD), the terminal equipment sets a value of a measurement relaxation status of beam failure detection (BFD) to which the serving cell corresponds to be a second value; or, when a serving cell is configured with two or more beam failure detection reference signal (BFD-RS) sets, the terminal equipment sets a value of a measurement relaxation status of beam failure detection (BFD) to which the serving cell corresponds to be a first value.

In at least one embodiment of operation 401, when a serving cell not configured with two or more beam failure detection reference signal (BFD-RS) sets is performing measurement relaxation of beam failure detection (BFD), the terminal equipment sets a value of a measurement relaxation status of beam failure detection (BFD) to which the serving cell corresponds to be the second value, such as 1; and in another case, the terminal equipment sets a value of a measurement relaxation status of beam failure detection (BFD) to which the serving cell corresponds to be the first value, such as 0.

The other case includes that the serving cell is configured with two or more beam failure detection reference signal (BFD-RS) sets.

### Embodiments of a third aspect

The embodiments of the third aspect this disclosure provide a method for measurement relaxation, applicable to a network device, such as the network device 101 in FIG. 1. This embodiments corresponds to the method for measurement relaxation of the embodiments of the second aspect.

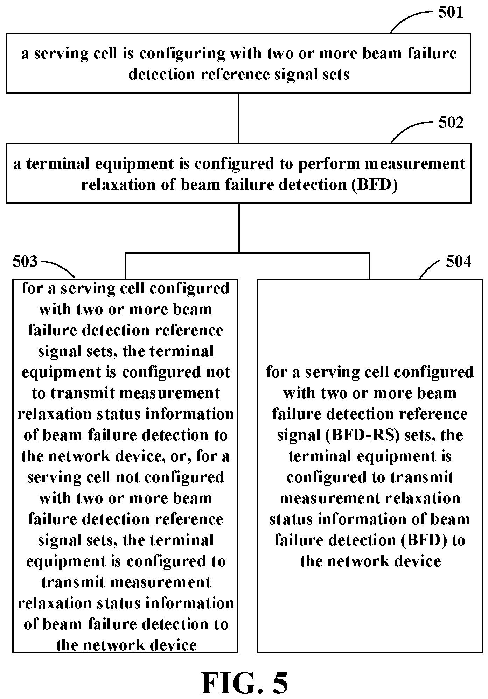

FIG. 5 is a schematic diagram of the method for measurement relaxation of the embodiments of the third aspect. As shown in FIG. 5, the method for measurement relaxation includes:
operation 501: a serving cell is configuring with two or more beam failure detection reference signal (BFD-RS) sets; and
operation 502: a terminal equipment is configured to perform measurement relaxation of beam failure detection (BFD).

As shown in FIG. 5, the method further includes operation 503 or operation 504.
operation 503: for a serving cell configured with two or more beam failure detection reference signal (BFD-RS) sets, the terminal equipment is configured not to transmit measurement relaxation status information of beam failure detection (BFD) to the network device, or, for a serving cell not configured with two or more beam failure detection reference signal (BFD-RS) sets, the terminal equipment is configured to transmit measurement relaxation status information of beam failure detection (BFD) to the network device.

Presence condition or field description of a third parameter related to beam failure detection relaxation reporting configuration (bfd-RelaxationReportingConfig) may be changed to implement operation 503.
operation 504: for a serving cell configured with two or more beam failure detection reference signal (BFD-RS) sets, the terminal equipment is configured to transmit measurement relaxation status information of beam failure detection (BFD) to the network device.

In operation 504, the network device receives the measurement relaxation status information of the serving cell configured with two or more beam failure detection reference signal (BFD-RS) sets and the measurement relaxation status information of the serving cell not configured with two or more beam failure detection reference signal (BFD-RS) sets together or separately.

In at least one embodiment of operation 504, the measurement relaxation status includes:
a measurement relaxation status of one beam failure detection reference signal (BFD-RS) set.

The one beam failure detection reference signal (BFD-RS) set is configured by the network device; or, the one beam failure detection reference signal (BFD-RS) set refers to a first beam failure detection reference signal (BFD-RS) set; or, the one beam failure detection reference signal (BFD-RS) set is a beam failure detection reference signal (BFD-RS) set corresponding to a transmission reception point (TRP) that is performing non-terminal equipment-specific or terminal equipment-specific transmission.

In at least one other embodiments of operation 504, the measurement relaxation status includes:
whether measurement relaxation statuses of two or more beam failure detection reference signal (BFD-RS) sets are consistent.

A first value (0) is indicated if the measurement relaxation statuses of two or more beam failure detection reference signal (BFD-RS) sets are inconsistent; or, a second value (1) is indicated if the measurement relaxation statuses of two or more beam failure detection reference signal (BFD-RS) sets are consistent.

In at least one further embodiments of operation 504, the measurement relaxation status includes:
measurement relaxation statuses of two or more beam failure detection reference signal (BFD-RS) sets.

The second value (1) is indicated if the two or more beam failure detection reference signal (BFD-RS) sets are all performing measurement relaxation of beam failure detection (BFD), otherwise, the first value (0) is indicated; or, the first value (0) is indicated if the two or more beam failure detection reference signal (BFD-RS) sets are all not performing measurement relaxation of beam failure detection (BFD), otherwise, the second value (1) is indicated.

In at least still another embodiments of operation 504, the measurement relaxation status includes:
The measurement relaxation status information has first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).

### Embodiments of a fourth aspect

The embodiments of the fourth aspect of this disclosure provide an apparatus for measurement relaxation, applicable to a terminal equipment, corresponding to the method for measurement relaxation of the embodiments of the first aspect.

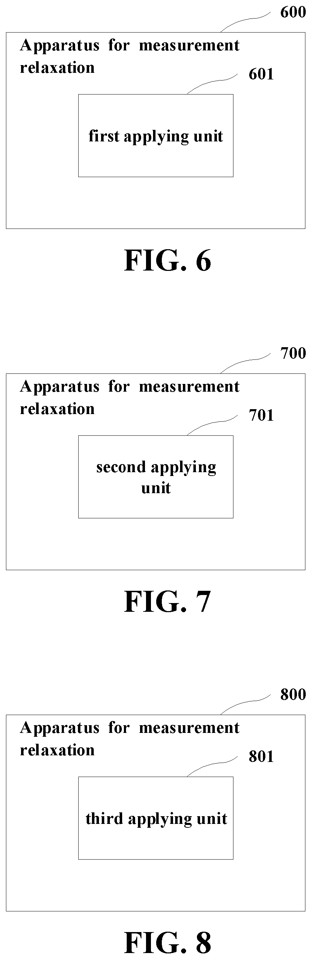

FIG. 6 is a schematic diagram of the apparatus for measurement relaxation of the embodiments of the fourth aspect. As shown in FIG. 6, an apparatus 600 for measurement relaxation includes a first applying unit 601, the first applying unit 601 being configured to:
for a serving cell configured with two or more beam failure detection reference signal (BFD-RS) sets, cause the terminal equipment not to perform measurement relaxation of beam failure detection (BFD); or, for a serving cell that is not configured with two or more beam failure detection reference signal (BFD-RS) sets, cause the terminal equipment to perform measurement relaxation of beam failure detection (BFD).

In at least one embodiment, the not performing measurement relaxation of beam failure detection (BFD) by the terminal equipment includes:
that the measurement relaxation of the beam failure detection (BFD) is disabled.

In at least one embodiment, the performing measurement relaxation of beam failure detection (BFD) by the terminal equipment includes:
that the measurement relaxation of beam failure detection (BFD) is enabled.

In at least one embodiment, presence condition and/or field description of a first parameter related to a low mobility criterion (lowMobilityEvaluationConnected) and/or a second parameter related to a good cell quality criterion (goodServingCellEvaluationBFD) is/are changed.

In at least one embodiment, that presence condition and/or field description of a first parameter related to a low mobility criterion (lowMobilityEvaluationConnected) is changed includes that:
the serving cell is a special cell, in a case where there exists a first serving cell in which no two or more beam failure detection reference signal (BFD-RS) sets are configured in a cell set where the serving cell is located, measurement relaxation of beam failure detection (BFD) is disabled, or measurement relaxation of beam failure detection (BFD) is enabled.

In at least one embodiment, the not performing measurement relaxation of beam failure detection (BFD) includes:
not evaluating whether a measurement relaxation criterion for beam failure detection (BFD) on the serving cell is satisfied.

In at least one embodiment, the performing measurement relaxation of beam failure detection (BFD) includes:
evaluating whether a measurement relaxation criterion for beam failure detection (BFD) on the serving cell is satisfied.

In at least one embodiment, whether a measurement relaxation criterion is satisfied includes:
whether a low mobility criterion is satisfied; and/or
whether a good cell quality criterion is satisfied.

In at least one embodiment, whether a low mobility criterion is satisfied includes that:
in a case where two or more beam failure detection reference signal (BFD-RS) sets are not configured in a cell set where the serving cell is located, whether the low mobility criterion is satisfied is evaluated.

In at least one embodiment, for the serving cell not configured with two or more beam failure detection reference signal (BFD-RS) sets, when the low mobility criterion for beam failure detection (BFD) is satisfied, the terminal equipment is allowed to perform measurement relaxation of beam failure detection (BFD).

### Embodiments of a fifth aspect

The embodiments of the fifth aspect of this disclosure provide an apparatus for measurement relaxation, applicable to a terminal equipment, corresponding to the method for measurement relaxation of the embodiments of the second aspect.

FIG. 7 is a schematic diagram of the apparatus for measurement relaxation of the embodiments of the fifth aspect. As shown in FIG. 7, an apparatus 700 for measurement relaxation includes a second applying unit 701, the second applying unit 701 being configured to:
for a serving cell configured with two or more beam failure detection reference signal (BFD-RS) sets, cause the terminal equipment to perform measurement relaxation of beam failure detection (BFD).

In at least one embodiment, for the serving cell configured with two or more beam failure detection reference signal (BFD-RS) sets, the second applying unit causes the terminal equipment not to transmit measurement relaxation status information of beam failure detection (BFD) to a network device.

In at least one embodiment, for a serving cell not configured with two or more beam failure detection reference signal (BFD-RS) sets, the second applying unit causes the terminal equipment to transmit measurement relaxation status information of beam failure detection (BFD) to the network device.

In at least one embodiment, the not transmitting measurement relaxation status information of beam failure detection (BFD) to a network device includes that:
the terminal equipment is not configured to transmit the measurement relaxation status information of beam failure detection (BFD) to the network device.

In at least one embodiment, the transmitting measurement relaxation status information of beam failure detection (BFD) to the network device includes that:
the terminal equipment is configured to transmit the measurement relaxation status information of beam failure detection (BFD) to the network device.

In at least one embodiment, presence condition or field description of a third parameter related to beam failure detection relaxation reporting configuration (bfd-RelaxationReportingConfig) is changed.

In at least one embodiment, when the beam failure detection reference signal (BFD-RS) sets are reconfigured, the second applying unit causes the terminal equipment to stop a running timer related to the serving cell.

In at least one embodiment, the not transmitting measurement relaxation status information of beam failure detection (BFD) to a network device includes:
deeming by the terminal equipment that the terminal equipment is not configured to transmit the measurement relaxation status information of beam failure detection (BFD) to the network device.

In at least one embodiment, the transmitting measurement relaxation status information of beam failure detection (BFD) to the network device includes:
deeming by the terminal equipment that the terminal equipment is configured to transmit the measurement relaxation status information of beam failure detection (BFD) to the network device.

In at least one embodiment, if the terminal equipment is configured to transmit the measurement relaxation status information of beam failure detection (BFD) to the network device, and if the serving cell is not configured with two or more beam failure detection reference signal (BFD-RS) sets, when the measurement relaxation status of beam failure detection (BFD) of the terminal equipment on the serving cell is changed and a minimum requirement of the terminal equipment is satisfied, the second applying unit causes the terminal equipment to transmit the measurement relaxation status information to the network device.

In at least one embodiment, the second applying unit causes the terminal equipment to transmit the measurement relaxation status information to the network device via terminal equipment assistance information.

In at least one embodiment, the not transmitting measurement relaxation status information of beam failure detection (BFD) to a network device includes at least one of the following:
not triggering report of the measurement relaxation status information via a UE assistance information procedure;
not including the measurement relaxation status information in the UE assistance information in a triggered UE assistance information procedure; or
setting a value of a bit corresponding to the serving cell in the UE assistance information to be a first value in a triggered UE assistance information procedure.

In at least one embodiment, when the measurement relaxation status of the beam failure detection (BFD) in the radio link control connected (RRC_CONNECTED) state changes, if the terminal equipment is able to perform measurement relaxation of beam failure detection (BFD) in the radio link control connected (e.g. RRC_CONNECTED) state, the second applying unit causes the terminal equipment to initiate the terminal equipment assistance information procedure to transmit measurement relaxation status information to the network device, so as to indicate the measurement relaxation status of the serving cell not configured with 2 or more beam failure detection reference signal (BFD-RS) sets.

In at least one embodiment, for a serving cell configured with two or more beam failure detection reference signal (BFD-RS) sets, the second applying unit causes the terminal equipment to transmit measurement relaxation status information of beam failure detection (BFD) to the network device.

In at least one embodiment, the second applying unit causes the terminal equipment to transmit the measurement relaxation status information of the serving cell configured with two or more beam failure detection reference signal (BFD-RS) sets and the measurement relaxation status information of the serving cell not configured with two or more beam failure detection reference signal (BFD-RS) sets together or separately to the network device.

In at least one embodiment, the measurement relaxation status includes:
a measurement relaxation status of one beam failure detection reference signal (BFD-RS) set.

The one beam failure detection reference signal (BFD-RS) set is configured by the network device; or,
the one beam failure detection reference signal (BFD-RS) set refers to a first beam failure detection reference signal (BFD-RS) set; or,
the one beam failure detection reference signal (BFD-RS) set is a beam failure detection reference signal (BFD-RS) set corresponding to a transmission reception point (TRP) that is performing non-terminal equipment-specific or terminal equipment-specific transmission.

In at least one other embodiment, the measurement relaxation status includes:
measurement relaxation statuses of two or more beam failure detection reference signal (BFD-RS) sets.

A first value (0) is indicated if the measurement relaxation statuses of two or more beam failure detection reference signal (BFD-RS) sets are inconsistent; or,
a second value (1) is indicated if the measurement relaxation statuses of two or more beam failure detection reference signal (BFD-RS) sets are consistent.

In at least one further embodiment, the measurement relaxation status includes:
measurement relaxation statuses of two or more beam failure detection reference signal (BFD-RS) sets.

The second value (1) is indicated if the two or more beam failure detection reference signal (BFD-RS) sets are all performing measurement relaxation of beam failure detection (BFD), otherwise, the first value (0) is indicated; or,
the first value (0) is indicated if the two or more beam failure detection reference signal (BFD-RS) sets are all not performing measurement relaxation of beam failure detection (BFD), otherwise, the second value (1) is indicated.

In at least one embodiment, the measurement relaxation status information includes first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).

FIG. 8 is another schematic diagram of the apparatus for measurement relaxation of the embodiments of the fifth aspect. As shown in FIG. 8, an apparatus 800 for measurement relaxation includes a third applying unit 801, the third applying unit 801 being configured to:
when a serving cell not configured with two or more beam failure detection reference signal (BFD-RS) sets is performing measurement relaxation of beam failure detection (BFD), cause the terminal equipment to set a value of a measurement relaxation status of beam failure detection (BFD) to which the serving cell corresponds to be a second value, or, when a serving cell is configured with two or more beam failure detection reference signal (BFD-RS) sets, cause the terminal equipment to set a value of a measurement relaxation status of beam failure detection (BFD) to which the serving cell corresponds to be a first value.

In at least one embodiment, when a serving cell not configured with two or more beam failure detection reference signal (BFD-RS) sets is performing measurement relaxation of beam failure detection (BFD), the third applying unit causes the terminal equipment to set a value of a measurement relaxation status of beam failure detection (BFD) to which the serving cell corresponds to be the second value, and in another case, the third applying unit causes the terminal equipment to set a value of a measurement relaxation status of beam failure detection (BFD) to which the serving cell corresponds to be the first value.

In at least one embodiment, the other case includes that the serving cell is configured with two or more beam failure detection reference signal (BFD-RS) sets.

### Embodiments of a sixth aspect

The embodiments of the sixth aspect this disclosure provide an apparatus for measurement relaxation, which applicable to a network device, and corresponds to the method for measurement relaxation of the embodiments of the third aspect.

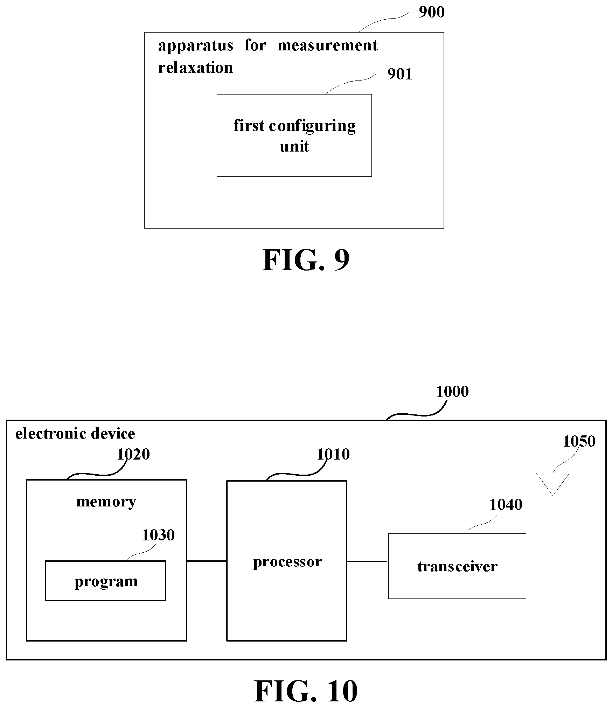

FIG. 9 is a schematic diagram of the apparatus for measurement relaxation of the embodiments of the sixth aspect. As shown in FIG. 9, an apparatus 900 for measurement relaxation includes a first configuring unit 901, the first configuring unit 901 being configured to:
configure two or more beam failure detection reference signal (BFD-RS) sets for a serving cell; and
configure a terminal equipment to perform measurement relaxation of beam failure detection (BFD).

In at least one embodiment, for a serving cell configured with two or more beam failure detection reference signal (BFD-RS) sets, the first configuring unit configures the terminal equipment not to transmit measurement relaxation status information of beam failure detection (BFD) to the network device.

In at least one embodiment, for a serving cell not configured with two or more beam failure detection reference signal (BFD-RS) sets, the first configuring unit configures the terminal equipment to transmit measurement relaxation status information of beam failure detection (BFD) to the network device.

In at least one embodiment, presence condition or field description of a third parameter related to beam failure detection relaxation reporting configuration (bfd-RelaxationReportingConfig) is changed.

In at least one embodiment, for a serving cell configured with two or more beam failure detection reference signal (BFD-RS) sets, the first configuring unit further configures the terminal equipment to transmit measurement relaxation status information of beam failure detection (BFD) to the network device.

In at least one embodiment, the network device receives the measurement relaxation status information of the serving cell configured with two or more beam failure detection reference signal (BFD-RS) sets and the measurement relaxation status information of the serving cell not configured with two or more beam failure detection reference signal (BFD-RS) sets together or separately.

In at least one embodiment, the measurement relaxation status includes:
a measurement relaxation status of one beam failure detection reference signal (BFD-RS) set.

The one beam failure detection reference signal (BFD-RS) set is configured by the network device; or,
the one beam failure detection reference signal (BFD-RS) set refers to a first beam failure detection reference signal (BFD-RS) set; or,
the one beam failure detection reference signal (BFD-RS) set is a beam failure detection reference signal (BFD-RS) set corresponding to a transmission reception point (TRP) that is performing non-terminal equipment-specific or terminal equipment-specific transmission.

In at least one other embodiment, the measurement relaxation status includes:
whether measurement relaxation statuses of two or more beam failure detection reference signal (BFD-RS) sets are consistent.

A first value (0) is indicated if the measurement relaxation statuses of two or more beam failure detection reference signal (BFD-RS) sets are inconsistent; or,
a second value (1) is indicated if the measurement relaxation statuses of two or more beam failure detection reference signal (BFD-RS) sets are consistent.

In at least one further embodiment, the measurement relaxation status includes:
measurement relaxation statuses of two or more beam failure detection reference signal (BFD-RS) sets.

The second value (1) is indicated if the two or more beam failure detection reference signal (BFD-RS) sets are all performing measurement relaxation of beam failure detection (BFD), otherwise, the first value (0) is indicated; or,
the first value (0) is indicated if the two or more beam failure detection reference signal (BFD-RS) sets are all not performing measurement relaxation of beam failure detection (BFD), otherwise, the second value (1) is indicated.

In at least one embodiment, the measurement relaxation status information includes first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).

### Embodiments of a seventh aspect

The embodiments of this disclosure provide a communication system, including a terminal equipment and a network device. At least one of the terminal equipment and the network device may have a composition of an electronic device shown in FIG. 10.

FIG. 10 is a schematic diagram of a composition of an electronic device of embodiments of this disclosure. As shown in FIG. 10, an electronic device 1000 may include a processor (such as a central processing unit (CPU)) 1010 and a memory 1010, the memory 1010 being coupled to the processor 1010. The memory 1010 may store various data, and furthermore, it may store a program 1030 for information processing, and execute the program 1030 under control of the processor 1010.

For example, the processor 1010 may be configured to carry out the methods as described in the embodiments of the first to third aspects.

Furthermore, as shown in FIG. 10, the electronic device 1000 may include a transceiver 1040, and an antenna 1050, etc., wherein, functions of the above components are similar to those in the related art, and shall not be described herein any further. It should be noted that the electronic device 1000 does not necessarily include all the parts shown in FIG. 10, and furthermore, the electronic device 1000 may include parts not shown in FIG. 10, and the related art may be referred to.

Embodiments of this disclosure provide a computer readable program, which, when executed in a terminal equipment, causes the terminal equipment to carry out the method as described in the embodiments of the first or the second aspect.

Embodiments of this disclosure provide a computer readable program, which, when executed in a network device, causes the network device to carry out the method as described in the embodiments of the third aspect.

Embodiments of this disclosure provide a computer storage medium, including a computer readable program, which causes an electronic device to carry out the method as described in the embodiments of at least one of the first to the third aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. A method for measurement relaxation, applicable to a terminal equipment, the method including:
   for a serving cell configured with two or more beam failure detection reference signal (BFD-RS) sets, not performing measurement relaxation of beam failure detection (BFD) by the terminal equipment; or
   for a serving cell that is not configured with two or more beam failure detection reference signal (BFD-RS) sets, performing measurement relaxation of beam failure detection (BFD) by the terminal equipment.
2. The method according to supplement 1, wherein the not performing measurement relaxation of beam failure detection (BFD) by the terminal equipment includes:
   that the measurement relaxation of the beam failure detection (BFD) is disabled.
3. The method according to supplement 1, wherein the performing measurement relaxation of beam failure detection (BFD) by the terminal equipment includes:
   the measurement relaxation of beam failure detection (BFD) is enabled.
4. The method according to supplement 2 or 3, wherein,
   presence condition and/or field description of a first parameter related to a low mobility criterion (*lowMobilityEvaluationConnected*) and/or a second parameter related to a good cell quality criterion (*goodServingCellEvaluationBFD*) is/are changed.
5. The method according to supplement 4, wherein that the presence condition and/or field description of a first parameter related to a low mobility criterion (*lowMobilityEvaluationConnected*) is changed includes that:
   the serving cell is a special cell,
   in a case where there exists a first serving cell in which no two or more beam failure detection reference signal (BFD-RS) sets are configured in a cell set where the serving cell is located,
   measurement relaxation of beam failure detection (BFD) is disabled, or
   measurement relaxation of beam failure detection (BFD) is enabled.
6. The method according to supplement 1, wherein the not performing measurement relaxation of beam failure detection (BFD) includes:
   not evaluating whether a measurement relaxation criterion for beam failure detection (BFD) on the serving cell is satisfied.
7. The method according to supplement 1, wherein the performing measurement relaxation of beam failure detection (BFD) includes:
   evaluating whether a measurement relaxation criterion for beam failure detection (BFD) on the serving cell is satisfied.
8. The method according to supplement 6 or 7, wherein,
   whether the measurement relaxation criterion is satisfied includes:
   whether a low mobility criterion is satisfied; and/or
   whether a good cell quality criterion is satisfied.
9. The method according to supplement 8, wherein whether the low mobility criterion is satisfied includes that:
   in a case where two beam failure detection reference signal (BFD-RS) sets are not configured in a cell set where the serving cell is located, whether the low mobility criterion is satisfied is evaluated.
10. The method according to supplement 1, wherein,
   for the serving cell not configured with two or more beam failure detection reference signal (BFD-RS) sets,
   when the low mobility criterion for beam failure detection (BFD) is satisfied,
   the terminal equipment is allowed to perform measurement relaxation of beam failure detection (BFD).
11. A method for measurement relaxation, applicable to a terminal equipment, the method including:
   for a serving cell configured with two or more beam failure detection reference signal (BFD-RS) sets, performing measurement relaxation of beam failure detection (BFD) by the terminal equipment.
12. The method according to supplement 11, wherein the method further includes:
   for the serving cell configured with two or more beam failure detection reference signal (BFD-RS) sets, the terminal equipment does not transmit measurement relaxation status information of beam failure detection (BFD) to a network device.
13. The method according to supplement 11, wherein the method further includes:
   for a serving cell not configured with two or more beam failure detection reference signal (BFD-RS) sets, transmitting measurement relaxation status information of beam failure detection (BFD) by the terminal equipment to the network device.
14. The method according to supplement 12, wherein the not transmitting measurement relaxation status information of beam failure detection (BFD) to a network device includes that:
   the terminal equipment is not configured to transmit the measurement relaxation status information of beam failure detection (BFD) to the network device.
15. The method according to supplement 13, wherein the transmitting measurement relaxation status information of beam failure detection (BFD) to the network device includes that:
   the terminal equipment is configured to transmit the measurement relaxation status information of beam failure detection (BFD) to the network device.
16. The method according to supplement 14 or 15, wherein,
   presence condition or field description of a third parameter related to beam failure detection relaxation reporting configuration (bfd-RelaxationReportingConfig) is changed.
17. The method according to supplement 13, wherein,
   when a beam failure detection reference signal (BFD-RS) set is reconfigured, the terminal equipment stops a running timer associated with the serving cell.
18. The method according to supplement 12, wherein the not transmitting measurement relaxation status information of beam failure detection (BFD) to a network device includes:
   deeming that the terminal equipment is not configured to transmit the measurement relaxation status information of beam failure detection (BFD) to the network device.
19. The method according to supplement 13, wherein the transmitting the measurement relaxation status information of beam failure detection (BFD) to the network device includes:
   deeming that the terminal equipment is configured to transmit the measurement relaxation status information of beam failure detection (BFD) to the network device.
20. The method according to supplement 12 or 13, wherein,
   if the terminal equipment is configured to transmit the measurement relaxation status information of beam failure detection (BFD) to the network device,
   and if the serving cell is not configured with two or more beam failure detection reference signal (BFD-RS) sets,
   when the measurement relaxation status of beam failure detection (BFD) of the terminal equipment on the serving cell is changed and a minimum requirement of the terminal equipment is satisfied,
   the terminal equipment transmits the measurement relaxation status information to the network device.
21. The method according to supplement 20, wherein,
   the terminal equipment transmits the measurement relaxation status information via UE assistance information.
22. The method according to supplement 12, wherein,
   the not transmitting measurement relaxation status information of beam failure detection (BFD) to a network device includes at least one of the following:
   not triggering report of the measurement relaxation status information via a UE assistance information process;
   not including the measurement relaxation status information in the UE assistance information in a triggered UE assistance information process; or
   setting a value of a bit corresponding to the serving cell in the UE assistance information to be a first value in a triggered UE assistance information process.
23. The method according to any one of supplements 20-22, wherein,
   when the measurement relaxation status of beam failure detection (BFD) in the radio link control connected (RRC_CONNECTED) state is changed,
   if the terminal equipment is capable of performing measurement relaxation of beam failure detection (BFD) in the radio link control connected (RRC_CONNECTED) state,
   the terminal equipment initiates a UE assistance information process, and transmits the measurement relaxation status information to the network device to indicate the measurement relaxation status of the serving cell that is not configured with two or more beam failure detection reference signal (BFD-RS) sets.
24. The method according to supplement 11, wherein the method further includes:
   for a serving cell configured with two or more beam failure detection reference signal (BFD-RS) sets, transmitting measurement relaxation status information of beam failure detection (BFD) by the terminal equipment to the network device.
25. The method according to supplement 24, wherein,
   the measurement relaxation status information of the serving cell configured with two or more beam failure detection reference signal (BFD-RS) sets and the measurement relaxation status information of the serving cell not configured with two or more beam failure detection reference signal (BFD-RS) sets are transmitted together or separately by the terminal equipment to the network device.
26. The method according to supplement 24 or 25, wherein,
   the measurement relaxation status includes:
   a measurement relaxation status of one beam failure detection reference signal (BFD-RS) set.
27. The method according to supplement 26, wherein,
   the one beam failure detection reference signal (BFD-RS) set is configured by the network device; or
   the one beam failure detection reference signal (BFD-RS) set refers to a first beam failure detection reference signal (BFD-RS) set; or
   the one beam failure detection reference signal (BFD-RS) set is a beam failure detection reference signal (BFD-RS) set corresponding to a transmission reception point (TRP) that is performing non-terminal equipment-specific or terminal equipment-specific transmission.
28. The method according to supplement 24 or 25, wherein,
   the measurement relaxation status includes:
   whether measurement relaxation statuses of two or more beam failure detection reference signal (BFD-RS) sets are consistent.
29. The method according to supplement 28, wherein,
   a first value (0) is indicated if the measurement relaxation statuses of two or more beam failure detection reference signal (BFD-RS) sets are inconsistent; or,
   a second value (1) is indicated if the measurement relaxation statuses of two or more beam failure detection reference signal (BFD-RS) sets are consistent.
30. The method according to supplement 24 or 25, wherein,
   the measurement relaxation status includes:
   measurement relaxation statuses of two or more beam failure detection reference signal (BFD-RS) sets.
31. The method according to supplement 30, wherein,
   the second value (1) is indicated if the two or more beam failure detection reference signal (BFD-RS) sets are all performing measurement relaxation of beam failure detection (BFD), otherwise, the first value (0) is indicated; or
   the first value (0) is indicated if the two or more beam failure detection reference signal (BFD-RS) sets are all not performing measurement relaxation of beam failure detection (BFD), otherwise, the second value (1) is indicated.
32. The method according to supplement 24 or 25, wherein,
   the measurement relaxation status information includes first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).
33. A method for measurement relaxation, applicable to a terminal equipment, the method including:
   when a serving cell not configured with two or more beam failure detection reference signal (BFD-RS) sets is performing measurement relaxation of beam failure detection (BFD), setting a value of a measurement relaxation status of beam failure detection (BFD) to which the serving cell corresponds to be a second value by the terminal equipment; or
   when a serving cell is configured with two or more beam failure detection reference signal (BFD-RS) sets, setting a value of a measurement relaxation status of beam failure detection (BFD) to which the serving cell corresponds to be a first value by the terminal equipment.
34. The method according to supplement 33, wherein,
   when a serving cell not configured with two or more beam failure detection reference signal (BFD-RS) sets is performing measurement relaxation of beam failure detection (BFD), the terminal equipment sets a value of a measurement relaxation status of beam failure detection (BFD) to which the serving cell corresponds to be the second value,
   and in another case, the terminal equipment sets a value of a measurement relaxation status of beam failure detection (BFD) to which the serving cell corresponds to be the first value.
35. The method according to supplement 33, wherein,
   the other case includes that the serving cell is configured with two or more beam failure detection reference signal (BFD-RS) sets.
36. A method for measurement relaxation, applicable to a network device, the method including:
   configuring a serving cell with two or more beam failure detection reference signal (BFD-RS) sets; and
   configuring a terminal equipment to perform measurement relaxation of beam failure detection (BFD).
37. The method according to supplement 36, wherein the method further includes:
   for a serving cell configured with two or more beam failure detection reference signal (BFD-RS) sets, configuring the terminal equipment not to transmit measurement relaxation status information of beam failure detection (BFD) to the network device.
38. The method according to supplement 36, wherein the method further includes:
   for a serving cell not configured with two or more beam failure detection reference signal (BFD-RS) sets, configuring the terminal equipment to transmit measurement relaxation status information of beam failure detection (BFD) to the network device.
39. The method according to supplement 37 or 38, wherein,
   presence condition or field description of a third parameter related to beam failure detection relaxation reporting configuration (bfd-RelaxationReportingConfig) is changed.
40. The method according to supplement 36, wherein the method further includes:
   for a serving cell configured with two or more beam failure detection reference signal (BFD-RS) sets, configuring the terminal equipment to transmit measurement relaxation status information of beam failure detection (BFD) to the network device.
41. The method according to supplement 40, wherein,
   the measurement relaxation status information of the serving cell configured with two or more beam failure detection reference signal (BFD-RS) sets and the measurement relaxation status information of the serving cell not configured with two or more beam failure detection reference signal (BFD-RS) sets are received together or separately by the network device.
42. The method according to supplement 40 or 41, wherein,
   the measurement relaxation status includes:
   a measurement relaxation status of one beam failure detection reference signal (BFD-RS) set.
43. The method according to supplement 42, wherein,
   the one beam failure detection reference signal (BFD-RS) set is configured by the network device; or
   the one beam failure detection reference signal (BFD-RS) set refers to a first beam failure detection reference signal (BFD-RS) set; or
   the one beam failure detection reference signal (BFD-RS) set is a beam failure detection reference signal (BFD-RS) set corresponding to a transmission reception point (TRP) that is performing non-terminal equipment-specific or terminal equipment-specific transmission.
44. The method according to supplement 40 or 41, wherein,
   the measurement relaxation status includes:
   whether measurement relaxation statuses of two or more beam failure detection reference signal (BFD-RS) sets are consistent.
45. The method according to supplement 44, wherein,
   a first value (0) is indicated if the measurement relaxation statuses of two or more beam failure detection reference signal (BFD-RS) sets are inconsistent; or,
   a second value (1) is indicated if the measurement relaxation statuses of two or more beam failure detection reference signal (BFD-RS) sets are consistent.
46. The method according to supplement 40 or 41, wherein,
   the measurement relaxation status includes:
   measurement relaxation statuses of two or more beam failure detection reference signal (BFD-RS) sets.
47. The method according to supplement 46, wherein,
   the second value (1) is indicated if the two or more beam failure detection reference signal (BFD-RS) sets are all performing measurement relaxation of beam failure detection (BFD), otherwise, the first value (0) is indicated; or
   the first value (0) is indicated if the two or more beam failure detection reference signal (BFD-RS) sets are all not performing measurement relaxation of beam failure detection (BFD), otherwise, the second value (1) is indicated.
48. The method according to supplement 40 or 41, wherein,
   the measurement relaxation status information includes first information bits of a number identical to the number of the two or more beam failure detection reference signal (BFD-RS) sets, each of the first information bits indicating whether a corresponding beam failure detection reference signal (BFD-RS) set performs measurement relaxation of beam failure detection (BFD).

## Claims

1. An apparatus for measurement relaxation, applicable to a terminal equipment, the apparatus comprising a first applying unit, the first applying unit being configured to:
for a serving cell configured with two or more beam failure detection reference signal (BFD-RS) sets, cause the terminal equipment not to perform measurement relaxation of beam failure detection (BFD); or
for a serving cell that is not configured with two or more beam failure detection reference signal (BFD-RS) sets, cause the terminal equipment to perform measurement relaxation of beam failure detection (BFD).

2. The apparatus according to claim 1, wherein the terminal equipment not to perform measurement relaxation of beam failure detection (BFD) comprises:
the measurement relaxation of the beam failure detection (BFD) is disabled.

3. The apparatus according to claim 1, wherein the terminal equipment to perform measurement relaxation of beam failure detection (BFD) comprises:
that the measurement relaxation of beam failure detection (BFD) is enabled.

4. The apparatus according to claim 2, wherein,
modifying a presence condition and/or field description of a first parameter related to a low mobility criterion and/or a second parameter related to a good cell quality criterion.

5. The apparatus according to claim 4, wherein the not to perform measurement relaxation of beam failure detection (BFD) comprises:
not evaluating whether a measurement relaxation criterion for beam failure detection (BFD) on the serving cell is satisfied.

6. The apparatus according to claim 1, wherein,
for the serving cell not configured with two or more beam failure detection reference signal (BFD-RS) sets,
when a low mobility criterion for beam failure detection (BFD) is satisfied,
the terminal equipment is allowed to perform the measurement relaxation of the beam failure detection (BFD).

7. An apparatus for measurement relaxation, applicable to a terminal equipment, the apparatus comprising a second applying unit, the second applying unit being configured to:
for a serving cell configured with two or more beam failure detection reference signal (BFD-RS) sets, cause the terminal equipment to perform measurement relaxation of beam failure detection (BFD).

8. The apparatus according to claim 7, wherein,
for the serving cell configured with two or more beam failure detection reference signal (BFD-RS) sets, the second applying unit causes the terminal equipment not to transmit measurement relaxation state information of the beam failure detection (BFD) to a network device.

9. The apparatus according to claim 7, wherein,
for a serving cell not configured with two or more beam failure detection reference signal (BFD-RS) sets, the second applying unit causes the terminal equipment to transmit measurement relaxation state information of the beam failure detection (BFD) to the network device.

10. The apparatus according to claim 8, wherein the not to transmit measurement relaxation state information of the beam failure detection (BFD) to a network device comprises that:
the terminal equipment is not configured to transmit the measurement relaxation state information of the beam failure detection (BFD) to the network device.

11. The apparatus according to claim 9, wherein the to transmit measurement relaxation state information of the beam failure detection (BFD) to the network device comprises that:
the terminal equipment is configured to transmit the measurement relaxation state information of the beam failure detection (BFD) to the network device.

12. The apparatus according to claim 10, wherein,
presence condition or field description of a third parameter related to beam failure detection relaxation reporting configuration (bfd-RelaxationReportingConfig) is changed.

13. The apparatus according to claim 8, wherein the not to transmit measurement relaxation state information of the beam failure detection (BFD) to a network device comprises:
deeming by the terminal equipment that the terminal equipment is not configured to transmit the measurement relaxation state information of the beam failure detection (BFD) to the network device.

14. The apparatus according to claim 8, wherein,
if the terminal equipment is configured to transmit the measurement relaxation state information of the beam failure detection (BFD) to the network device,
and if the serving cell is not configured with two or more beam failure detection reference signal (BFD-RS) sets,
when a measurement relaxation state of beam failure detection (BFD) of the terminal equipment on the serving cell is changed and a minimum requirement of the terminal equipment is satisfied,
the second applying unit causes the terminal equipment to transmit the measurement relaxation state information to the network device.

15. The apparatus according to claim 8, wherein,
the not to transmit measurement relaxation state information of the beam failure detection (BFD) to a network device comprises at least one of the following:
not triggering report of the measurement relaxation state information via a UE assistance information process;
not comprising the measurement relaxation state information in UE assistance information in a triggered UE assistance information process; or
setting a value of a bit corresponding to the serving cell in the UE assistance information to be a first value in a triggered UE assistance information process.

16. The apparatus according to claim 7, wherein,
for the serving cell configured with two or more beam failure detection reference signal (BFD-RS) sets, the second applying unit causes the terminal equipment to transmit measurement relaxation state information of the beam failure detection (BFD) to the network device.

17. The apparatus according to claim 16, wherein,
a measurement relaxation state comprises:
a measurement relaxation state of one beam failure detection reference signal (BFD-RS) set.

18. The apparatus according to claim 16, wherein,
a measurement relaxation state comprises:
measurement relaxation state of two or more beam failure detection reference signal (BFD-RS) sets.

19. An apparatus for measurement relaxation, applicable to a terminal equipment, the apparatus comprising a third applying unit, the third applying unit being configured to:
when a serving cell not configured with two or more beam failure detection reference signal (BFD-RS) sets is performing measurement relaxation of beam failure detection (BFD), cause the terminal equipment to set a value of a measurement relaxation state of beam failure detection (BFD) to which the serving cell corresponds to be a second value; or
when a serving cell is configured with two or more beam failure detection reference signal (BFD-RS) sets, cause the terminal equipment to set a value of a measurement relaxation state of beam failure detection (BFD) to which the serving cell corresponds to be a first value.

20. The apparatus according to claim 19, wherein,
when a serving cell not configured with two or more beam failure detection reference signal (BFD-RS) sets is performing measurement relaxation of beam failure detection (BFD), the third applying unit causes the terminal equipment to set a value of a measurement relaxation state of beam failure detection (BFD) to which the serving cell corresponds to be the second value,
and in another case, the third applying unit causes the terminal equipment to set a value of a measurement relaxation state of beam failure detection (BFD) to which the serving cell corresponds to be the first value.
